# EUROPÄISCHE PATENTSCHRIFT

(11) **EP 4 055 472 B1**
(45) Veröffentlichungstag und Bekanntmachung des Hinweises auf die Patenterteilung: **19.04.2023**
(21) Anmeldenummer: 20824223.0
(22) Anmeldetag: 11.12.2020
(51) Int. Cl.: G06F 8/656, G06F 8/65, G06F 8/41

(54) **VERFAHREN ZUR DATENMIGRATION EINES ZEIGERELEMENTS IM ZUGE EINER DATENMIGRATION EINES PROGRAMMZUSTANDS EINES STEUERPROGRAMMS EINES AUTOMATISIERUNGSSYSTEMS**
METHOD FOR DATA MIGRATION FOR A POINTER ELEMENT IN THE COURSE OF A DATA MIGRATION FOR A PROGRAM STATE OF A CONTROL PROGRAM OF AN AUTOMATION SYSTEM
PROCÉDÉ DE MIGRATION DE DONNÉES POUR UN ÉLÉMENT DE POINTAGE AU COURS D'UNE MIGRATION DE DONNÉES POUR UN ÉTAT DE PROGRAMME D'UN PROGRAMME DE COMMANDE D'UN SYSTÈME D'AUTOMATISATION

(30) Priorität: 13.12.2019 DE 102019134353
(43) Veröffentlichungstag der Anmeldung: 14.09.2022
(73) Patentinhaber: Beckhoff Automation GmbH, 33415 Verl (DE)
(72) Erfinder: DREESEN, Ralf, 33334 Gütersloh (DE)
(74) Vertreter: Patentanwaltskanzlei WILHELM & BECK
(86) Internationale Anmeldenummer: PCT/EP2020/085797
(87) Internationale Veröffentlichungsnummer: WO 2021/116428

(56) Entgegenhaltungen:
- EP-A1- 0 764 899
- DE-A1- 19 810 802
- GUPTA D ET AL: "ON.LINE SOFTWARE VERSION CHANGE USING STATE TRANSFER BETWEEN PROCESSES", SOFTWARE-PRACTICE AND EXPERIENCE, WILEY & SONS, BOGNOR REGIS, GB, Bd. 23, Nr. 9, 1. September 1993 (1993-09-01), Seiten 949-964, XP000655865, ISSN: 0038-0644, DOI: 10.1002/SPE.4380230903

## Beschreibung

Die Erfindung betrifft ein Verfahren zur Datenmigration eines Zeigerelements, die im Zuge einer Datenmigration eines Programmzustands eines Steuerprogramms eines Automatisierungssystems durchgeführt wird.

In der Automatisierungstechnik werden Teilnehmer eines Automatisierungssystems für gewöhnlich durch eine Steuerung des Automatisierungssystems mittels zyklischen Ausführens eines entsprechenden Steuerprogramms angesteuert. Für jeden Zyklus, in dem die jeweiligen Teilnehmer den jeweiligen Steueranweisungen des Steuerprogramms entsprechend gesteuert werden, werden von der Steuerung Informationen ausgenommen und gespeichert, die den Zustand des Automatisierungssystems und des Steuerprogramms beschreiben. Ein sogenannter globaler Zustand umfasst die vollständige Information, die notwendig ist, den Zustand des Automatisierungssystems und des Steuerprogramms wiederzugeben. Ein globaler Zustand kann beispielsweise die im Steuerprogramm verwendeten Variablen, Funktionen, Datenbanken oder sonstige Objekte umfassen. Ferner kann der globale Zustand Informationen bezüglich der Teilnehmer des Automatisierungssystems oder bezüglich im Automatisierungssystem ablaufender Prozesse umfassen.

Ein derartiger globaler Zustand kann nach Abschluss jedes Steuerzyklus neu erstellt werden, sodass jederzeit der aktuelle Zustand des Automatisierungssystems und des Steuerprogramms wiedergegeben werden kann.

Bei erneutem Ausführen des Steuerprogramms in einem folgenden Steuerzyklus kann das Steuerprogramm auf die im globalen Zustand gespeicherten Daten zurückgreifen und somit die Steuerung des Automatisierungssystems in dem folgenden Zyklus auf Basis des Zustands des Automatisierungssystems des vorherigen Steuerzyklus fortsetzen.

Im laufenden Betrieb eines Automatisierungssystems ergeben sich häufig Situationen, in denen verschiedene Parameter nachgeregelt oder Abläufe verändert oder angepasst werden müssen, um einen optimalen beziehungsweise optimierten Ablauf des Automatisierungssystems erreichen oder gewährleisten zu können. In diesem Zusammenhang besteht im laufenden Betrieb häufig die Notwendigkeit ein derzeit ausgeführtes Steuerprogramm durch eine aktuellere Version zu ersetzen, in der die notwendigen Anpassungen berücksichtigt sind. Um nach dem Ersetzen einen Neustart des Automatisierungssystems vermeiden zu können und stattdessen das Automatisierungssystems in dem derzeitigen Zustand weiter betreiben zu können, muss die aktuelle Version des Steuerprogramms auf die Information des globalen Zustands zugreifen können. Nur so kann gewährleistet werden, dass mit dem Ausführen der aktuellen Version des Steuerprogramms das Automatisierungssystem an den Zustand des Automatisierungssystems im zuletzt ausgeführten Steuerzyklus anknüpfend weitergesteuert werden und ein kompletter Neustart des Automatisierungssystems vermieden werden kann. Hierzu muss eine Datenmigration des globalen Zustands des derzeitig ausgeführten Programms auf den globalen Zustand der aktuellen Version des Steuerprogramms durchgeführt werden, bei der Werte einzelner Objekte des globalen Zustands des derzeitig ausgeführten Steuerprogramms auf entsprechende Objekte des globalen Zustands der aktuellen Version des Steuerprogramms abgebildet werden. So kann die Information des globalen Zustands des derzeitig ausgeführten Steuerprogramms auf den globalen Zustand der aktuellen Version des Steuerprogramms übertragen werden.

Problematisch ist nun, wenn Änderungen in der aktuellen Version des Steuerprogramms die im globalen Zustand gespeicherten Informationen betreffen. Beispielsweise können in der aktuellen Version Variablen umbenannt oder Datentypen von Objekten des Steuerprogramms geändert sein. Besonders problematisch ist es, wenn die Änderungen Zeigerelemente beziehungsweise Zeigervariablen betreffen, die für den Ablauf des Steuerprogramms und die Steuerung des Automatisierungssystems relevante Objekte des Steuerprogramms referenzieren. Derartige Zeigerelemente betreffende Änderungen oder Modifikationen können nun verhindern, dass die aktuelle Version des Steuerprogramms direkt auf die Information des globalen Zustands zugreifen kann, indem nach der Modifikation die Zeigerelemente nicht mehr in der Lage sind, die korrekten Objekte zu referenzieren.

Es besteht daher die Notwendigkeit, die Information des globalen Zustands inklusive der vom globalen Zustand umfassten Zeigerelemente an die aktuelle Version des Steuerprogramms, und den darin vorgenommenen Änderungen so anzupassen, dass bei erfolgreicher Anpassung das aktuelle Steuerprogramm auf die Information des globalen Zustands zugreifen und das Automatisierungssystem in dessen aktuellem Zustand ansteuern kann.

Aus der Druckschrift DE 198 10 802 A1 ist ein Verfahren zu einem störungsfreien Aktualisieren von Daten bekannt. Aus der Druckschrift EP 0 764 899 A1 ist ein Verfahren zum Konvertieren sich unterscheidender Datenformate bekannt.

Es ist daher eine Aufgabe der Erfindung, ein verbessertes Verfahren zur Datenmigration eines Zeigerelements im Zuge einer Datenmigration eines Programmzustands eines Steuerprogramms eines Automatisierungssystems bereitzustellen.

Die Aufgabe wird durch ein Verfahren gemäß dem unabhängigen Anspruch gelöst. Bevorzugte Ausführungsformen sind in den abhängigen Ansprüchen angegeben.

Nach einem Aspekt der Erfindung wird ein Verfahren zur Datenmigration eines Zeigerelements im Zuge einer Datenmigration eines Programmzustands eines Steuerprogramms eines Automatisierungssystems bereitgestellt, wobei eine Steuerung des Automatisierungssystems ein erstes Steuerprogramm und ein zweites Steuerprogramm umfasst, wobei das erste Steuerprogramm ein erstes Datenelement umfasst, das einen Programmzustand des ersten Steuerprogramms beschreibt und wenigstens ein erstes Zeigerelement von einem ersten Zeigertyp umfasst, das ein erstes Zeigerobjekt referenziert, und wobei das zweite Steuerprogramm ein zweites Datenelement umfasst, das einen Programmzustand des zweiten Steuerprogramms beschreibt und wenigstens ein zweites Zeigerelement von einem zweiten Zeigertyp umfasst, das eingerichtet ist, ein zweites Zeigerobjekt zu referenzieren, und wobei das erste Datenelement in einem ersten Speicherbereich und das zweite Datenelement in einem zweiten Speicherbereich der Steuerung gespeichert sind, wobei das Verfahren umfasst: Identifizieren des ersten Zeigerelements und des zweiten Zeigerelements als über eine erste Relation zueinander assoziierte Zeigerelemente in einem ersten Zeigeridentifikationsschritt, wobei die erste Relation impliziert, dass das erste Zeigerelement und das zweite Zeigerelement im ersten Steuerprogramm und im zweiten Steuerprogramm jeweils identische Funktionen aufweisen,

Abbilden des ersten Zeigerelements auf das zweite Zeigerelement in einem Zeigermigrationsschritt, wobei der Zeigermigrationsschritt umfasst:
Identifizieren des vom ersten Zeigerelement referenzierten ersten Zeigerobjekts in einem ersten Objektidentifikationsschritt,
Identifizieren eines mit dem ersten Zeigerobjekt assoziierten Objekts als das zweite Zeigerobjekt in einem zweiten Objektidentifikationsschritt,
Ermitteln einer absoluten Speicheradresse des zweiten Zeigerobjekts in einem ersten Adressenermittlungsschritt, und
Schreiben der ermittelten absoluten Speicheradresse des zweiten Zeigerobjekts als Wert des zweiten Zeigerelements in das zweite Zeigerelement in einem ersten Zeigerspeicherschritt.

Hierdurch wird der technische Vorteil erreicht, dass ein effektives Verfahren zur Datenmigration eines Zeigerelements im Zuge einer Datenmigration eines Programmzustands eines Steuerprogramms eines Automatisierungssystems bereitgestellt werden kann. Durch das erfindungsgemäße Verfahren kann erreicht werden, dass ein Zeigerelement, das Bestandteil eines globalen Zustands eines Steuerprogramms ist, derart auf ein assoziiertes Zeigerelement, das wiederum Bestandteil eines globalen Zustands eines weiteren Steuerprogramms ist, abgebildet werden kann, dass gewährleistet ist, dass nach Abbildung des Zeigerelements durch das abgebildete Zeigerelement das entsprechende Zeigerobjekt referenziert wird.

Das erfindungsgemäße Verfahren bezieht sich auf ein Automatisierungssystem, das über eine Steuerung auf Basis eines ersten Steuerprogramms gesteuert wird. Das erste Steuerprogramm umfasst ein erstes Datenelement, in dem sämtliche Information, die zum Ausführen des ersten Steuerprogramms und zum Steuern des Automatisierungssystems benötigt wird, gespeichert ist. Die Information des ersten Datenelements beschreibt somit den globalen Zustand beziehungsweise Programmzustand des ersten Steuerprogramms, wobei der globale Zustand wiederum Informationen über den Zustand des durch das erste Steuerprogramm angesteuerten Automatisierungssystems umfasst.

Vom ersten Datenelement ist wenigstens ein Zeigerelement umfasst, das ein Zeigerobjekt referenziert. Ein Zeigerelement ist im Folgenden eine Zeigervariable, die ein Zeigerobjekt referenziert. Ein Zeigerobjekt kann hierbei ein Datenobjekt des ersten Steuerprogramms sein. Alternativ kann das Zeigerobjekt ein Datenobjekt sein, das nicht ein Objekt des ersten Steuerprogramms ist.

Darüber hinaus umfasst die Steuerung des Automatisierungssystems ein zweites Steuerprogramm, das wiederum ein zweites Datenelement umfasst, in dem Information bezüglich des zweiten Steuerprogramms gespeichert ist. Das zweite Steuerprogramm ist eine aktualisierte Version des ersten Steuerprogramms und als ein möglicher Ersatz des ersten Steuerprogramms zum Steuern des Automatisierungssystems. Vom zweiten Datenelement des zweiten Steuerprogramms ist wiederum ein zweites Zeigerelement umfasst, das eingerichtet ist, ein zweites Zeigerobjekt zu referenzieren. Das zweite Zeigerobjekt kann ein Datenobjekt des zweiten Steuerprogramms sein. Alternativ kann das zweie Zeigerobjekt ein Datenobjekt sein, das nicht ein Objekt des zweiten Steuerprogramms ist.

Das erfindungsgemäße Verfahren ist darauf ausgerichtet, einen Wert des ersten Zeigerelements, in dem eine Speicheradresse des durch das erste Zeigerelement referenzierten ersten Zeigerobjekts gespeichert ist, derart auf das zweite Zeigerelement zu übertragen, dass nach Übertragung das zweite Zeigerobjekt durch das zweite Zeigerelement referenziert, sprich durch das zweite Zeigerelement auf dieses verwiesen wird. Hierbei wird vorausgesetzt, dass das erste Zeigerobjekt und das zweite Zeigerobjekt zueinander über eine Relation assoziiert sind. Das erste Zeigerobjekt und das zweite Zeigerobjekt können über eine Relation, die eine Beziehung zwischen dem ersten Zeigerobjekt und dem zweiten Zeigerobjekt herstellt, aufeinander bezogen werden, wenn das erste Zeigerobjekt im ersten Steuerprogramm und das zweite Zeigerobjekt im zweiten Steuerprogramm eine gleiche Bedeutung beziehungsweise Identität aufweisen.

Das erfindungsgemäße Verfahren bewirkt, dass nach einer erfolgreichen Datenmigration, sprich einer Übertragung der Information des ersten Datenelements auf das zweite Datenelement, eine Referenzierung des zweiten Zeigerobjekts durch das zweite Zeigerelement einer Referenzierung des ersten Zeigerobjekts durch das erste Zeigerelement entspricht.

Hierzu wird im ersten Zeigeridentifikationsschritt eine erste Relation zwischen dem ersten Zeigerelement und dem zweiten Zeigerelement identifiziert. Die erste Relation zwischen dem ersten Zeigerelement und dem zweiten Zeigerelement impliziert, dass das erste Zeigerelement im ersten Steuerprogramm die gleiche Bedeutung, Rolle bzw. Funktion innehat wie das zweite Zeigerelement im zweiten Steuerprogramm. Im einfachsten Fall der ersten Relation beschreiben das erste Zeigerelement im ersten Steuerprogramm und das zweite Zeigerelement im zweiten Steuerprogramm eine identische Zeigervariable vom gleichen Variablentyp und gleicher Bedeutung. Ziel des vorliegenden Verfahrens ist es hierbei, durch eine entsprechende Abbildung des Werts des ersten Zeigerelements auf das zweite Zeigerelement zu gewährleisten, dass nach erfolgreicher Abbildung das zweite Zeigerelement ein Datenobjekt referenziert, das im zweiten Steuerprogramm eine Bedeutung, Rolle oder Funktion innehat, die der Bedeutung, Rolle oder Funktion des ersten Zeigerobjekts im ersten Steuerprogramm entspricht.

Zum Abbilden des ersten Zeigerelements auf das zweite Zeigerelement in einem Zeigermigrationsschritt wird in einem ersten Objektidentifikationsschritt das vom ersten Zeigerelement referenzierte erste Zeigerobjekt identifiziert. In einem zweiten Objektidentifikationsschritt wird ein mit dem ersten Zeigerobjekt assoziiertes Objekt als zweites Zeigerobjekt identifiziert. Das zweite Zeigerobjekt ist ein Datenobjekt, das vom zweiten Zeigerelement referenziert werden kann. Die Assoziation zwischen dem ersten Zeigerobjekt und dem zweiten Zeigerobjekt impliziert, dass das erste Zeigerobjekt im ersten Steuerprogramm und das zweite Zeigerobjekt im zweiten Steuerprogramm eine identische Funktion oder Rolle übernehmen. Die einfachste Assoziation zwischen dem ersten Zeigerobjekt und dem zweiten Zeigerobjekt besteht, wenn das erste Zeigerobjekt im ersten Steuerprogramm und das zweite Zeigerobjekt im zweiten Steuerprogramm identisch sind. In diesem Fall ist somit gewährleistet, dass das erste Zeigerelement und das zweite Zeigerelement nach Migration gemäß dem oben beschriebenen Verfahren in den jeweiligen Steuerprogrammen identische Objekte referenzieren. Allgemein ist ein erstes Zeigerobjekt mit einem zweiten Zeigerobjekt assoziiert, wenn sie in Relation zueinander stehen, also der Informationsgehalt des ersten Zeigerobjektes in das zweite Zeigerobjekt bei einer entsprechenden Datenmigration übertragbar ist.

Nach Identifikation des zweiten Zeigerobjekts als ein zum ersten Zeigerobjekt assoziiertes Datenobjekt wird in einem ersten Adressenermittlungsschritt eine absolute Speicheradresse des zweiten Zeigerobjekts ermittelt.

Anschließend wird die ermittelte absolute Speicheradresse des zweiten Zeigerobjekts in einem ersten Zeigerspeicherschritt im zweiten Zeigerelement gespeichert. Durch die damit abgeschlossene Abbildung des ersten Zeigerelements auf das zweite Zeigerelement ist erreicht, dass das zweite Zeigerelement das mit dem ersten Zeigerobjekt assoziierte Objekt als zweites Zeigerobjekt referenziert. Somit werden durch das erste Zeigerelement im ersten Steuerprogramm und durch das zweite Zeigerelement im zweiten Steuerprogramm zwei assoziierte Datenobjekte referenziert, die jeweils im ersten Steuerprogramm und im zweiten Steuerprogramm identische Bedeutungen, Rollen oder Funktionen ausfüllen, und im einfachsten Fall identische Datenobjekte sind.

Das erste Zeigerelement und das zweite Zeigerelement können über eine erste Relation assoziiert zueinander sein, wenn beispielsweise das erste Zeigerelement und das zweite Zeigerelement im ersten Steuerprogramm und im zweiten Steuerprogramm gleich benannt sind. Alternativ können Zeigerelemente assoziiert zueinander sein, die gleichindizierte Elemente von zwei Variablen eines Feldtyps sind, die ebenfalls in Relation zueinander stehen. Darüber hinaus können Zeigerelemente assoziierte Komponenten von zwei Variablen eines Verbundtyps sein. Die erste Relation zwischen dem ersten Zeigerelement und dem zweiten Zeigerelement kann darüber hinaus über eine explizite Definition der Relation im zweiten Steuerprogramm erreicht werden. Alternativ kann die Relation als zum Steuerprogramm zusätzliche Information ausgebildet sein und auf die Anwendung eines Refactoring Werkzeugs in einer Programmierumgebung zurückzuführe zu sein. Sind beide Zeigerelemente nicht identisch benannt, so kann über eine explizite Anweisung im zweiten Steuerprogramm, die eine Relation zwischen dem ersten Zeigerelement und dem zweiten Zeigerelement beschreibt, eine entsprechende Relation erreicht werden. Darüber hinaus kann eine erste Relation zwischen dem ersten Zeigerelement und dem zweiten Zeigerelement generiert werden, falls bei unterschiedlicher Bezeichnung der beiden Zeigerelemente für die Umbenennung des zweiten Zeigerelements im zweiten Steuerprogramm ein Refactoring Werkzeug verwendet wurde.

Das erste Zeigerobjekt kann im ersten Datenelement und das zweite Zeigerobjekt kann im zweiten Datenelement angeordnet sein. Alternativ können das erste Zeigerobjekt und/oder das zweite Zeigerobjekt jeweils außerhalb des ersten Datenelements, bzw. des zweiten Datenelements, jedoch im Speicher der Steuerung angeordnet sein.

Das erste Datenelement kann als eine komplexe Datenstruktur aufgebaut sein und eine Mehrzahl von Datenobjekten umfassen, die den Programmzustand des ersten Steuerprogramms beziehungsweise den globalen Zustand des ersten Steuerprogramms und des Automatisierungssystems beschreiben. Vorzugsweise kann das erste Datenelement den Datentyp eines Verbundtyps aufweisen und eine Mehrzahl von ersten Datenunterelementen umfassen. Die Mehrzahl von Datenunterelementen, die jeweils Objekte des ersten Steuerprogramms sind, können ebenfalls von einem Verbundtyp sein und wiederum eine Mehrzahl von Komponenten aufweisen. Die Komponenten können wiederum verschiedenen Datentypen, beispielsweise Verbundtypen, Feldtypen, Skalartypen oder ähnliches aufweisen. Für eine Schachtelung von Datenunterelementen von einem Verbundtyp, deren Komponenten wiederum Objekte eines Verbundtyps sind und ebenfalls Komponenten aufweisen, die wiederum von einem Verbundtyp sind, sind durch das erfindungsgemäße Verfahren keine Grenzen gesetzt. Alternativ können die ersten Datenunterelemente von einem Feldtyp sein und jeweils eine Mehrzahl von Elementen aufweisen, die wiederum verschiedene Datentypen aufweisen können. Alternativ können die ersten Unterelemente auch Skalartypen sein.

Programmzustand und globaler Zustand werden im Folgenden synonym verwendet.

Analog kann das zweite Datenelement als eine komplexe Datenstruktur aufgebaut sein und eine Mehrzahl von Objekten umfassen, die den globalen Zustand des zweiten Steuerprogramms beschreiben. Vorzugsweise kann das zweite Datenelement von einem Verbundtyp sein und eine Mehrzahl von zweiten Datenunterelementen umfassen, die wiederum Objekte des zweiten Steuerprogramms sind und ebenfalls von einem Verbundtyp sein können und wiederum eine Mehrzahl von Komponenten aufweisen können. Die Komponenten können wiederum verschiedene Datentypen, beispielsweise Verbundtypen, Feldtypen, Skalartypen, Zeigertypen oder ähnliches aufweisen. Alternativ können die zweiten Datenunterelemente von einem Feldtyp sein und jeweils eine Mehrzahl von Elementen aufweisen, die wiederum verschiedene Datentypen aufweisen können. Alternativ können die zweiten Datenunterelemente auch Skalartypen sein. Für eine Schachtelung von Datenunterelementen von einem Verbundtyp, deren Komponenten wiederum Objekte eines Verbundtyps sind und ebenfalls Komponenten aufweisen, die wiederum von einem Verbundtyp sind, sind durch das erfindungsgemäße Verfahren keine Grenzen gesetzt.

Das erste Zeigerobjekt und das zweite Zeigerobjekt, sprich die vom ersten Zeigerelement und vom zweiten Zeigerelement referenzierten Datenobjekte, können von einem der oben genannten Datentypen der Datenunterelemente sein. Zudem können das erste Zeigerobjekt und das zweite Zeigerobjekt eine Komponente eines Verbundtyps oder ein Element eines Feldtyps sein. In dem Fall wird durch das jeweilige Zeigerelement die entsprechende Komponente oder das entsprechende Element referenziert.

Das erste Datenelement und das zweite Datenelement sind als zusammenhängende Objekte ausgebildet und in verschiedenen Speicherbereichen des Speichers der Steuerung gespeichert. Innerhalb des Speichers nehmen das erste Datenelement und das zweite Datenelement jeweils einen zusammenhängenden Speicherbereich ein. Innerhalb des Speicherbereichs des ersten Datenelements und des Speicherbereichs des zweiten Datenelements bestehen keine ungenutzten Lücken und die jeweiligen Objekte des ersten Datenelements und des zweiten Datenelements sind dicht aneinander anschließend in den jeweiligen Speicherbereichen gespeichert. Hiervon sind keine nur technisch bedingten Lücken (Padding) betroffen, die zum Beispiel durch Ausrichtung von Daten (Alignment) entstehen und durch den Prozessor motiviert sind. Beim sogenannten "natural Alignment" kann ein N Byte-Datum nur von einer Speicherstelle geladen werden, die restlos durch N teilbar ist, wobei N eine Zweierpotenz ist. Abgesehen vom Alignment sind die Daten so dicht wie möglich angeordnet.

Objekte sind im Folgenden Datenobjekte eines Steuerprogramms und können ebenfalls eine komplexe Datenstruktur aufweisen und einen komplexen Informationsgehalt umfassen. Zudem können die Objekte beispielsweise von einem beliebigen Datentyp sein, der wiederum Unterobjekte beliebigen Datentyps (z.B. als Komponenten oder Elemente) enthalten kann und beliebig geschachtelt ist. Der globale Zustand ist durch die vom ersten Datenelement umfassten Objekte gebildet und umfasst sämtliche Information, die für die Steuerung des Automatisierungssystems benötigt wird.

Eine Datenmigration ist im Folgenden eine Übertragung von Daten aus einem ersten Speicherbereich in einen zweiten Speicherbereich. Bei einer Datenmigration des Programmzustands des ersten Steuerprogramms auf den Programmzustand des zweiten Steuerprogramms werden Werte der Objekte des ersten Datenelements ausgelesen und auf entsprechende Objekte des zweiten Datenelements übertragen. So kann der durch das erste Datenelement beschriebene globale Zustand des ersten Steuerprogramms auf das zweite Datenelement übertragen werden. Das zweite Steuerprogramm, das eine aktualisierte Version des ersten Steuerprogramms ist, kann somit nach erfolgreicher Datenmigration auf den globalen Zustand des ersten Steuerprogramms zugreifen, da nach erfolgreicher Datenmigration der globale Zustand des zweiten Steuerprogramms dem globalen Zustand des ersten Steuerprogramms entspricht beziehungsweise wenigstens Teilweise entspricht beziehungsweise die Information des globalen Zustands des ersten Steuerprogramms wenigstens teilweise umfasst. Hierdurch kann das Automatisierungssystem auf Basis des zweiten Steuerprogramms unter Berücksichtigung des globalen Zustands des ersten Steuerprogramms gesteuert werden. Eine Datenmigration des globalen Zustands des ersten Steuerprogramms umfasst eine Übertragung der im ersten Datenelement enthaltenen Zeigerelemente auf entsprechende Zeigerelemente im zweiten Datenelement.

Eine absolute Speicheradresse eines Objekts ist im Folgenden eine Speicheradresse im Speicher, an der das jeweilige Objekt gespeichert ist, und mittels der das jeweilige Objekt referenzierbar ist. Absolute Speicheradresse und Speicheradresse werden im Folgenden synonym verwendet.

Nach einer Ausführungsform umfasst das erste Datenelement wenigstens ein erstes Datenunterelement umfasst, wobei das zweite Datenelement wenigstens ein zweites Datenunterelement umfasst, das mit dem ersten Datenunterelement über eine zweite Relation assoziiert ist, wobei das erste Datenunterelement dem ersten Zeigerobjekt entspricht und vom ersten Zeigerelement referenziert wird, wobei das zweite Datenunterelement dem zweiten Zeigerobjekt entspricht, und wobei der Zeigermigrationsschritt umfasst:
Ermitteln einer ersten relativen Speicheradresse des ersten Datenunterelements in einem ersten Zeigeradressenermittlungsschritt, wobei durch die erste relative Speicheradresse eine Speicheradresse des ersten Datenunterelements innerhalb des Speicherbereichs des ersten Datenelements relativ zu einem ersten Speicherplatz des ersten Datenelements beschrieben ist,
Ermitteln einer zweiten relativen Speicheradresse des zweiten Datenunterelements in einem zweiten Zeigeradressenermittlungsschritt, wobei durch die zweite relative Speicheradresse eine Speicheradresse des zweiten Datenunterelements innerhalb eines Speicherbereichs des zweiten Datenelements relativ zu einem ersten Speicherplatz des zweiten Datenelements beschrieben ist, und
Ermitteln einer zweiten absoluten Speicheradresse des zweiten Datenunterelements auf Basis der zweiten relativen Speicheradresse des zweiten Datenunterelements und des ersten Speicherplatzes des zweiten Datenelements in dem ersten Adressenermittlungsschritt.

Hierdurch wird der technische Vorteil erreicht, dass ein effektives Verfahren zur Datenmigration eines Zeigerelements bereitgestellt werden kann, wobei das Zeigerelement ein Zeigerobjekt innerhalb eines globalen Zustands eines Steuerprogramms referenziert. Das Verfahren in der genannten Ausführungsform betrifft den Fall, dass das erste Datenelement und das zweite Datenelement jeweils vom Datentyp eines Verbundtyps sind und jeweils eine Mehrzahl von Objekten umfassen. Die Objekte des ersten Datenelements werden als erste Datenunterelemente und die Objekte des zweiten Datenelements als zweite Datenunterelemente definiert. Die ersten Datenunterelemente und die zweiten Datenunterelemente sind jeweils Datenobjekte des ersten Steuerprogramms und des zweiten Steuerprogramms und können jeweils vom Datentyp eines Verbundtyps, eines Feldtyps, eines Skalartyps oder eines Zeigertyps sein.

Das erste Datenelement umfasst wenigstens ein erstes Datenunterelement und das zweite Datenelement umfasst wenigstens ein zweites Datenunterelement. Das erste Datenunterelement und das zweite Datenunterelement sind über eine zweite Relation miteinander assoziiert. Sie können assoziiert sein, wenn die ersten und zweiten Datenunterelemente identisch benannt sind oder eine entsprechende Relation im zweiten Steuerprogramm explizit definiert ist. Alternativ kann eine zweite Relation in einer dem zweiten Steuerprogramm zugeordneten Definition durch die Verwendung eines Refactoring-Werkzeugs definiert sein.

Ferner stimmt das erste Zeigerobjekt mit dem ersten Datenunterelement des ersten Datenelements überein, sodass das erste Zeigerelement das erste Datenunterelement des ersten Datenelements referenziert. Analog entspricht das zweite Datenunterelement dem zweiten Zeigerobjekt, sodass das zweite Zeigerelement ein Zeiger auf das zweite Datenunterelement ist. Das Verfahren in der genannten Ausführungsform bewirkt, dass das zweite Zeigerelement mit der Speicheradresse des zweiten Datenunterelements versehen wird, sodass das zweite Zeigerelement das zweite Datenunterelement als zweites Zeigerobjekt referenziert. Da das erste Datenunterelement und das zweite Datenunterelement zueinander assoziiert sind, werden nach erfolgreicher Übertragung durch das erste Zeigerelement und das zweite Zeigerelement einander entsprechende Datenobjekte des ersten Steuerprogramms und des zweiten Steuerprogramms referenziert.

Zum Zeitpunkt vor der Durchführung des erfindungsgemäßen Verfahrens sind die absoluten Speicheradressen der Objekte des zweiten Datenelements unbekannt. Alternativ können die absoluten Speicheradressen der Objekte des zweiten Datenelements hergeleitet werden. Das zweite Datenelement ist als komplexe Datenstruktur, die eine Mehrzahl von Datenunterelementen bzw. eine Mehrzahl von Datenobjekten umfasst, in einem zweiten Speicherbereich der Steuerung des Automatisierungssystems gespeichert. Das zweite Datenelement ist als eine komplexe Datenstruktur, insbesondere als ein Verbundtyp, in Gestalt eines zusammenhängenden Objekts im zweiten Speicherbereich gespeichert, sodass der vom zweiten Datenelement belegte Speicherbereich als ein zusammenhängender Speicherbereich ohne nicht belegte Lücken gestaltet ist. Insbesondere kann das zweite Datenelement ein komplexes/strukturiertes Datum vom Typ eines Verbundtyps, mit aufeinanderfolgenden Komponenten im Speicher (und ggf. Lücken durch Speicherausrichtung) sein.

Die absoluten Speicheradressen der einzelnen Objekte des zweiten Datenelements sind zum Zeitpunkt des Speicherns im zweiten Speicherbereich des zweiten Datenelements unbekannt, beziehungsweise die absoluten Speicheradressen sind zum Zeitpunkt der Erzeugung des Migrationscodes unbekannt. Die absoluten Adressen sind erst bekannt, nachdem, beispielsweise von der Speicherverwaltung eines Prozessors der Steuereinheit oder einer eine Laufzeit der Ausführung eines der Steuerprogramme steuernden Einheit der Steuerung, festgelegt wurde an welcher Stelle des Speichers das zweite Datenelement beginnt. Die relativen Adressen der Unterelemente sind hingegen zur Erzeugungszeit bekannt. Bekannt ist eine Struktur innerhalb des zweiten Datenelements, die beschreibt, wie die einzelnen Objekte des zweiten Datenelements relativ zueinander im zweiten Datenelement angeordnet sind. Darüber hinaus ist ein erster Speicherplatz des zweiten Datenelements bekannt, durch den die erste absolute Speicheradresse des durch das zweite Datenelement belegten Speicherbereichs im zweiten Speicherbereich gekennzeichnet ist.

Der erste Speicherplatz des ersten Datenelements ist der Speicherplatz mit der niedrigsten Speicheradresse innerhalb des Speicherbereichs, der im ersten Speicherbereich durch das erste Datenelement belegt ist. Der erste Speicherplatz des ersten Datenelements begrenzt somit den durch das erste Datenelement im ersten Speicherbereich belegten Speicherbereich.

Analog ist der erste Speicherplatz des zweiten Datenelements der Speicherplatz mit der niedrigsten Speicheradresse innerhalb des Speicherbereichs, der im zweiten Speicherbereich durch das zweite Datenelement belegt ist. Der erste Speicherplatz des zweiten Datenelements begrenzt somit den durch das zweite Datenelement im zweiten Speicherbereich belegten Speicherbereich.

Allgemein ist ein Speicherplatz im Folgenden eine Speicherstelle oder Speichereinheit im Speicher, in der ein Objekt wenigstens teilweise gespeichert werden kann. Jeder Speicherplatz ist mit einer Speicheradresse versehen, die im erfindungsgemäßen Verfahren jedoch gegebenenfalls unbekannt sein kann.

Da die absolute Speicheradresse des zweiten Datenunterelements als vom zweiten Zeigerelement referenzierten zweiten Zeigerobjekts unbekannt ist, bewirkt das erfindungsgemäße Verfahren in der vorliegenden Ausführungsform eine Bestimmung der absoluten Speicheradresse des zweiten Datenunterelements über eine Bestimmung einer relativen Speicheradresse des zweiten Datenunterelements innerhalb des zweiten Datenelements. Nach Ermittlung der relativen Speicheradresse des zweiten Datenunterelements innerhalb des zweiten Datenelements kann über die bekannte absolute Speicheradresse des ersten Speicherplatzes des zweiten Datenelements eine absolute Speicheradresse des zweiten Datenunterelements bestimmt werden.

Hierzu wird in einem ersten Zeigeradressenermittlungsschritt auf Grundlage eines Wertes des ersten Zeigerelementes und einer absoluten Speicheradresse des ersten Datenelements eine erste relative Speicheradresse des ersten Datenunterelements im ersten Datenelement ermittelt. Die erste relative Speicheradresse des ersten Datenunterelements beschreibt hierbei eine Speicheradresse innerhalb des Speicherbereichs des ersten Datenelements relativ zum ersten Speicherplatz des ersten Datenelements. Die erste relative Speicheradresse beschreibt damit die Speicheradresse innerhalb des Speicherbereichs des ersten Datenelements relativ zum ersten Speicherplatz des ersten Datenelements, die das erste Datenunterelement im ersten Datenelement einnimmt, und die vom ersten Zeigerelement referenziert wird.

Darauf folgend wird in einem zweiten Zeigeradressenermittlungsschritt eine zweite relative Speicheradresse des zweiten Datenunterelements ermittelt. Analog entspricht die zweite relative Speicheradresse einer Speicheradresse des zweiten Datenunterelements innerhalb des Speicherbereichs des zweiten Datenelements relativ zu einem ersten Speicherplatz des zweiten Datenelements.

Hierzu wird die zweite Relation zwischen dem ersten Datenunterelement und dem zweiten Datenunterelement berücksichtigt, um das Objekt des zweiten Datenelements zu identifizieren, das nach der Datenmigration vom zweiten Zeigerelement referenziert werden soll.

Auf Basis der ermittelten zweiten relativen Speicheradresse des zweiten Datenunterelements und des ersten Speicherplatzes des zweiten Datenelements wird in einem ersten Adressenermittlungsschritt eine absolute Speicheradresse des zweiten Datenunterelements bestimmt.

Über die Assoziation gemäß der zweiten Relation zwischen dem ersten Datenunterelement und dem zweiten Datenunterelement kann mit dem zweiten Datenunterelement das Objekt des zweiten Datenelements identifiziert werden, das nach Datenmigration vom zweiten Zeigerelement referenziert werden soll. Durch die Kenntnis der internen Strukturen des ersten Datenelements und des zweiten Datenelements kann über eine ermittelte relative Speicheradresse des ersten Datenunterelements eine zweite relative Speicheradresse des zweiten Datenunterelements im Speicherbereich des zweiten Datenelements bestimmt werden. Unter Berücksichtigung der zweiten relativen Speicheradresse des zweiten Datenunterelements und der bekannten absoluten Speicheradresse des ersten Speicherplatzes des zweiten Datenelements kann eine absolute Speicheradresse des zweiten Datenunterelements bestimmt werden. Diese ist der Wert für das zweite Zeigerelement und ermöglicht dem zweiten Zeigerelement eine korrekte Referenzierung des zweiten Datenunterelements als zweites Zeigerobjekt.

Nach einer Ausführungsform umfasst der Zeigermigrationsschritt:
Ermitteln einer ersten relativen Zeigeradresse des ersten Zeigerelements in einem dritten Zeigeradressenermittlungsschritt, wobei durch die erste relative Zeigeradresse des ersten Zeigerelements ein vom ersten Zeigerelement referenzierter Speicherplatz innerhalb des Speicherbereichs des ersten Datenelements relativ zu der ersten relativen Speicheradresse des ersten Datenunterelements beschrieben ist,
Ermitteln auf Basis der ersten relativen Zeigeradresse einer zweiten relativen Zeigeradresse des zweiten Zeigerelements in einem vierten Zeigeradressenermittlungsschritt, wobei durch die zweite relative Zeigeradresse des zweiten Zeigerelements ein Speicherplatz innerhalb des Speicherbereichs des zweiten Datenelements relativ zur zweiten relativen Speicheradresse des zweiten Datenunterelements bestimmt ist, und wobei die zweite relative Zeigeradresse in Relation zum zweiten Datenunterelement der ersten relativen Zeigeradresse in Relation zum ersten Datenunterelement entspricht, und
Ermitteln einer absoluten Speicheradresse des zweiten Datenunterelements auf Basis der zweiten relativen Zeigeradresse, der zweiten relativen Speicheradresse des zweiten Datenunterelements und des ersten Speicherplatzes des zweiten Datenelements im zweiten Speicherbereich im ersten Adressenermittlungsschritt.

Hierdurch wird der technische Vorteil erreicht, dass eine präzise Datenmigration eines Zeigerelements bereitgestellt werden kann, indem eine absolute Speicheradresse eines zu referenzierenden Zeigerobjekts über die Bestimmung einer relativen Speicheradresse eines Datenobjekts innerhalb einer komplexen Datenstruktur erreicht wird. Darüber können durch die Verwendung relativer Adressen Datenunterelemente isoliert betrachtet werden, wodurch wiederum Code wiederverwendet werden kann, womit sich der Code für die Zeigermigration verringert.

Im dritten Zeigeradressenermittlungsschritt wird eine erste relative Zeigeradresse des ersten Zeigerelements ermittelt. Die erste relative Zeigeradresse des ersten Zeigerelements beschreibt einen vom ersten Zeigerelement referenzierten Speicherplatz innerhalb des Speicherbereichs des ersten Datenelements relativ zur ersten Speicheradresse des ersten Datenunterelements. Die Zeigeradresse des ersten Zeigerelements beschreibt eine absolute Speicheradresse im Speicherbereich des ersten Datenelements. Im dritten Zeigeradressenermittlungsschritt wird diese absolute Speicheradresse des ersten Zeigerelements in eine erste relative Zeigeradresse des ersten Zeigerelements umgewandelt, indem die absolute Speicheradresse des ersten Zeigerelements in Relation zu der ersten relativen Speicheradresse des ersten Datenunterelements gesetzt wird.

Auf Basis der ersten relativen Zeigeradresse wird in einem vierten Zeigeradressenermittlungsschritt eine zweite relative Zeigeradresse des zweiten Zeigerelements ermittelt. Die zweite relative Zeigeradresse des zweiten Zeigerelements beschreibt einen Speicherplatz innerhalb des Speicherbereichs des zweiten Datenelements relativ zur zweiten relativen Speicheradresse des zweiten Datenunterelements. Innerhalb des zweiten Datenelements beschreibt die zweite relative Zeigeradresse einen Speicherplatz, der im ersten Datenelement dem durch die erste relative Zeigeradresse beschriebenen Speicherplatz entspricht. Durch die erste relative Zeigeradresse innerhalb des ersten Datenelements und die zweite relative Zeigeradresse innerhalb des zweiten Datenelements werden somit zwei jeweils in Bezug auf das erste Datenelement und das zweite Datenelement gleichbedeutende Speicheradressen beschrieben.

Auf Basis der zweiten relativen Zeigeradresse, der zweiten relativen Speicheradresse des zweiten Datenunterelements und der ersten absoluten Speicheradresse beziehungsweise des ersten Speicherplatzes des zweiten Datenelements wird im ersten Adressenermittlungsschritt eine absolute Speicheradresse des zweiten Datenunterelements ermittelt. Der durch die zweite relative Zeigeradresse beschriebene Speicherplatz innerhalb des Speicherbereichs des zweiten Datenelements kann unter Berücksichtigung der zweiten relativen Speicheradresse des zweiten Datenunterelements, zu der die zweite relative Zeigeradresse bezogen ist, und der absoluten Speicheradresse des ersten Speicherplatzes des zweiten Datenelements im zweiten Speicherbereich zu einer absoluten Speicheradresse des zweiten Datenunterelements im zweiten Speicherbereich umgerechnet werden.

Durch die Berücksichtigung der ersten relativen Zeigeradresse und der zweiten relativen Zeigeradresse kann erreicht werden, dass eine durch das erste Zeigerelement referenzierte Speicheradresse innerhalb eines Zeigerobjekts, wobei die vom Zeigerelement referenzierte Speicheradresse vom ersten Speicherplatz des jeweils referenzierten Zeigerobjekts abweicht, in eine entsprechende Speicheradresse innerhalb des Speicherbereichs des zweiten Datenelements übertragen werden kann, sodass gewährleistet werden kann, dass das zweite Zeigerelement entsprechend dem ersten Zeigerelement eine Speicheradresse referenziert, die von dem ersten Speicherplatz des jeweils referenzierten Zeigerobjekts abweicht. Hierdurch können Zeiger migriert werden, die nicht den ersten Speicherplatz des referenzierten Zeigerobjekts referenzieren, sondern in ein Zeigerobjekt hineinzeigen.

Nach einer Ausführungsform umfasst der Zeigermigrationsschritt:
falls das erste Datenunterelement und das zweite Datenunterelement jeweils von einem Verbundtyp sind, falls das erste Datenunterelement wenigstens eine erste Komponente aufweist, falls das zweite Datenunterelement wenigstens eine zweite Komponente aufweist, falls die erste Komponente und die zweite Komponente über eine dritte Relation assoziiert sind, und falls durch das erste Zeigerelement die erste Komponente referenziert wird,
Ermitteln auf Basis der ersten relativen Zeigeradresse einer ersten relativen Komponentenadresse der ersten Komponente in einem ersten Komponentenadressenermittlungsschritt, wobei durch die erste relative Komponentenadresse eine Speicheradresse im Speicherbereich des ersten Datenelements der ersten Komponente relativ zur ersten relativen Speicheradresse des ersten Datenunterelements beschrieben ist,
Ermitteln auf Basis der ersten relativen Komponentenadresse einer zweiten relativen Komponentenadresse der zweiten Komponente des zweiten Datenunterelements in einem zweiten Komponentenadressenermittlungsschritt, wobei die zweite relative Komponentenadresse eine Speicheradresse im Speicherbereich des zweiten Datenelements der zweiten Komponente relativ zur zweiten relativen Speicheradresse des zweiten Datenunterelements beschreibt, und
Ermitteln einer absoluten Speicheradresse der zweiten Komponente des zweiten Datenunterelements auf Basis der zweiten relativen Komponentenadresse, der zweiten relativen Speicheradresse des zweiten Datenunterelements und des ersten Speicherplatzes des zweiten Datenelements im zweiten Speicherbereich im ersten Adressenermittlungsschritt.

Hierdurch wird der technische Vorteil erreicht, dass ein präzises Verfahren zur Datenmigration eines Zeigerelements bereitgestellt werden kann, bei dem das zu migrierende Zeigerelement eine Komponente eines Datenobjekts vom Datentyp eines Verbundtyps referenziert.

Das erfindungsgemäße Verfahren in der genannten Ausführungsform betrifft ein erstes Datenunterelement und ein zweites Datenunterelement, die jeweils vom Datentyp eines Verbundtyps sind und jeweils wenigstens eine erste Komponente und eine zweite Komponente umfassen. Die erste Komponente und die zweite Komponente sind über eine dritte Relation zueinander assoziiert. Analog zu den oben beschriebenen ersten und zweiten Relationen, besteht zwischen der ersten Komponente und der zweiten Komponenten eine dritte Relation, wenn die erste Komponente und die zweite Komponente jeweils identisch benannt sind bzw. wenn in dem zweiten Steuerprogramm explizit eine Relation zwischen den beiden Komponenten definiert ist. Die dritte Relation besagt, dass die erste Komponente des ersten Datenunterelements und die zweite Komponente des zweiten Datenunterelements jeweils im ersten Steuerprogramm und im zweiten Steuerprogramm eine identische Funktion oder Rolle übernehmen. In einer Datenmigration des ersten Datenelements auf das zweite Datenelement, bei dem die Information des ersten Datenelements auf das zweite Datenelement übertragen werden soll, wäre die erste Komponente somit auf die zweite Komponente zu übertragen, da, über die dritte Relation gekennzeichnet, die zweite Komponente eine Entsprechung der ersten Komponente im zweiten Datenelement des zweiten Steuerprogramms ist.

In einem ersten Komponentenadressenermittlungsschritt wird auf Basis der ersten relativen Zeigeradresse eine erste relative Komponentenadresse der ersten Komponente im Speicherbereich des ersten Datenelements bestimmt. Die erste relative Komponentenadresse beschreibt hierbei eine Speicheradresse im Speicherbereich des ersten Datenelements der ersten Komponente relativ zur ersten relativen Speicheradresse des ersten Datenunterelements. Die vom ersten Zeigerelement referenzierte absolute Speicheradresse der ersten Komponente des ersten Datenunterelements wird im ersten Komponentenadressenermittlungsschritt in eine relative Speicheradresse der ersten Komponente innerhalb des ersten Datenelements umgerechnet, indem die absolute Speicheradresse der ersten Komponente in Relation zur bereits bekannten ersten relativen Speicheradresse des ersten Datenunterelements gesetzt wird.

Auf Basis der ersten relativen Komponentenadresse der ersten Komponente wird in einem zweiten Komponentenadressenermittlungsschritt eine zweite relative Komponentenadresse der zweiten Komponente des zweiten Datenunterelements ermittelt. Die zweite relative Komponentenadresse beschreibt eine Speicheradresse im Speicherbereich des zweiten Datenelements relativ zur zweiten relativen Speicheradresse des zweiten Datenunterelements. Die von der ersten relativen Komponentenadresse beschriebene Speicheradresse innerhalb des Speicherbereichs des ersten Datenelements entspricht somit einer durch die zweite relative Komponentenadresse beschriebenen Speicheradresse innerhalb des Speicherbereichs des zweiten Datenelements.

Auf Basis der zweiten relativen Komponentenadresse, der zweiten relativen Speicheradresse des zweiten Datenunterelements und des ersten Speicherplatzes des zweiten Datenelements wird im ersten Adressenermittlungsschritt eine absolute Speicheradresse der zweiten Komponente im zweiten Speicherbereich ermittelt. Die zweite relative Komponentenadresse beschreibt eine Speicheradresse der zweiten Komponente relativ zur bekannten zweiten relativen Speicheradresse des zweiten Datenunterelements im Speicherbereich des zweiten Datenelements. Mit diesen beiden Informationen und der bekannten absoluten Speicheradresse des ersten Speicherplatzes des zweiten Datenelements im zweiten Speicherbereich kann eine absolute Speicheradresse der zweiten Komponente des zweiten Datenunterelements des zweiten Datenelements ermittelt werden.

Nach einer Ausführungsform umfasst der Zeigermigrationsschritt:
falls das erste Datenunterelement und das zweite Datenunterelement jeweils von einem Feldtyp mit identischen Dimensionen sind, falls das erste Datenunterelement eine Mehrzahl erster Elemente und das zweite Datenunterelement eine Mehrzahl zweiter Elemente umfassen, falls wenigstens ein erstes Element und ein zweites Element über eine vierte Relation assoziiert sind, und falls durch das erste Zeigerelement das erste Element referenziert ist,
Ermitteln einer ersten relativen Elementadresse des durch das erste Zeigerelement referenzierten ersten Elements in einem ersten Elementadressenermittlungsschritt, wobei durch die erste relative Elementadresse eine Speicheradresse im Speicherbereich des ersten Datenelements des durch das erste Zeigerelement referenzierten ersten Elements relativ zur ersten relativen Speicheradresse des ersten Datenunterelements beschrieben ist,
Ermitteln auf Basis der ersten relativen Elementadresse einer zweiten relativen Elementadresse eines zweiten Elements, das mit dem durch das erste Zeigerelement referenzierten ersten Elements über die vierte Relation assoziiert ist, in einem zweiten Elementadressenermittlungsschritt, wobei die zweite relative Elementadresse eine Speicheradresse des zweiten Elements im Speicherbereich des zweiten Datenelements relativ zur zweiten relativen Speicheradresse des zweiten Datenunterelements beschreibt, und
Ermitteln einer absoluten Speicheradresse des zweiten Elements des zweiten Datenunterelements auf Basis der zweiten relativen Elementadresse, der zweiten relativen Speicheradresse des zweiten Datenunterelements und des ersten Speicherplatzes des zweiten Datenelements im Speicherbereich des zweiten Datenelements im ersten Adressenermittlungsschritt.

Hierdurch wird der technische Vorteil erreicht, dass ein präzises Verfahren zur Datenmigration eines Zeigerelements bereitgestellt werden kann, bei dem das Zeigerelement ein Element eines Datenobjekts vom Datentyp eines Feldtyps referenziert.

Das erfindungsgemäße Verfahren in der beschriebenen Ausführungsform betrifft den Fall, dass das erste Datenunterelement und das zweite Datenunterelement jeweils vom Datentyp eines Feldtyps mit identischen Dimensionen sind und das erste Datenunterelement eine Mehrzahl von ersten Elementen und das zweite Datenunterelement eine Mehrzahl von zweiten Elementen umfassen, wobei wenigstens ein erstes Element und ein zweites Element über eine vierte Relation zueinander assoziiert sind. Zwei Elemente sind über eine vierte Relation assoziiert, wenn beide Elemente identisch indiziert sind. Darüber hinaus kann eine Relation zwischen zwei Elementen zweier Datenunterobjekte eines Feldtyps bestehen, wenn im zweiten Steuerprogramm explizit eine solche Relation definiert ist.

Ferner betrifft das Verfahren in der beschriebenen Ausführungsform dem Fall, dass das erste Zeigerelement ein erstes Element des ersten Datenunterelements referenziert.

In einem ersten Elementadressenermittlungsschritt wird eine erste relative Elementadresse des durch das erste Zeigerelement referenzierten ersten Elements des ersten Datenunterelements ermittelt. Die erste relative Elementadresse beschreibt hierbei eine Speicheradresse im Speicherbereich des ersten Datenelements relativ zu einer ersten relativen Speicheradresse des ersten Datenunterelements. Im ersten Elementadressenermittlungsschritt wird somit eine absolute Speicheradresse des vom ersten Zeigerelement referenzierten ersten Elements des ersten Datenunterelements im ersten Speicherbereich in eine relative Speicheradresse des ersten Elements innerhalb des vom ersten Datenelement belegten Speicherbereichs relativ zu der bekannten ersten relativen Speicheradresse des ersten Datenunterelements konvertiert.

Auf Basis der ersten relativen Elementadresse wird in einem zweiten Elementadressenermittlungsschritt eine zweite relative Elementadresse des mit dem ersten Element in Relation stehenden zweiten Elements des zweiten Datenunterelements bestimmt. Die zweite relative Elementadresse beschreibt eine Speicheradresse im Speicherbereich des zweiten Datenelements des mit dem ersten Element in Relation stehenden zweiten Elements relativ zur zweiten relativen Speicheradresse des zweiten Datenunterelements. Innerhalb des Speicherbereichs des zweiten Datenelements und relativ zum ersten Speicherplatz des zweiten Datenelements beschreibt die zweite relative Elementadresse eine Speicheradresse, die der Speicheradresse der ersten relativen Elementadresse des ersten Elements innerhalb des Speicherbereichs des ersten Datenelements entspricht.

Auf Basis der zweiten relativen Elementadresse, der zweiten relativen Speicheradresse des zweiten Datenunterelements und der absoluten Speicheradresse des ersten Speicherplatzes des zweiten Datenelements im zweiten Speicherbereich wird im ersten Adressenermittlungsschritt eine absolute Speicheradresse des mit dem ersten Element in Relation stehenden zweiten Elements des zweiten Datenunterelements.

Nach einer Ausführungsform umfasst der erste Elementadressenermittlungsschritt:
Ermitteln einer ersten Elementgröße der ersten Elemente des ersten Datenunterelements in einem Elementgrößenermittlungsschritt, wobei die erste Elementgröße eines ersten Elements einem vom ersten Element belegten Speicherbereich im ersten Speicherbereich entspricht,
Ermitteln des durch das erste Zeigerelement referenzierten ersten Elements auf Basis der ersten relativen Zeigeradresse und der ersten Elementgröße.

Hierdurch wird der technische Vorteil erreicht, dass eine möglichst einfache Möglichkeit zur Bestimmung des durch das Zeigerelement referenzierten ersten Elements des ersten Datenunterelements bereitgestellt wird.

In einem Elementgrößenermittlungsschritt wird zunächst die Größe der ersten Elemente des ersten Datenunterelements bestimmt. Die Größe eines ersten Elements bzw. die erste Elementgröße beschreibt einen Speicherbereich, der vom ersten Element im Speicherbereich des ersten Datenelements belegt wird.

Darauffolgend wird auf Basis der ersten relativen Zeigeradresse und der ersten Elementgröße das durch das erste Zeigerelement referenzierte erste Element ermittelt. Die erste relative Zeigeradresse beschreibt eine Speicheradresse im Speicherbereich des ersten Datenelements relativ zur ersten relativen Speicheradresse des ersten Datenunterelements. Die erste relative Zeigeradresse beschreibt somit einen Abstand, in Speicherplätzen gezählt, von der durch das erste Zeigerelement referenzierten Speicheradresse zur ersten relativen Speicheradresse des ersten Datenunterelements. Wird dieser Abstand der referenzierten Speicheradresse zur relativen Speicheradresse des ersten Datenunterelements in Relation zur Elementgröße gesetzt, kann das Element ermittelt werden, in dem die referenzierte Speicheradresse der ersten relativen Zeigeradresse liegt.

Nach einer Ausführungsform umfasst der Zeigermigrationsschritt:
Ermitteln auf Basis der ersten relativen Zeigeradresse und der ersten relativen Komponentenadresse einer ersten relativen Zeigerteiladresse in einem fünften Zeigeradressenermittlungsschritt, wobei durch die erste relative Zeigerteiladresse ein Speicherplatz im Speicherbereich des ersten Datenelements, der vom ersten Zeigerelement referenziert wird, relativ zu der ersten relativen Komponentenadresse der ersten Komponente des ersten Datenunterelements beschrieben ist,
Ermitteln auf Basis der ersten relativen Zeigerteiladresse, der zweiten relativen Zeigeradresse und der zweiten relativen Komponentenadresse einer zweiten relativen Zeigerteiladresse in einem sechsten Zeigeradressenermittlungsschritt, wobei durch die zweite relative Zeigerteiladresse ein Speicherplatz im Speicherbereich des zweiten Datenelements relativ zur zweiten relativen Komponentenadresse bestimmt ist, und wobei die zweite relative Zeigerteiladresse in Relation zum zweiten Datenunterelement der ersten relativen Zeigerteiladresse in Relation zum ersten Datenunterelement entspricht, und
Ermitteln einer absoluten Speicheradresse der zweiten Komponente des zweiten Datenunterelements auf Basis der zweiten relativen Zeigerteiladresse, der zweiten relativen Komponentenadresse, der zweiten relativen Speicheradresse des zweiten Datenunterelements und des ersten Speicherplatzes des zweiten Datenelements im zweiten Speicherbereich im ersten Adressenermittlungsschritt.

Hierdurch wird der technische Vorteil erreicht, dass ein präzises Verfahren zur Datenmigration eines Zeigerelements bereitgestellt werden kann, bei dem das Zeigerelement eine Speicheradresse in einer Komponente eines Datenobjekts vom Datentyp eines Verbundtyps referenziert.

In einem fünften Zeigeradressenermittlungsschritt wird auf Basis der ersten relativen Zeigeradresse und der ersten relativen Komponentenadresse einer vom ersten Zeigerelement referenzierten Komponente des ersten Datenunterelements eine erste relative Zeigerteiladresse ermittelt. Die erste relative Zeigerteiladresse beschreibt einen vom ersten Zeigerelement referenzierten Speicherplatz im Speicherbereich des ersten Datenelements relativ zur ersten relativen Komponentenadresse der vom ersten Zeigerelement referenzierten Komponente des ersten Datenunterelements. Die erste relative Zeigerteiladresse weicht hierbei von der ersten relativen Komponentenadresse ab, wenn die vom ersten Zeigerelement referenzierte Speicheradresse vom ersten Speicherplatz der ersten Komponente abweicht. Dies ist der Fall, wenn das erste Zeigerelement in die erste Komponente hineinzeigt. Dies kann insbesondere dann auftreten, wenn die ersten Komponenten des ersten Datenunterelements wiederum komplexe Datentypen aufweisen und beispielsweise selber vom Typ eines Verbundtyps sind und ihrerseits wieder Komponenten aufweisen, die vom Zeigerelement referenziert werden.

Auf Basis der ersten relativen Zeigerteiladresse, der zweiten relativen Zeigeradresse und der zweiten relativen Komponentenadresse wird in einem sechsten Zeigeradressenermittlungsschritt eine zweite relative Zeigerteiladresse ermittelt. Die zweite relative Zeigerteiladresse beschreibt einen Speicherplatz im Speicherbereich des zweiten Datenelements relativ zur zweiten relativen Komponentenadresse. Innerhalb des zweiten Datenelements beschreibt die zweite relative Zeigerteiladresse eine Speicheradresse, die der durch die erste relative Zeigerteiladresse beschriebenen Speicheradresse innerhalb des Speicherbereichs des ersten Datenelements entspricht. Durch die Entsprechung der beiden Zeigerteiladressen zeigen das erste Zeigerelement und das zweite Zeigerelement relativ innerhalb des ersten Datenelements und des zweiten Datenelements in den gleichen Bereich der ersten Komponente des ersten Datenunterelements und der über die dritte Relation assoziierten zweiten Komponente des zweiten Datenunterelements.

Auf Basis der zweiten relativen Zeigerteiladresse, der zweiten relativen Komponentenadresse, der zweiten relativen Speicheradresse des zweiten Datenunterelements und der absoluten Speicheradresse des ersten Speicherplatzes des zweiten Datenelements wird im ersten Adressenermittlungsschritt eine absolute Speicheradresse der zweiten Komponente des zweiten Datenunterelements bestimmt.

Nach einer Ausführungsform umfasst der Zeigermigrationsschritt:
Ermitteln auf Basis der ersten relativen Zeigeradresse und der ersten relativen Elementadresse einer dritten relativen Zeigerteiladresse in einem siebten Zeigeradressenermittlungsschritt, wobei durch die dritte relative Zeigerteiladresse ein Speicherplatz im Speicherbereich des ersten Datenelements, der vom ersten Zeigerelement referenziert wird, relativ zu der ersten relativen Elementadresse des ersten Elements des ersten Datenunterelements beschrieben ist,
Ermitteln auf Basis der dritten relativen Zeigerteiladresse, der zweiten relativen Zeigeradresse und der zweiten relativen Elementadresse einer vierten relativen Zeigerteiladresse in einem achten Zeigeradressenermittlungsschritt, wobei durch die vierte relative Zeigerteiladresse ein Speicherplatz im Speicherbereich des zweiten Datenelements relativ zur zweiten relativen Elementadresse bestimmt ist, und wobei die vierte relative Zeigerteiladresse in Relation zum zweiten Datenunterelement der dritten relativen Zeigerteiladresse in Relation zum ersten Datenunterelement entspricht, und
Ermitteln einer absoluten Speicheradresse des zweiten Elements des zweiten Datenunterelements auf Basis der vierten relativen Zeigerteiladresse, der zweiten relativen Elementadresse, der zweiten relativen Speicheradresse des zweiten Datenunterelements und dem ersten Speicherplatz des zweiten Datenelements im zweiten Speicherbereich im ersten Adressenermittlungsschritt.

Hierdurch wird der technische Vorteil erreicht, dass ein präzises Verfahren zur Datenmigration eines Zeigerelements bereitgestellt werden kann, bei der das Zeigerelement ein Element eines Datenobjekts vom Datentyp eines Feldtyps referenziert.

In einem siebten Zeigeradressenermittlungsschritt wird auf Basis der ersten relativen Zeigeradresse und der ersten relativen Elementadresse eine dritte relative Zeigerteiladresse ermittelt. Analog zu dem Fall, dass das erste Datenunterelement und das zweite Datenunterelement ein Verbundtyp sind und das erste Zeigerelement in eine Komponente des ersten Datenunterelements zeigt, beschreibt die erste Zeigerteiladresse eine vom ersten Zeigerelement referenzierte Speicheradresse innerhalb des Speicherbereichs des ersten Datenelements relativ zu ersten relativen Elementadresse des referenzierten ersten Elements des ersten Datenunterelements. Die dritte relative Zeigerteiladresse weicht von der ersten relativen Elementadresse ab, wenn das erste Zeigerelement in das erste Element des ersten Datenunterelements zeigt. Dies kann insbesondere auftreten, wenn das erste Elemente wiederum von einem komplexen Datentyp ist und wiederum eigen Elemente oder Komponenten umfasst, die vom ersten Zeigerelement referenziert sind.

In einem achten Zeigeradressenermittlungsschritt wird auf Basis der dritten relativen Zeigerteiladresse, der zweiten relativen Zeigeradresse und der zweiten relativen Elementadresse eine vierte relative Zeigerteiladresse ermittelt.

Darauffolgend wird auf Basis der vierten relativen Zeigerteiladresse, der zweiten relativen Elementadresse, der zweiten relativen Speicheradresse des zweiten Datenunterelements und der absoluten Speicheradresse des ersten Speicherplatzes des zweiten Datenelements eine absolute Speicheradresse des zweiten Elements ermittelt. Durch die ermittelte vierte relative Zeigerteiladresse ist innerhalb des Speicherbereichs des zweiten Datenelements eine absolute Speicheradresse ermittelt, die innerhalb des zweiten Datenelements der durch das erste Zeigerelement referenzierten Speicheradresse innerhalb des ersten Elements des ersten Datenunterelements entspricht. Hierdurch ist gewährleistet, dass das zweite Zeigerelement einen Bereich innerhalb des zweiten Elements des zweiten Datenunterelements referenziert, der dem Bereich innerhalb des ersten Elements des ersten Datenunterelements entspricht, der von dem ersten Zeigerelement referenziert wird.

Nach einer Ausführungsform umfasst der Zeigermigrationsschritt ferner:
Erkennen, dass eine vom ersten Zeigerelemente referenzierte erste Speicheradresse eine erste Speicheradresse eines Datenunterelements ist, in einem ersten Erkennungsschritt; oder
Erkennen, dass eine vom ersten Zeigerelemente referenzierte erste Speicheradresse eine erste Speicheradresse einer ersten Komponente eines Datenunterelements ist, in einem zweiten Erkennungsschritt; oder
Erkennen, dass eine vom ersten Zeigerelemente referenzierte erste Speicheradresse eine erste Speicheradresse eines ersten Elements eines Datenunterelements ist, in einem ersten Erkennungsschritt.

Hierdurch wird der technische Vorteil erreicht, dass eine eindeutige Migration von Zeigern erreicht wird. Insbesondere kann bei mehrdeutigen Speicheradressen eine eindeutige Migration gewährleistet werden. Referenziert das erste Zeigerelement einen ersten Speicherplatz eines Datenunterelements von einem Verbundtyp, ermöglicht das Verfahren eine Unterscheidung zwischen einer Referenzierung des Datenunterelements und einer Referenzierung der ersten Komponenten des Datenunterelements, die ebenfalls mit dem ersten Speicherplatz referenzierbar ist. Analog ermöglicht das Verfahren eine Unterscheidung bei einem Datenunterelement von einem Feldtyp zwischen einer Referenzierung des Datenunterelements und einer Referenzierung des ersten Elements des Datenunterelements. Hierzu können im Verfahren die Datentypen der Datenunterelemente, der Komponenten und der Elemente, wie auch die Datentypen der Zeigerelemente berücksichtigt werden, und auf Basis der Datentypen entschieden werden, ob ein erstes Zeigerelement ein Datenunterelement oder eine Komponente beziehungsweise ein Element des Datenunterelements referenziert.

Nach einer Ausführungsform umfasst das erste Datenelement wenigstens ein weiteres erstes Datenunterelement, wobei das erste Datenunterelement und das wenigstens eine weitere erste Datenunterelement über eine erste Vererbungsrelation assoziiert sind, wobei das zweite Datenunterelement wenigstens ein weiteres zweites Datenunterelement umfasst, wobei das zweite Datenunterelement und das wenigstens eine weitere zweite Datenunterelement über eine zweite Vererbungsrelation assoziiert sind, und wobei der Zeigermigrationsschritt umfasst:
Bestimmen der ersten Vererbungsrelation zwischen dem ersten Datenunterelement und dem wenigstens einen weiteren ersten Datenunterelement in einem ersten Vererbungsbestimmungsschritt, wobei das erste Datenunterelement ein Untertyp des weiteren ersten Datenunterelements ist; und
Bestimmen der Vererbungsrelation zwischen dem zweiten Datenunterelement und dem wenigstens einen weiteren zweiten Datenunterelement in einem zweiten Vererbungsbestimmungsschritt, wobei das zweite Datenunterelement ein Untertyp des weiteren zweiten Datenunterelements ist.

Hierdurch wird der technische Vorteil erreicht, dass eine eindeutige Migration von Zeigerelementen, die Datenunterelemente referenzieren, die über eine Vererbungsrelation mit weiteren Datenunterelementen assoziiert sind, bereitgestellt werden kann.

Ein Untertyp ist ein Datenobjekt, das gemäß einer Vererbungsrelation ein Kindobjekt wenigstens eines Elternobjekts ist und aufgrund der Vererbungsrelation wenigstens ein Merkmal oder Attribut wenigstens eines Elternobjekts aufweist.

Nach einer Ausführungsform umfasst das Verfahren ferner:
Überprüfen, ob das erste Zeigerobjekt vom ersten Datenelement umfasst ist in einem Objektüberprüfungsschritt,
falls das erste Zeigerobjekt nicht vom ersten Datenelement umfasst ist, Identifizieren des zweiten Zeigerobjekts als das erste Zeigerobjekt in einem dritten Objektidentifikationsschritt, und
Schreiben des Werts des ersten Zeigerelements in das zweite Zeigerelement in einem zweiten Zeigerspeicherschritt.

Hierdurch wird der technische Vorteil erreicht, dass ein präzises Verfahren zur Datenmigration eines Zeigerelements bereitgestellt werden kann, bei dem das Zeigerelement ein Zeigerobjekt referenziert, das nicht innerhalb eines zu migrierenden globalen Zustands eines Steuerprogramms eines Automatisierungssystems liegt.

Das Verfahren in der vorliegenden Ausführungsform betrifft den Fall, dass das erste Zeigerelement ein erstes Zeigerobjekt referenziert, wobei das erste Zeigerobjekt nicht vom ersten Datenelement umfasst ist. Das erste Zeigerobjekt ist somit kein erstes Datenunterelement, keine erste Komponente oder kein erstes Element bzw. kein Objekt des ersten Datenelements.

In einem Objektüberprüfungsschritt wird überprüft, ob das erste Zeigerobjekt vom ersten Datenelement umfasst ist.

Ist das erste Zeigerobjekt nicht vom ersten Datenelement umfasst, wird in einem dritten Objektidentifikationsschritt das zweite Zeigerobjekt als das erste Zeigerobjekt identifiziert. Da das erste Zeigerelement und das zweite Zeigerelement über die erste Relation zueinander assoziiert sind und somit das erste Zeigerelement innerhalb des ersten Steuerprogramms und das zweite Zeigerelement innerhalb des zweiten Steuerprogramms identische Funktionen und Rollen ausführen, muss gewährleistet sein, dass das erste Zeigerelement und das zweite Zeigerelement identische Objekte beziehungsweise erste und zweite Zeigerobjekte, die über eine Relation zueinander assoziiert sind, referenzieren. Da das erste Zeigerobjekt nicht Bestandteil des ersten Datenelements ist, und somit bei einer Datenmigration des ersten Datenelements auf das zweite Datenelement nicht betroffen ist, verändert sich die Speicheradresse des vom ersten Zeigerelement referenzierten ersten Zeigerobjekts durch die Datenmigration des ersten Datenelements auf zweite Datenelement nicht.

Um gewährleisten zu können, dass nach erfolgreicher Datenmigration das zweite Zeigerelement, das innerhalb des zweiten Steuerprogramms dem ersten Zeigerelement entspricht, das erste Zeigerobjekt referenziert, wird in einem zweiten Zeigerspeicherschritt die vom ersten Zeigerelement referenzierte Speicheradresse des ersten Zeigerobjekts, das im dritten Objektidentifikationsschritt dem zweiten Zeigerobjekt gleichgesetzt wurde, im zweiten Zeigerelement gespeichert. Hierdurch ist erreicht, dass nach erfolgreicher Datenmigration das zweite Zeigerelement das außerhalb des ersten Datenelements und des zweiten Datenelements gespeicherte Zeigerobjekt referenziert.

Nach einer Ausführungsform umfasst der Zeigermigrationsschritt:
Identifizieren eines dritten Zeigerelements in einem zweiten Zeigeridentifikationsschritt, wobei das dritte Zeigerelement weder vom ersten Datenelement noch vom zweiten Datenelement umfasst ist, und wobei das dritte Zeigerelement ein drittes Zeigerobjekt, das vom ersten Datenelement umfasst ist, referenziert, wobei das dritte Zeigerobjekt ein erstes Datenunterelement, eine erste Komponente oder ein erstes Element ist, und wobei das dritte Zeigerobjekt mit einem zweiten Datenunterobjekt, einer zweiten Komponente oder einem zweiten Element über eine zweite Relation, eine dritte Relation oder eine vierte Relation assoziiert ist,
Ermitteln einer absoluten Speicheradresse des mit dem dritten Zeigerobjekt assoziierten zweiten Datenunterelements, der mit dem dritten Zeigerobjekt assoziierten zweiten Komponente oder des mit dem dritten Zeigerobjekt assoziierten zweiten Elements im zweiten Speicherbereich in einem zweiten Adressenermittlungsschritt, und
Schreiben der absoluten Speicheradresse des mit dem dritten Zeigerobjekt assoziierten zweiten Datenunterelements, der mit dem dritten Zeigerobjekt assoziierten zweiten Komponente oder dem mit dem dritten Zeigerobjekt assoziierten zweiten Elements als Wert des dritten Zeigerelements in einem dritten Zeigerspeicherschritt.

Hierdurch wird der technische Vorteil erreicht, dass ein präzises Verfahren zur Datenmigration eines Zeigerelements im Zuge einer Datenmigration eines Programmzustands bereitgestellt werden kann, bei dem das Zeigerelement nicht Bestandteil des zu migrierenden Programmzustands ist, jedoch ein Zeigerobjekt referenziert, das Bestandteil des zu migrierenden Programmzustands ist.

Das Verfahren in der folgenden Ausführungsform betrifft den Fall, dass ein drittes Zeigerelement, das weder im ersten Datenelement noch im zweiten Datenelement enthalten ist, ein drittes Zeigerobjekt referenziert, das ein Objekt des ersten Datenelements ist.

Hierzu wird in einem zweiten Zeigeridentifikationsschritt ein drittes Zeigerelement identifiziert, das weder vom ersten Datenelement noch vom zweiten Datenelement umfasst ist und ein drittes Zeigerobjekt referenziert, das vom ersten Zeigerelement umfasst ist. Das erste Zeigerobjekt kann ein erstes Datenunterelement oder eine erste Komponente oder ein erstes Element eines ersten Datenunterelements sein. Das dritte Zeigerobjekt ist ferner mit einem Objekt des zweiten Datenelements, entsprechend einem zweiten Datenunterelement oder einer zweiten Komponente oder einem zweiten Element eines zweiten Datenunterelements über eine entsprechende Relation assoziiert.

In einem zweiten Adressenermittlungsschritt wird eine Speicheradresse des mit dem dritten Zeigerobjekt assoziierten Objekts des zweiten Datenelements ermittelt. Die Adressenermittlung des Objekts des zweiten Datenelements, das ein zweites Datenunterelement oder eine zweite Komponente bzw. ein zweites Element eines zweiten Datenunterelements sein kann, kann die vorangegangenen Verfahrensschritte umfassen, bei denen zunächst relative Speicheradressen des dritten Zeigerobjekts im Speicherbereich des ersten Datenelements bestimmt werden und auf Basis dieser bestimmten relativen Speicheradressen eine relative Speicheradresse des mit dem dritten Zeigerobjekt assoziierten Objekts des zweiten Datenelements im Speicherbereich des zweiten Datenelements bestimmt werden.

In einem dritten Zeigerspeicherschritt wird die ermittelte absolute Speicheradresse des mit dem dritten Zeigerobjekt assoziierten Objekts des zweiten Datenelements im dritten Zeigerelement gespeichert, wobei das dritte Zeigerelement von der Datenmigration des ersten Datenelements auf das zweite Datenelement unberührt bleibt und weiterhin in einem Speicherbereich außerhalb des Speicherbereichs des ersten Datenelements und außerhalb des Speicherbereichs des zweiten Datenelements gespeichert ist.

Nach einer Ausführungsform umfasst das Verfahren ferner:
Generieren einer ersten Zeigermigrationsfunktion zum Abbilden des ersten Zeigerelements auf das zweite Zeigerelement in einem Funktionsgenerierungsschritt, wobei die erste Zeigermigrationsfunktion eingerichtet ist, ein Zeigerelement vom ersten Zeigertyp auf ein Zeigerelement vom zweiten Zeigertyp abzubilden und den Zeigermigrationsschritt auszuführen.

Hierdurch wird der technische Vorteil erreicht, dass die Datenmigration des Zeigerelements über das Ausführen einer ersten Zeigermigrationsfunktion durchgeführt werden kann. Hierzu wird in einem Funktionsgenerierungsschritt eine erste Zeigermigrationsfunktion generiert, die eingerichtet ist, ein Zeigerelement vom ersten Zeigertyp auf ein Zeigerelement von einem zweiten Zeigertyp abzubilden und den Zeigermigrationsschritt auszuführen.

Die erste Zeigermigrationsfunktion ist hierbei nicht darauf beschränkt, das erste Zeigerelement auf das zweite Zeigerelement abzubilden. Vielmehr ist die erste Zeigermigrationsfunktion in der Lage, verschiedene Zeigerelemente aufeinander abzubilden, die jeweils vom Typ eines ersten Zeigertyps und eines zweiten Zeigertyps sind. Ein Zeigertyp eines Zeigerelements beschreibt hierbei einen Datentyp des jeweiligen Zeigerelements. Durch den Zeigertyp des jeweiligen Zeigerelements ist der Datentyp des vom Zeigerelement referenzierten Zeigerobjekts berücksichtigt. So kann ein Zeigerelement beispielsweise vom gleichen Datentyp sein wie das von dem jeweiligen Zeigerelement referenzierte Zeigerobjekt.

Durch das Generieren der ersten Zeigermigrationsfunktion wird erreicht, dass der Migrationsvorgang des Zeigerelements bzw. der Datenmigrationsvorgang des ersten Datenelements auf das zweite Datenelement beschleunigt wird. Durch die Verwendung von Zeigermigrationsfunktionen zum Abbilden von ersten Zeigerelementen auf zweite Zeigerelemente kann erreicht werden, dass Funktionen für verschiedene Datenmigrationsvorgänge einer Mehrzahl von ersten Zeigerelementen auf zweite Zeigerelemente verwendet werden können. Somit kann, speziell bei einer Vielzahl von ersten und zweiten Zeigerelementen, vermieden werden, dass für jedes einzelne erste Zeigerelement eine entsprechende Abbildungsvorschrift auf ein jeweiliges zweites Zeigerelement bereitgestellt werden muss. Stattdessen können die generierten Zeigermigrationsfunktionen, die zum Abbilden des entsprechenden Zeigerelements mit dem jeweiligen Zeigertyp geeignet sind, beliebig häufig aufgerufen und ausgeführt werden. Hierdurch wird der Migrationsvorgang der Zeigerelemente zeitlich beschleunigt. Darüber hinaus können generierte Zeigermigrationsfunktionen für spätere Datenmigrationsvorgänge wiederverwendet werden.

Nach einer Ausführungsform umfasst der Funktionsgenerierungsschritt:
Identifizieren des ersten Zeigertyps des ersten Zeigerelements und des zweiten Zeigertyps des zweiten Zeigerelements in einem Typidentifikationsschritt.

Hierdurch wird der technische Vorteil erreicht, dass die Zeigermigrationsfunktionen auf die jeweiligen Zeigertypen der zu migrierenden Zeigerelemente angepasst werden können. Im Funktionsgenerierungsschritt werden die Zeigertypen der ersten Zeigerelemente und die Zeigertypen der zweiten Zeigerelemente identifiziert. Auf Basis der identifizierten ersten und zweiten Zeigertypen werden die ersten Zeigermigrationsfunktionen generiert, sodass die jeweiligen generierten Zeigermigrationsfunktionen eingerichtet sind, Zeiger vom ersten Zeigertyp auf Zeiger vom zweiten Zeigertyp abzubilden. Zur Identifikation der ersten Zeigertypen der ersten Zeigerelemente und der zweiten Zeigertypen der zweiten Zeigerelemente können Informationen aus dem ersten Steuerprogramm und dem zweiten Steuerprogramm genutzt werden. In dem ersten und zweiten Steuerprogramm sind die Zeigertypen der ersten und zweiten Zeigerelemente definiert.

Nach einer Ausführungsform umfasst das Verfahren ferner:
Überprüfen, ob im Funktionsgenerierungsschritt die erste Zeigermigrationsfunktion generiert werden konnte, in einem ersten Überprüfungsschritt, und
falls im Funktionsgenerierungsschritt die erste Zeigermigrationsfunktion nicht generiert werden konnte, Setzen des zweiten Zeigerelements auf einen Initialwert in einem Initialisierungsschritt und/oder,
falls im Funktionsgenerierungsschritt die erste Zeigermigrationsfunktion nicht generiert werden konnte, Abbrechen der Migration in einem Terminierungsschritt, wobei die erste Zeigermigrationsfunktion nicht generiert werden kann, wenn der erste Zeigertyp des ersten Zeigerelements nicht eindeutig durch den zweiten Zeigertyp des zweiten Zeigerelements darstellbar ist.

Hierdurch wird der technische Vorteil erreicht, dass ein flexibles Verfahren zur Datenmigration von Zeigerelementen im Zuge einer Datenmigration eines Programmzustands eines Steuerprogramms eines Automatisierungssystems bereitgestellt werden kann.

In einem ersten Überprüfungsschritt wird überprüft, ob im Funktionsgenerierungsschritt die erste Zeigermigrationsfunktion generiert werden konnte. Ist die Generierung einer ersten Zeigermigrationsfunktion fehlgeschlagen, so kann ein erstes Zeigerelement nicht auf ein zweites Zeigerelement abgebildet werden und die Datenmigration des ersten Zeigerelements schlägt fehl.

Konnte eine erste Zeigermigration nicht generiert werden, so kann in einem Initialisierungsschritt das zweite Zeigerelement auf einen Initialwert gesetzt werden. Hierdurch wird erreicht, dass, trotz fehlgeschlagener Datenmigration des ersten Zeigerelements auf das zweite Zeigerelement, das zweite Zeigerelement dennoch mit einem zulässigen Zahlenwert versehen werden kann, sodass nach abgeschlossener Datenmigration des ersten Datenelements auf das zweite Datenelement das zweite Steuerprogramm auf das zweite Datenelement zugreifen kann und auf Basis des zweiten Datenelements ausgeführt werden kann.

Alternativ kann bei fehlgeschlagener Generierung der ersten Zeigermigrationsfunktion die Datenmigration des ersten Datenelements auf das zweite Datenelement bzw. die Datenmigration des ersten Zeigerelements auf das zweite Zeigerelement in einem Terminierungsschritt abgebrochen werden. Hierdurch kann vermieden werden, dass bei fehlgeschlagener Datenmigration des ersten Zeigerelements auf das zweite Zeigerelement das zweite Zeigerelement mit einem Initialwert versehen wird, der nicht dem Wert des ersten Zeigerelements entspricht.

Dies kann beispielsweise vorteilhaft sein, wenn durch das erste Zeigerelement ein Objekt des ersten Datenelements referenziert wird, das für die Steuerung des Automatisierungssystems essenziell ist. Würde bei einer fehlgeschlagenen Datenmigration des ersten Zeigerelements auf ein entsprechendes zweites Zeigerelement des zweiten Datenelements das entsprechende zweite Zeigerelement auf einen Initialwert gesetzt, sodass eine Referenzierung des entsprechenden Objekts durch das zweite Zeigerelement nicht gewährleistet ist, so könnte bei Steuerung des Automatisierungssystems auf Basis des zweiten Steuerprogramms unter Berücksichtigung des zweiten Datenelements ein gravierender Fehler auftreten und eine mögliche Beschädigung des Automatisierungssystems bzw. Teile des Automatisierungssystems auftreten.

Um dies zu vermeiden, kann bei fehlerhafter Datenmigration die Migration vollständig abgebrochen werden, anstatt die Datenmigration des ersten Datenelements auf das zweite Datenelement fortzusetzen und das zweite Zeigerelement mit einem Initialwert zu versehen. Durch den Abbruch der Datenmigration kann das Automatisierungssystem auf Basis des ersten Steuerprogramms unter Berücksichtigung des ersten Datenelements weiter gesteuert werden und eine Fehlfunktion des Automatisierungssystems begründet durch die Steuerung auf Basis des zweiten Steuerprogramms unter Berücksichtigung des zweiten Datenelements inkl. des fehlerhaft migrierten zweiten Zeigerelements vermieden werden.

Nach einer Ausführungsform umfasst die Steuerung ferner ein Compilermodul zum Interpretieren eines Steuerprogramms, und wobei der Funktionsgenerierungsschritt durch das Compilermodul ausgeführt wird.

Hierdurch wird der technische Vorteil erreicht, dass eine effiziente und verlässliche Lösung zur Generierung der Zeigermigrationsfunktion erreicht werden kann. Der Funktionsgenerierungsschritt, in dem sowohl die Zeigermigrationsfunktion als auch die Zeigertypen der zu migrierenden ersten und zweiten Zeigerelemente generiert und bestimmt werden, kann durch ein Compilermodul zum Interpretieren eines Steuerprogramms automatisch ausgeführt werden. Während des Kompiliervorgangs eines Quellcodes des zweiten Steuerprogramms kann der Funktionsgenerierungsschritt vom Compilermodul ausgeführt werden und die ersten Zeigermigrationsfunktionen generiert werden. Auf Basis dieser generierten Zeigermigrationsfunktionen können anschließend die ersten Zeigerelemente des ersten Datenelements auf die zweiten Zeigerelemente des zweiten Datenelements abgebildet werden. Hierdurch wird ein zeiteffizienter Migrationsvorgang erreicht.

Nach einer Ausführungsform umfasst das Verfahren ferner:
Abbilden des ersten Datenelements auf das zweite Datenelement und/oder Abbilden des ersten Datenunterelements auf das zweite Datenunterelement und/oder Abbilden der ersten Komponenten auf die zweiten Komponenten und/oder Abbilden der ersten Elemente auf die zweiten Elemente in einem Migrationsschritt.

Hierdurch wird der technische Vorteil erreicht, dass ein Verfahren zur Datenmigration eines Programmzustands eines Steuerprogramms eines Automatisierungssystems mit Datenmigration eines Zeigerelements bereitgestellt werden kann. In einem Migrationsschritt wird das erste Datenelement auf das zweite Datenelement abgebildet. Dies umfasst ein Abbilden aller Objekte des ersten Datenelements auf entsprechende Objekte des zweiten Datenelements, die über entsprechende Relationen mit den Objekten des ersten Datenelements assoziiert sind.

Im Migrationsschritt können somit erste Datenelemente auf über entsprechende zweite Relationen assoziierte zweite Datenelemente abgebildet werden. Ferner können erste Komponenten der ersten Datenelemente auf über entsprechende dritte Relationen assoziierte zweite Komponenten der zweiten Datenunterelemente abgebildet bildet werden. Ferner können erste Elemente der ersten Datenunterelemente auf über entsprechende vierte Relationen assoziierte zweite Elemente der zweiten Datenunterelemente des zweiten Datenelements abgebildet werden. Durch die Abbildungen der Objekte des ersten Datenelements auf die Objekte des zweiten Datenelements im Migrationsschritt kann die Information des ersten Datenelements, die den globalen Zustand des ersten Steuerprogramms und des über das erste Steuerprogramm gesteuerten Automatisierungssystems umfasst, auf das zweite Datenelement und die darin enthaltenen Objekte abgebildet werden.

Parallel können über den Zeigermigrationsschritt erste Zeigerelemente des ersten Datenelements auf über erste Relationen assoziierte zweite Zeigerelemente des zweiten Datenelements abgebildet werden. Hierdurch kann ein globaler Zustand des ersten Steuerprogramms auf das zweite Datenelement abgebildet werden.

Nach Ersetzen des ersten Steuerprogramms durch das zweite Steuerprogramm kann das zweite Steuerprogramm somit auf den globalen Zustand des ersten Steuerprogramms, der nach erfolgreicher Migration im zweiten Datenelement gespeichert ist, zugreifen und das Automatisierungssystem kann auf Basis des zweiten Steuerprogramms unter Berücksichtigung des globalen Zustands des ersten Steuerprogramms in dem Zustand, in dem sich das Automatisierungssystem vor Beginn des Datenmigrationsprozesses befand, gesteuert werden. Hierdurch wird ein effizientes Verfahren zur Migration eines Programmzustands inkl. einer Datenmigration eines Zeigerelements bereitgestellt, das es ermöglicht, ein erstes Steuerprogramm durch ein zweites Steuerprogramm zu ersetzen und den Programmzustand des ersten Steuerprogramms auf das zweite Steuerprogramm zu übertragen.

Nach einer Ausführungsform umfasst der Funktionsgenerierungsschritt:
Generieren einer zweiten Zeigermigrationsfunktion, wobei die zweite Zeigermigrationsfunktion eingerichtet ist, den zweiten Adressenermittlungsschritt und den dritten Zeigerspeicherschritt auszuführen und das dritte Zeigerobjekt auf ein entsprechendes zweites Datenunterelement, eine entsprechende zweite Komponente oder ein entsprechendes zweites Element abzubilden.

Hierdurch wird der technische Vorteil erreicht, dass ein effizientes Verfahren zur Datenmigration eines Zeigerelements im Zuge einer Datenmigration eines Programmzustands eines Automatisierungssystems bereitgestellt werden kann. Durch das Generieren einer zweiten Zeigermigrationsfunktion, die eingerichtet ist, den zweiten Adressenermittlungsschritt und den dritten Zeigerspeicherschritt auszuführen und das dritte Zeigerobjekt auf ein entsprechendes Objekt des zweiten Datenelements abzubilden, kann eine zeiteffiziente Datenmigration des dritten Zeigerelements erreicht werden. Die Datenmigration durch Ausführen entsprechender Migrationsfunktionen hat den Vorteil, dass bei mehrfacher Datenmigration verschiedener migrierender Zeigerelemente entsprechende Migrationsfunktionen mehrfach aufgerufen werden können, was den Migrationsvorgang zeitlich beschleunigt. Darüber hinaus können generierte Zeigermigrationsfunktionen für spätere Migrationsvorgänge wiederverwendet werden.

Nach einer Ausführungsform umfasst das Verfahren ferner:
Generieren einer ersten Migrationsfunktion zum Abbilden des ersten Datenelements auf das zweite Datenelement, wobei die erste Migrationsfunktion eingerichtet ist, Daten eines ersten Datentyps des ersten Datenelements im ersten Speicherbereich auszulesen, ausgelesene Daten des ersten Datentyps in einen zweiten Datentyp des zweiten Datenelements zu konvertieren und in den zweiten Datentyp konvertierte Daten im zweiten Speicherbereich zu speichern,
Generieren einer zweiten Migrationsfunktion zum Abbilden des ersten Datenunterelements auf das zweite Datenunterelement, wobei die zweite Migrationsfunktion eingerichtet ist, Daten eines dritten Datentyps des ersten Datenunterelements im ersten Speicherbereich auszulesen, ausgelesene Daten des dritten Datentyps in einen vierten Datentyp des zweiten Datenunterelements zu konvertieren und in den vierten Datentyp konvertierte Daten im zweiten Speicherbereich zu speichern,
Generieren einer dritten Migrationsfunktion zum Abbilden der ersten Komponente auf die zweite Komponente, wobei die dritte Migrationsfunktion eingerichtet ist, Daten eines fünften Datentyps der ersten Komponenten im ersten Speicherbereich auszulesen, die ausgelesenen Daten in einen sechsten Datentyp der zweiten Komponente zu konvertieren und die konvertierten Daten im zweiten Speicherbereich zu speichern, und
Generieren einer vierten Migrationsfunktion zum Abbilden der ersten Elemente auf die zweiten Elemente in einem Generierungsschritt, wobei die vierte Migrationsfunktion eingerichtet ist, Daten eines fünften Datentyps der ersten Elemente im ersten Speicherbereich auszulesen, die ausgelesenen Daten in einen sechsten Datentyp der zweiten Komponenten zu konvertieren und die konvertierten Daten im zweiten Speicherbereich zu speichern.

Hierdurch wird der technische Vorteil erreicht, dass eine präzise und effiziente Datenmigration eines Programmzustands erreicht werden kann. Durch das Verwenden von Migrationsfunktionen zum Abbilden des ersten Datenelements auf das zweite Datenelement kann eine Beschleunigung des Migrationsvorgangs erreicht werden. Darüber hinaus können generierte Migrationsfunktionen für zukünftige Migrationsvorgänge wiederverwendet werden. Durch das Generieren der entsprechenden Migrationsfunktion können diese auf die jeweiligen zu migrierenden Objekte angepasst werden.

Nach einer Ausführungsform umfasst der Generierungsschritt:
Identifizieren des ersten Datentyps des ersten Datenelements und des zweiten Datentyps des zweiten Datenelements,
Identifizieren des dritten Datentyps des ersten Datenunterelements, des vierten Datentyps des zweiten Datenunterelements und der zweiten Relation zwischen dem ersten Datenunterelement und dem zweiten Datenunterelement,
Identifizieren des fünften Datentyps der ersten Komponente des ersten Datenunterelements, des sechsten Datentyps der zweiten Komponente des zweiten Datenunterelements und der dritten Relation zwischen der ersten Komponente und der zweiten Komponente, und
Identifizieren des siebten Datentyps des ersten Elements des ersten Datenunterelements, des achten Datentyps des zweiten Elements des zweiten Datenunterelements und der vierten Relation zwischen dem ersten Element und dem zweiten Element in einem Identifikationsschritt.

Hierdurch wird der technische Vorteil erreicht, dass die entsprechenden Migrationsfunktionen an die Datentypen der jeweiligen zu migrierenden Objekte des ersten Datenelements und des zweiten Datenelements angepasst werden können. Die Migrationsfunktionen sind somit nicht auf das Abbilden eines bestimmten Objekts des ersten Datenelements auf ein bestimmtes Objekt des zweiten Datenelements beschränkt, sondern sind geeignet, verschiedene Objekte eines bestimmten Datentyps aufeinander abzubilden. Hierdurch können eine hohe Flexibilität und ein zeitlich beschleunigter Migrationsvorgang erreicht werden.

Nach einer Ausführungsform umfasst das Verfahren ferner:
Überprüfen, ob im Generierungsschritt die erste Migrationsfunktion und/oder die zweite Migrationsfunktion und/oder die dritte Migrationsfunktion und/oder die vierte Migrationsfunktion generiert werden konnte, in einem zweiten Überprüfungsschritt, wobei die erste Migrationsfunktion nicht generiert werden kann, wenn der erste Datentyp des ersten Datenelements nicht in den zweiten Datentyp des zweiten Datenelements konvertierbar ist,
wobei die zweite Migrationsfunktion nicht generiert werden kann, wenn der dritte Datentyp des ersten Datenunterelements nicht in den vierten Datentyp des zweiten Datenunterelements konvertierbar ist, wobei die dritte Migrationsfunktion nicht generiert werden kann,
wenn der fünfte Datentyp der ersten Komponenten des ersten Datenunterelements nicht in den sechsten Datentyp der zweiten Komponenten des zweiten Datenunterelements konvertierbar ist, und wobei die vierte Migrationsfunktion nicht generiert werden kann, wenn der sechste Datentyp des ersten Elements des ersten Datenunterelements nicht in den achten Datentyp des zweiten Elements des zweiten Datenunterelements konvertierbar ist, und
falls die erste Migrationsfunktion und/oder die zweite Migrationsfunktion und/oder die dritte Migrationsfunktion und/oder die vierte Migrationsfunktion nicht generiert werden konnte, Abbrechen der Datenmigration des ersten Datenelements auf das zweite Datenelement im Terminierungsschritt.

Hierdurch wird der technische Vorteil erreicht, dass die Migration des ersten Datenelements auf das zweite Datenelement abgebrochen werden kann, falls benötigte Migrationsfunktionen zum Abbilden der Objekte des ersten Datenelements auf die Objekte des zweiten Datenelements nicht generiert werden konnten. Bei abgebrochener Datenmigration des ersten Datenelements auf das zweite Datenelement kann die Steuerung des Automatisierungssystems auf Basis des ersten Steuerprogramms fortgesetzt werden. Somit kann vermieden werden, dass durch eine fehlerhafte Datenmigration des ersten Datenelements auf das zweite Datenelement eine Steuerung des Automatisierungssystems auf Basis des zweiten Steuerprogramms unter Berücksichtigung des weiten Datenelements zu einer Fehlfunktion des Automatisierungssystems führt.

Nach einer Ausführungsform ist ein zyklisches Ausführen des ersten Steuerprogramms unterbrochen, und wobei das erste Datenelement einen Programmzustand des ersten Steuerprogramms und einen Zustand des Automatisierungssystems zum Zeitpunkt eines zuletzt auf Basis des ersten Steuerprogramms ausgeführten Steuerzyklus beschreibt.

Hierdurch wird der technische Vorteil erreicht, dass eine präzise und effektive Datenmigration des Zeigerelements gewährleistet werden kann. Durch das Unterbrechen des zyklischen Ausführens des ersten Steuerprogramms ist gewährleistet, dass zum Zeitpunkt der Datenmigration der Wert des ersten Datenelements unverändert bleibt. Durch Unterbrechen des Ausführens des ersten Steuerprogramms werden keine weiteren Daten in das erste Datenelement geschrieben und der Wert des ersten Datenelements entspricht dem Wert zum Ende des zuletzt ausgeführten Steuerzyklus. Dies ermöglicht eine präzise und eindeutige Abbildung des Werts des ersten Datenelements auf das zweite Datenelement inkl. einer eindeutigen Abbildung des Werts des ersten Zeigerelements auf das zweite Zeigerelement.

Nach einer Ausführungsform ist das zweite Steuerprogramm eine Aktualisierung des ersten Steuerprogramms und eingerichtet, das erste Steuerprogramm zu ersetzen und das Automatisierungssystem durch zyklisches Ausführen des zweiten Steuerprogramms unter Berücksichtigung des zweiten Datenelements zu steuern.

Hierdurch wird der technische Vorteil erreicht, dass das Automatisierungssystem nach erfolgreicher Datenmigration des Programmzustands des ersten Steuerprogramms und Abbildung des Werts des ersten Datenelements auf das zweite Datenelement auf Basis des zweiten Steuerprogramms unter Berücksichtigung des zweiten Datenelements in einem Zustand angesteuert werden kann, in dem sich das Automatisierungssystem zum Zeitpunkt des zuletzt ausgeführten Steuerzyklus auf Basis des ersten Steuerprogramms befand. Somit kann das erste Steuerprogramm durch das zweite Steuerprogramm ersetzt werden und das Automatisierungssystem auf Basis des zweiten Steuerprogramms im Zustand des zuletzt ausgeführten Steuerzyklus angesteuert werden.

Die Erfindung wird anhand der beigefügten Figuren näher erläutert. Hierbei zeigen:
- Fig. 1: eine schematische Darstellung eines Automatisierungssystems gemäß einer Ausführungsform;
- Fig. 2: eine schematische Darstellung eines Aktualisierungsvorgangs eines Steuerprogramms eines Automatisierungssystems gemäß einer Ausführungsform;
- Fig. 3: ein Flussdiagramm eines Verfahrens zur Datenmigration eines Zeigerelements in einem Automatisierungssystem gemäß einer Ausführungsform;
- Fig. 4: ein Flussdiagramm des Verfahrens zur Datenmigration eines Zeigerelements in einem Automatisierungssystem gemäß einer weiteren Ausführungsform;
- Fig. 5: eine schematische Darstellung einer Bestimmung einer Speicheradresse eines Zeigerobjekts in einer Datenmigration eines Zeigerelements in einem Automatisierungssystem gemäß einer Ausführungsform;
- Fig. 6: eine schematische Darstellung einer Bestimmung einer Speicheradresse eines Zeigerobjekts in einer Datenmigration eines Zeigerelements in einem Automatisierungssystem gemäß einer weiteren Ausführungsform;
- Fig. 7: eine schematische Darstellung einer Bestimmung einer Speicheradresse eines Zeigerobjekts in einer Datenmigration eines Zeigerelements in einem Automatisierungssystem gemäß einer weiteren Ausführungsform;
- Fig. 8: eine schematische Darstellung eines Generierungsvorgangs einer aktualisierten Version eines Steuerprogramms eines Automatisierungssystems gemäß einer Ausführungsform; und
- Fig. 9: eine schematische Darstellung eines Migrationsvorgangs von Zeigerelementen eines Steuerprogramms eines Automatisierungssystems gemäß einer Ausführungsform.

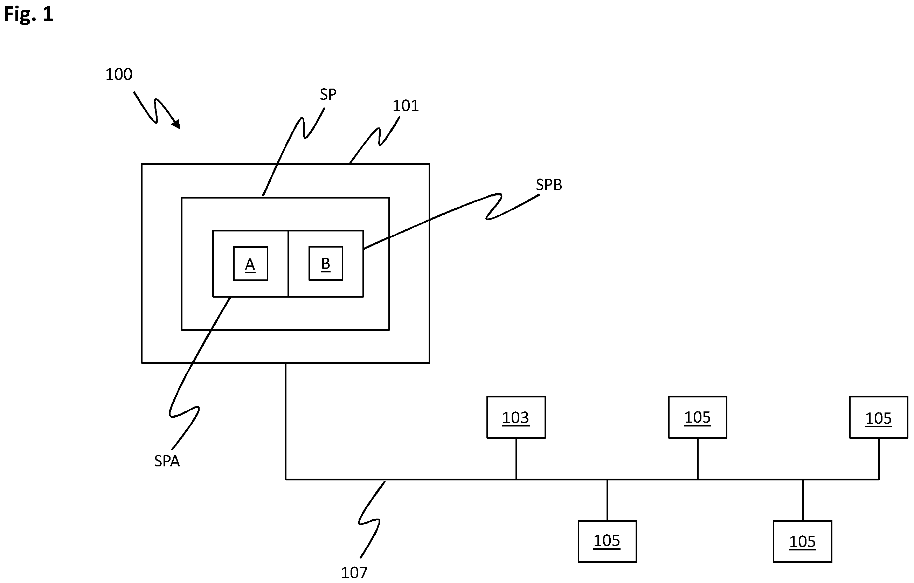

Fig. 1 zeigt eine schematische Darstellung eines Automatisierungssystems 100 gemäß einer Ausführungsform.

Das Automatisierungssystem 100 in Fig. 1 umfasst eine Steuerung 101, einen Masterteilnehmer 103 und vier Slaveteilnehmer 105, die jeweils miteinander und mit der Steuerung 101 über ein Bussystem 107 verbunden sind. In einem Speicher SP der Steuerung 101 ist in einem ersten Speicherbereich SPA ein erstes Steuerprogramm A und in einem zweiten Speicherbereich SPB ein zweites Steuerprogramm B gespeichert. Das erste Steuerprogramm A dienst zum zyklischen Ansteuern des Masterteilnehmers 103 und der Slaveteilnehmer 105. Das zweite Steuerprogramm B ist eine aktualisierte Version des ersten Steuerprogramms A und dient ebenfalls zum zyklischen Ansteuern der Teilnehmer des Automatisierungssystems 100. Eine aktualisierte Version kann beispielsweise ein Update des ersten Steuerprogramms A oder eine abgeänderte Version des ersten Steuerprogramms A sein. Das zweite Steuerprogramm B basiert somit auf dem ersten Steuerprogramm A und kann in verschiedenen Bereichen des Steuerprogramms von dem ersten Steuerprogramm A abweichen.

Das in Figur 1 gezeigte Automatisierungssystem 100 dient lediglich als beispielhafte Illustration eines Automatisierungssystems. Das erfindungsgemäße Verfahren soll nicht auf das in Figur 1 gezeigte Automatisierungssystem beschränkt sein.

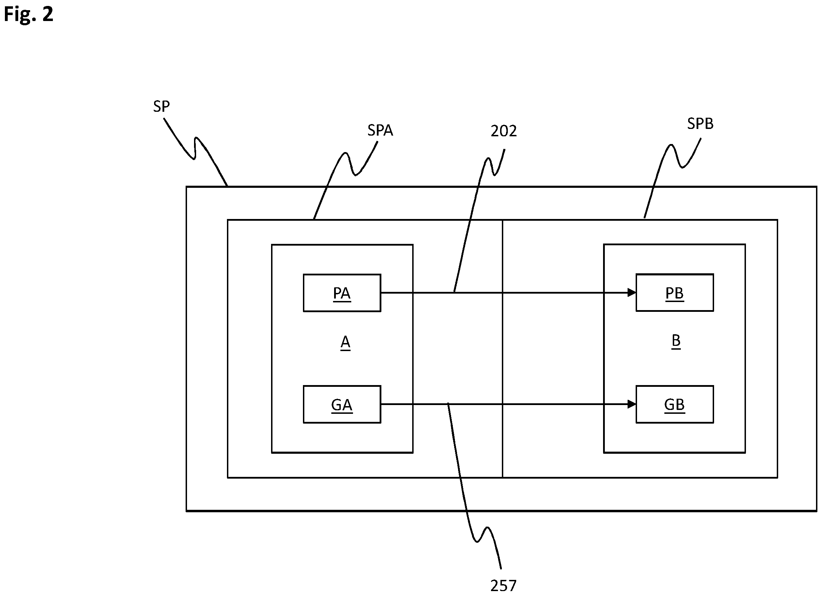

Fig. 2 zeigt eine schematische Darstellung eines Aktualisierungsvorgangs eines Steuerprogramms A eines Automatisierungssystems 100 gemäß einer Ausführungsform.

In Figur 2 ist der Speicher SP der Steuerung 101 des Automatisierungssystems 100 aus Fig. 1 gezeigt. Der Speicher SP ist in den ersten Speicherbereich SPA und den zweiten Speicherbereich SPB unterteilt. Im ersten Speicherbereich SPA ist das erste Steuerprogramm A gespeichert und in dem zweiten Speicherbereich SPB ist das zweite Steuerprogramm B gespeichert. Das erste Steuerprogramm A umfasst einen ersten ausführbaren Code PA und ein erstes Datenelement GA, und das zweite Steuerprogramm B umfasst einen zweiten ausführbaren Code PB und ein zweites Datenelement GB.

Der erste ausführbare Code PA des ersten Steuerprogramms A dient zum Ausführen des Steuerprogramms A und kann durch die Steuerung 101 ausgeführt werden. Der zweite ausführbare Code PB des zweiten Steuerprogramms B dient zum Ausführen des zweiten Steuerprogramms B und kann durch die Steuerung 101 ausgeführt werden. Das erste Datenelement GA beschreibt einen Programmzustand des ersten Steuerprogramms A. Der Programmzustand des ersten Steuerprogramms A entspricht dem globalen Zustand des ersten Steuerprogramms A und umfasst sämtliche Information, die zum Ausführen des ersten Steuerprogramms A benötigt wird. Darüber hinaus umfasst der globale Zustand des ersten Steuerprogramms A sämtliche Information bezüglich des Automatisierungssystems 100 und beschreibt den Zustand, in dem sich das durch das erste Steuerprogramm A zyklisch angesteuerte Automatisierungssystem 100 befindet.

In einem ersten Lese-/Schreibschritt kann der erste ausführbare Code PA Informationen aus dem ersten Datenelement GA lesen bzw. Informationen in das erste Datenelement GA schreiben. Das zweite Datenelement GB beschreibt einen Programmzustand des zweiten Steuerprogramms B und umfasst sämtliche Information, die zum Ausführen des zweiten Steuerprogramms B benötigt wird.

Zum Zeitpunkt der Datenmigration wird das zweite Steuerprogramm B nicht ausgeführt, und das zweite Datenelement GB umfasst daher keine Information bezüglich des Zustands des Automatisierungssystems 100. Zum Zeitpunkt der Datenmigration sind im zweiten Datenelement GB alle Objekte gespeichert, die zum Ausführen des zweiten Steuerprogramms B und zum Steuern des Automatisierungssystems 100 benötigt werden. Die einzelnen Objekte sind aber lediglich mit einem Initialwert initiiert.

Nach Datenmigration des im ersten Datenelement GA gespeicherten globalen Zustands des ersten Steuerprogramms A in das zweite Datenelement GB umfasst das zweite Datenelement sämtliche Information, die zum Ausführen des zweiten Steuerprogramms B benötigt wird. Darüber hinaus umfasst das zweite Datenelement GB nach erfolgreicher Datenmigration des globalen Zustands des ersten Steuerprogramms A die Information bezüglich des Zustands, in dem sich das Automatisierungssystem 100 zum Zeitpunkt vor der durchgeführten Datenmigration befand, insbesondere zum Zeitpunkt des zuletzt ausgeführten Steuerzyklus. In einem zweiten Lese-/Schreibschritt kann der zweite ausführbare Code PB des zweiten Steuerprogramms B Daten in das zweite Datenelement GB schreiben bzw. Daten aus dem zweiten Datenelement GB lesen.

Zum Aktualisieren des ersten Steuerprogramms A durch das zweite Steuerprogramm B mit simultaner Datenmigration des Programmzustands des ersten Steuerprogramms A gemäß dem erfindungsgemäßen Verfahren zum Aktualisieren eines Steuerprogramms eines Automatisierungssystems 100 mit Datenmigration eines Programmzustands des Steuerprogramms wird in einem ersten Ersetzungsschritt 202 der erste ausführbare Code PA des ersten Steuerprogramms A durch den zweiten ausführbaren Code PB des zweiten Steuerprogramms B ersetzt. Darüber hinaus wird ein Wert des ersten Datenelements GA, der den Programmzustand des ersten Steuerprogramms A, insbesondere den Globalzustand des ersten Steuerprogramms A und des Automatisierungssystems 100 beschreibt, in einem Migrationsschritt 261 auf das zweite Datenelement GB abgebildet.

Durch die Abbildung des Werts des ersten Datenelements GA auf das zweite Datenelement GB im Migrationsschritt 261 wird der Programmzustand des ersten Steuerprogramms A bzw. der globale Zustand des ersten Steuerprogramms A und des Automatisierungssystems 100, der durch den Wert des ersten Datenelements GA beschrieben ist, in das zweite Datenelement GB gespeichert. Nach erfolgreicher Datenmigration im Migrationsschritt 261 beschreibt damit das zweite Datenelement GB den Programmzustand des ersten Steuerprogramms A und damit den Globalzustand des ersten Steuerprogramms A und des Automatisierungssystems 100.

Nach erfolgreichem Ersetzen des ersten ausführbaren Codes PA durch den zweiten ausführbaren Code PB im ersten Ersetzungsschritt 202 und der erfolgreichen Datenmigration des globalen Zustands des ersten Steuerprogramms A bzw. des Automatisierungssystems 100 in das zweite Datenelement GB des zweiten Steuerprogramms B im Migrationsschritt 261 ist das zweite Steuerprogramm B durch die Steuerung 101 des Automatisierungssystems 100 ausführbar und kann auf den globalen Zustand des ersten Steuerprogramms A bzw. des Automatisierungssystems 100 zum Zeitpunkt des zuletzt ausgeführten Steuerzyklus zugreifen, sodass das Automatisierungssystem 100 durch das zweite Steuerprogramm B im Zustand zum Zeitpunkt des zuletzt ausgeführten Steuerzyklus angesteuert werden kann.

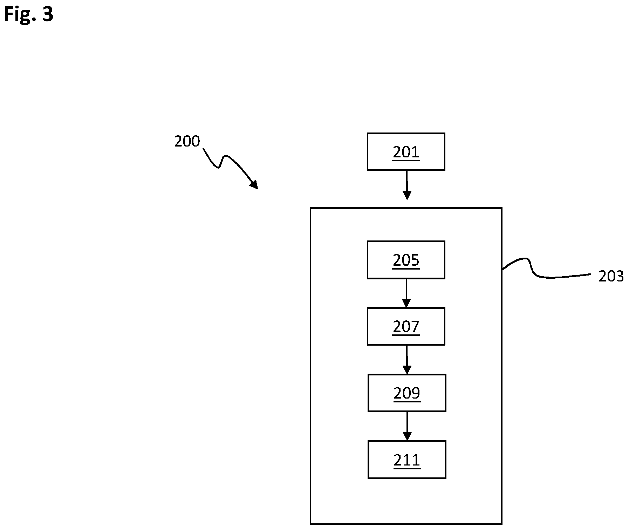

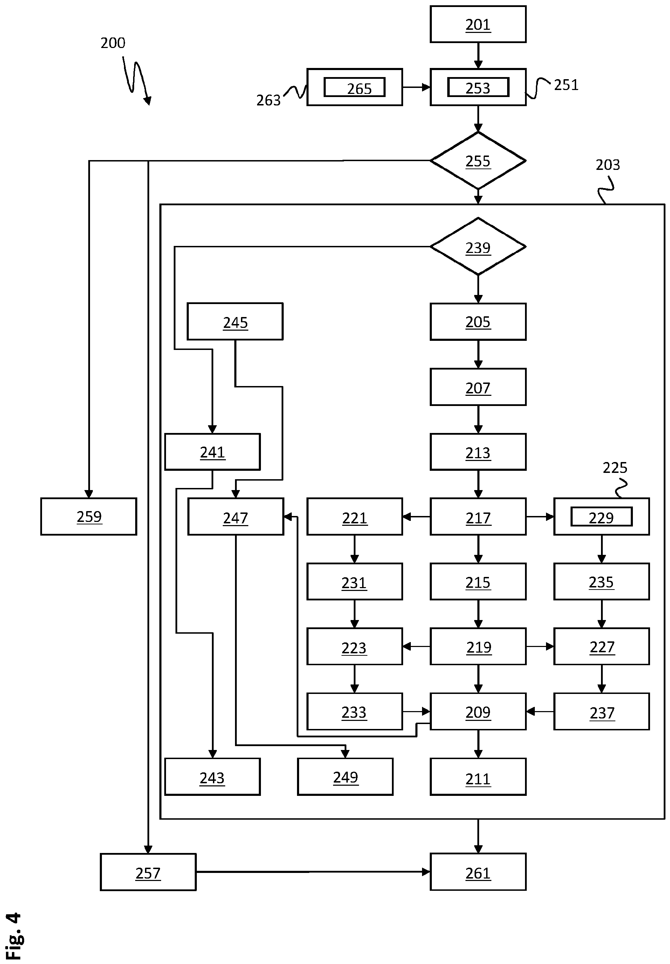

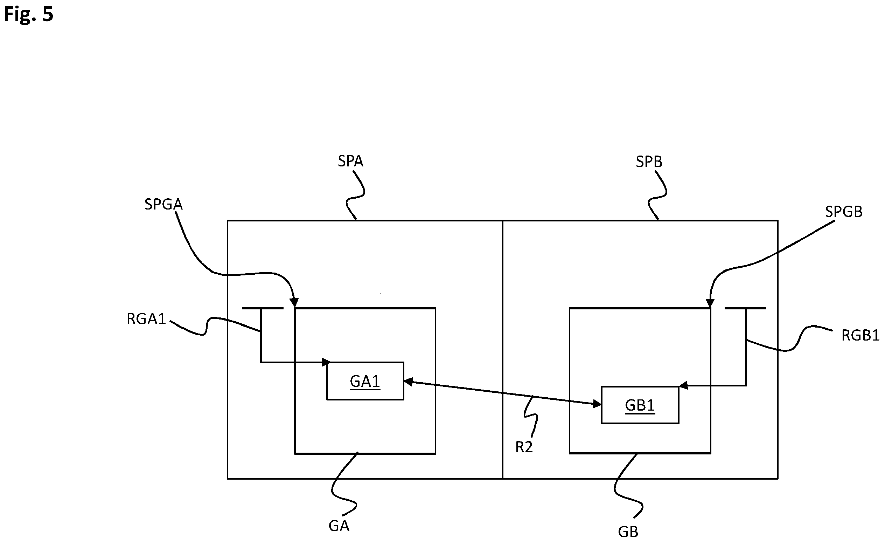

Die Beschreibung des in den Fig. 3 und Fig. 4 dargestellten Verfahrens 200 wird unter Berücksichtigung der in den Fig. 5 bis Fig. 9 gezeigten Objekten vorgenommen.

Das Verfahren 200 in Fig. 3 und Fig. 4 bezieht sich auf ein Automatisierungssystem 100 gemäß Fig. 1 und einen Datenmigrationsprozess gemäß Fig. 2, soll aber nicht hierauf beschränkt sein.

Fig. 3 zeigt ein Flussdiagramm eines Verfahrens 200 zur Datenmigration eines Zeigerelements in einem Automatisierungssystem 100 gemäß einer Ausführungsform.

In der Ausführungsform des Verfahrens 200 zur Datenmigration eines Zeigerelements im Zuge einer Datenmigration eines Programmzustands eines Steuerprogramms eines Automatisierungssystems 100 in Fig. 3 umfasst eine Steuerung 101 des Automatisierungssystems 100 ein erstes Steuerprogramm A und ein zweites Steuerprogramm B, wobei das erste Steuerprogramm A ein erstes Datenelement GA umfasst, das einen Programmzustand des ersten Steuerprogramms A beschreibt und wenigstens ein erstes Zeigerelement Z1 von einem ersten Zeigertyp umfasst, das ein erstes Zeigerobjekt ZO1 referenziert, und wobei das zweite Steuerprogramm B ein zweites Datenelement GB umfasst, das einen Programmzustand des zweiten Steuerprogramms B beschreibt und wenigstens ein zweites Zeigerelement Z2 von einem zweiten Zeigertyp umfasst, das eingerichtet ist, ein zweites Zeigerobjekt ZO2 zu referenzieren.

Das Verfahren 200 umfasst die Verfahrensschritte:
Identifizieren des ersten Zeigerelements Z1 und des zweiten Zeigerelements Z2 als über eine erste Relation R1 zueinander assoziierte Zeigerelemente in einem ersten Zeigeridentifikationsschritt 201,
Abbilden des ersten Zeigerelements Z1 auf das zweite Zeigerelement Z2 in einem Zeigermigrationsschritt 203, wobei der Zeigermigrationsschritt 203 umfasst:
   Identifizieren des vom ersten Zeigerelement Z1 referenzierten ersten Zeigerobjekts ZO1 in einem ersten Objektidentifikationsschritt 205,
   Identifizieren eines mit dem ersten Zeigerobjekt ZO1 assoziierten Objekts als das zweite Zeigerobjekt ZO2 in einem zweiten Objektidentifikationsschritt 207,
   Ermitteln einer absoluten Speicheradresse des zweiten Zeigerobjekts ZO2 in einem ersten Adressenermittlungsschritt 209, und
   Schreiben der ermittelten Speicheradresse des zweiten Zeigerobjekts ZO2 als Wert des zweiten Zeigerelements Z2 in das zweite Zeigerelement Z2 in einem ersten Zeigerspeicherschritt 211.

Zum Abbilden des ersten Datenzeigerelements Z1 auf das zweite Zeigerelement Z2 wird in einem ersten Zeigeridentifikationsschritt 201 eine erste Relation R1 zwischen dem ersten Zeigerelement Z1 und dem zweiten Zeigerelement Z2 identifiziert. Das erste Zeigerelement Z1 und das zweite Zeigerelement Z2 sind über die erste Relation R1 zueinander assoziiert, wenn das erste Zeigerelement Z1 und das zweite Zeigerelement Z2 identisch benannt sind. Darüber hinaus können das erste Zeigerelement Z1 und das zweite Zeigerelement Z2 über die erste Relation R1 zueinander assoziiert sein, wenn im zweiten Steuerprogramm B eine solche Relation explizit definiert ist. Die Relation R1 zwischen dem ersten Zeigeelement Z1 und dem zweiten Zeigerelement Z2 impliziert, dass das erste Zeigerelement Z1 im ersten Steuerprogramm A und das zweite Zeigerelement Z2 im zweiten Steuerprogramm B eine identische Funktion und Rolle übernehmen. In einer Datenmigration des ersten Datenelements GA auf das zweite Datenelement GB zur Migration des durch das erste Datenelement GA dargestellten globalen Zustands des ersten Steuerprogramms A müssen das erste Zeigerelement Z1 und das zweite Zeigerelement Z1 somit aufeinander abgebildet werden, um die Information des ersten Datenelements GA auf das zweite Datenelement GB abzubilden.

Darauffolgend wird in einem Zeigermigrationsschritt 203 das erste Zeigerelement Z1 auf das zweite Zeigerelement Z2 abgebildet.

Hierzu wird in einem ersten Objektidentifikationsschritt 205 ein vom ersten Zeigerelement Z1 referenziertes erstes Zeigerobjekt ZO1 identifiziert.

Nach Identifikation des ersten Zeigerobjekts ZO1 wird in einem zweiten Objektidentifikationsschritt 207 ein mit dem ersten Zeigerobjekt ZO1 assoziiertes Objekt als das zweite Zeigerobjekt ZO2 des zweiten Zeigerelements Z2 identifiziert. Durch die Identifikation des mit dem ersten Zeigerobjekt ZO1 assoziierten Objekts als zweites Zeigerobjekt ZO2 ist gewährleistet, dass das mit dem ersten Zeigerobjekt ZO1 assoziierte Objekt durch das zweite Zeigerelement Z2 referenziert werden kann.

Nach Identifikation des zweiten Zeigerobjekts ZO2 wird in einem ersten Adressenermittlungsschritt 209 eine Speicheradresse des zweiten Zeigerobjekts ZO2 ermittelt und in einem ersten Zeigerspeicherschritt 211 die ermittelte Speicheradresse des zweiten Zeigerobjekts ZO2 im zweiten Zeigerelement Z2 gespeichert. Durch die Speicherung der ermittelten Speicheradresse des zweiten Zeigerobjekts ZO2 im zweiten Zeigerelement Z2 ist das zweite Zeigerelement Z2 eingerichtet, das zweite Zeigerobjekt ZO2 zu referenzieren. Dadurch, dass das zweite Zeigerobjekt ZO2 mit dem ersten Zeigerobjekt ZO1 des ersten Zeigerelements Z1 assoziiert ist, ist gewährleistet, dass nach abgeschlossener Datenmigration das zweite Zeigerelement Z2 ein Objekt referenziert, das dem ersten Zeigerobjekt ZO1 entspricht. Eine Assoziation zwischen dem ersten Zeigerobjekt ZO1 und dem zweiten Zeigerobjekt ZO2 besteht beispielsweise, wenn beide Zeigerobjekte identisch sind. In diesem Fall referenziert das erste Zeigerelement Z1 und das zweite Zeigerelement Z2 jeweils dasselbe Objekt. Darüber hinaus können das erste Zeigerobjekt ZO1 und das zweite Zeigerobjekt ZO2 zueinander assoziiert sein, wenn beispielsweise das erste Zeigerobjekt ZO1 ein Objekt des ersten Datenelements GA und das zweite Zeigerobjekt ZO2 ein Objekt des zweiten Datenelements GB sind, die jeweils über eine Relation zueinander assoziiert sind, wobei die Relation besteht, wenn beide Objekte gleichbenannt sind bzw. im zweiten Steuerprogramm B eine derartige Relation explizit definiert ist.

Nach Abschluss des Zeigermigrationsschritts 203 ist der Wert des ersten Zeigerelements Z1 auf das zweite Zeigerelement Z2 abgebildet und das zweite Zeigerelement Z2 referenziert ein zum ersten Zeigerobjekt ZO1 assoziiertes zweites Zeigerobjekt ZO2. Bei einem folgenden Ausführen des zweiten Steuerprogramms B unter Berücksichtigung des zweiten Datenelements GB ist somit gewährleistet, dass durch das zweite Zeigerelement Z2 ein Objekt referenziert wird, das dem ersten Zeigerobjekt ZO1 entspricht bzw. im Kontext des zweiten Steuerprogramms B eine Rolle oder Funktion übernimmt, die der Rolle und Funktion des ersten Zeigerobjekts ZO1 im Kontext des ersten Steuerprogramms A entspricht.

Fig. 4 zeigt ein Flussdiagramm eines Verfahrens 200 zur Datenmigration eines Zeigerelements in einem Automatisierungssystem 100 gemäß einer weiteren Ausführungsform.

Die in Fig.4 gezeigte Ausführungsform des Verfahrens 200 baut auf die in Fig. 3 gezeigte Ausführungsform auf und umfasst alle Verfahrensschritte der in Fig. 3 gezeigten Ausführungsformen. Die zur Fig. 3 beschriebenen Verfahrensschritte werden im Folgenden nicht weiter erläutert.

Zum Vorgehen werden zunächst die verschiedenen Verfahrensschritte innerhalb des Zeigermigrationsschritts 203 näher erläutert. Im Folgenden wird zunächst der Fall beschrieben, dass das erste Datenelement GA und das zweite Datenelement GB jeweils in einem ersten Speicherbereich SPA und einem zweiten Speicherbereich SPB gespeichert sind und jeweils vom Datentyp eines Verbundtyps sind und das erste Datenelement GA wenigstens ein erstes Datenunterelement GA1 und das zweite Datenelement GB wenigstens ein zweites Datenunterelement GB1 umfassen. Das erste Datenunterelement GA1 und das zweite Datenunterelement GB1 sind über eine zweite Relation R2 zueinander assoziiert. Hierzu wird unter anderem auf die Fig. 5 verwiesen.

Ferner referenziert das erste Zeigerelement Z1 das erste Datenunterelement GA1 des ersten Datenelements GA und im ersten Objektidentifikationsschritt 205 wurde somit das erste Datenunterelement GA1 als erstes Zeigerobjekt ZO1 des ersten Zeigerelements Z1 identifiziert. Das zweite Zeigerelement Z2 referenziert das zweite Datenunterelement GB1 des zweiten Datenelements GB und im zweiten Objektidentifikationsschritt 207 wurde entsprechend das zweite Datenunterelement GB1 als zweites Zeigerobjekt ZO2 identifiziert.

Darauffolgend wird in einem ersten Zeigeradressenermittlungsschritt 213 eine erste relative Speicheradresse RGA1 des ersten Datenunterelements GA1 ermittelt. Die erste relative Speicheradresse RGA1 schreibt eine Speicheradresse des ersten Datenunterelements GA1 im ersten Speicherbereich SPA des ersten Datenelements GA relativ zu einem ersten Speicherplatz SPGA des ersten Elements GA. Das erste Datenelement GA ist im ersten Speicherbereich SPA als ein zusammenhängendes Datenelement gespeichert und belegt einen zusammenhängenden Speicherbereich innerhalb des ersten Speicherbereichs SPA.

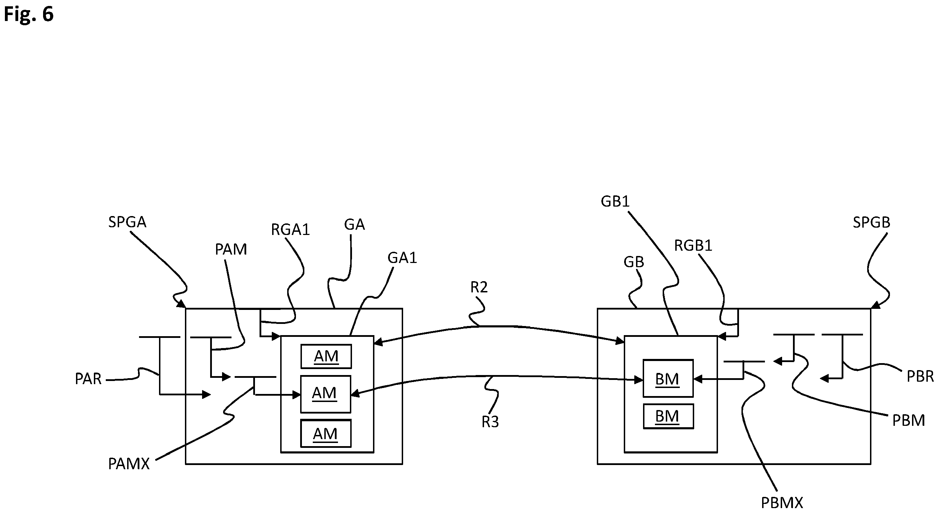

Hierauf folgend wird in einem dritten Zeigeradressenermittlungsschritt 217 eine erste relative Zeigeradresse PAR des ersten Zeigerelements Z1 ermittelt. Die erste relative Zeigeradresse PAR des ersten Zeigerelements Z1 schreibt einen vom ersten Zeigerelement Z1 referenzierten Speicherplatz innerhalb des Speicherbereichs des ersten Datenelements GA relativ zur ersten relativen Speicheradresse RGA1 des ersten Datenunterelements GA1. Zur Erläuterung der ersten relativen Speicheradresse PAR wird auf Fig. 6 und den entsprechenden Beschreibungsteil verwiesen.

Im Folgenden werden drei verschiedene Fälle betrachtet. Der erste Fall betrifft die Konstellation, dass das erste Datenunterelement GA1 und das zweite Datenunterelement GB1 jeweils vom Datentyp eines Skalartyps sind. In einem solchen Fall referenzieren sowohl das erste Zeigerelement Z1 als auch das zweite Zeigerelement Z2 jeweils den ersten Speicherplatz des als Skalartyp gespeicherten ersten Datenunterelements GA1 und den ersten Speicherplatz des zweiten Datenunterelements GB1. Dieser Fall wird im Flussdiagramm in Fig. 4 durch den mittleren Strang ausgehend vom dritten Zeigeradressenermittlungsschritt 217 beschrieben.

Der zweite Fall behandelt die Konstellation, dass sowohl das erste Datenunterelement GA1 als auch das zweite Datenunterelement GB1 vom Datentyp eines Verbundtyps sind und das erste Datenunterelement GA1 eine erste Komponente AM und das zweite Datenunterelement GB1 eine zweite Komponente BM aufweisen. In der vorliegenden Ausführungsform referenziert das erste Zeigerelement Z1 die erste Komponente AM des ersten Datenunterelements GB1 und das zweite Zeigerelement Z2 referenziert die zweite Komponente BM des zweiten Datenunterelements GB1. Der zweite Fall ist im Flussdiagramm in Fig. 4 durch den linken Strang ausgehend vom dritten Zeigeradressenermittlungsschritt 217 beschrieben.

Der dritte Fall beschreibt die Konstellation, dass das erste Datenunterelement GA1 und das zweite Datenunterelement GB1 jeweils von einem Datentyp eines Feldtyps sind und das erste Datenunterelement GA1 ein erstes Element AE und das zweite Datenunterelement GB1 ein zweites Element BE umfassen. In der vorliegenden Ausführungsform referenziert das erste Zeigerelement Z1 das erste Element AE des ersten Datenunterelements GA1 und das zweite Zeigerelement Z2 referenziert das zweite Element BE des zweiten Datenunterelements GB1. Der dritte Fall ist im Flussdiagramm in Fig. 4 im rechten Strang ausgehend vom dritten Zeigeradressenermittlungsschritt 217 dargestellt.

In dem Fall, in dem das erste Datenunterelement GA1 und das zweite Datenunterelement GB1 vom Skalartyp sind und das erste Zeigerelement Z1 und das zweite Zeigerelement Z2 einen Erstspeicherplatz des ersten Datenunterelements GA1 und des zweiten Datenunterelements GB1 referenzieren, wird in einem zweiten Zeigeradressenermittlungsschritt 215 eine zweite relative Speicheradresse RGB1 des zweiten Datenunterelements GB1 ermittelt. Die zweite relative Speicheradresse RGB1 beschreibt eine Speicheradresse des zweiten Datenunterelements GB1 innerhalb eines Speicherbereichs des zweiten Datenelements GB relativ zum ersten Speicherplatz SPGB des zweiten Datenelements GB. Analog zum ersten Datenelement GA ist das zweite Datenelement GB als ein zusammenhängendes Element im zweiten Speicherbereich SPB gespeichert und weist einen ersten Speicherplatz des vom zweiten Datenelement GB belegten Speicherbereichs auf.

Darauffolgend wird in einem vierten Zeigeradressenermittlungsschritt 219 auf Basis der ersten relativen Zeigeradresse PAR eine zweite relative Zeigeradresse PBR des zweiten Zeigerelements Z2 ermittelt. Die zweite relative Zeigeradresse PBR eines zweiten Zeigerelements Z2 beschreibt einen Speicherplatz innerhalb des Speicherbereichs des zweiten Datenelements GB relativ zur zweiten relativen Speicheradresse RGB1 des zweiten Datenunterelements GB1.

Für den ersten Fall, bei dem das erste Zeigerelement Z1 einen ersten Speicherplatz des ersten Datenunterelements GA1, das vom Datentyp eines Skalartyps ist, referenziert und bei dem das zweite Zeigerelement Z2 einen ersten Speicherplatz des zweiten Datenunterelements GB1 referenziert, das ebenfalls vom Datentyp eines Skalartyps ist, sind die erste relative Zeigeradresse PAR und die zweite relative Zeigeradresse PBR vom Wert 0, da durch das erste Zeigerelement Z1 ein Speicherplatz referenziert ist, der durch die erste relative Speicheradresse RGA1 des ersten Datenunterelements GA1 beschrieben ist, und das zweite Zeigerelement Z2 eine Speicheradresse referenziert, die durch die zweite relative Speicheradresse RGB1 des zweiten Datenunterelements GB1 beschrieben ist.

Im ersten Adressenermittlungsschritt 209 wird somit eine absolute Speicheradresse des zweiten Datenunterelements GB1 auf Basis der zweiten relativen Speicheradresse RGB1 des zweiten Datenunterelements GB1 und der absoluten Speicheradresse des ersten Speicherplatzes SPGB des zweiten Datenelements GB ermittelt. Die absolute Speicheradresse des ersten Speicherplatzes SPGB des zweiten Datenelements GB ist beim Durchführen der Datenmigration des Zeigerelements bekannt. Darüber hinaus ist die Struktur des zweiten Datenelements GB bekannt, sodass durch die ermittelte zweite relative Speicheradresse RGB1 des zweiten Datenunterelements GB1 und der bekannten absoluten Speicheradresse des ersten Speicherplatzes SPGB des zweiten Datenelements GB die zweite relative Speicheradresse RGB1 in eine absolute Speicheradresse umgewandelt werden kann.

Abschließend wird die ermittelte absolute Speicheradresse des zweiten Datenunterelements GB1 als Wert des zweiten Zeigerelements Z2 im ersten Zeigerspeicherschritt 211 gespeichert.

Im zweiten Fall, in dem das erste Datenunterelement GA1 und das zweite Datenunterelement GB1 jeweils von einem Verbundtyp sind und das erste Datenunterelement GA1 eine erste Komponente AM und das zweiten Datenunterelement GB1 eine zweite Komponente BM aufweisen, die jeweils über eine dritte Relation R3 zueinander assoziiert sind, wird in einem ersten Komponentenadressenermittlungsschritt 221 auf Basis der ersten relativen Zeigeradresse PAR eine erste relative Komponentenadresse PAM mit der ersten Komponente AM ermittelt. Die erste relative Komponentenadresse PAM beschreibt eine Speicheradresse im Speicherbereich des ersten Datenelements GA der ersten Komponente AM relativ zur relativen Speicheradresse des ersten Datenunterelements GA1. Hierzu wird auf Fig. 6 und den entsprechenden Beschreibungsteil verwiesen.

Ferner wird in einem fünften Zeigeradressenermittlungsschritt 231 auf Basis der ersten relativen Zeigeradresse PAR und der ersten relativen Komponentenadresse PAM eine erste relative Zeigerteiladresse PAMX ermittelt. Die erste relative Zeigerteiladresse PAMX beschreibt einen Speicherplatz innerhalb des von der ersten Komponente AM belegten Speicherbereichs innerhalb des Speicherbereichs des ersten Datenelements GA. In der vorliegenden Ausführungsform wird der Fall beschrieben, dass das erste Zeigerelement Z1 in die erste Komponente AM hineinzeigt und so eine Speicheradresse referenziert, die von der ersten relativen Komponentenadresse PAM abweicht. Für den Fall, dass das erste Zeigerelement Z1 den ersten Speicherplatz des von der ersten Komponente AM belegten Speicherbereichs referenziert, ergibt die erste relative Zeigerteiladresse den Wert 0.

Ferner wird in einem zweiten Komponentenadressenermittlungsschritt 223 auf Basis der ersten relativen Komponentenadresse PAM eine zweite relative Komponentenadresse PBM der zweiten Komponente BM ermittelt. In die Ermittlung der zweiten relativen Komponentenadresse PAM geht die im zweiten Adressenermittlungsschritt 215 ermittelte zweite relative Speicheradresse RGB1 und die im vierten Zeigeradressenermittlungsschritt 219 ermittelte zweite relative Zeigeradresse PBR ein. Die zweite relative Komponentenadresse beschreibt eine Speicheradresse im Speicherbereich des zweiten Datenelements GB der zweiten Komponente BM relativ zur zweiten relativen Speicheradresse RGB1 des zweiten Datenunterelements GB1.

Ferner wird in einem sechsten Zeigeradressenermittlungsschritt 233 auf Basis der ersten relativen Zeigerteiladresse PAMX, der zweiten relativen Zeigeradresse PBR und der zweiten relativen Komponentenadresse PBM eine zweite relative Zeigerteiladresse PMBX ermittelt. Die zweite relative Zeigerteiladresse PBMX bezeichnet einen Speicherplatz im Speicherbereich des zweiten Datenelements GB relativ zur zweiten relativen Komponentenadresse PBM. Innerhalb des Speicherbereichs des zweiten Datenelements GB beschreibt die zweite relative Zeigerteiladresse PBMX eine Speicheradresse, die der Speicheradresse innerhalb des Speicherbereichs des ersten Datenelements GA entspricht, die durch das erste Zeigerelement Z1 referenziert wird. Die zweite relative Zeigerteiladresse PBMX beschreibt eine Speicheradresse innerhalb des Speicherbereichs der zweiten Komponente BM innerhalb des Speicherbereichs des zweiten Datenelements GB. Für den Fall, dass das erste Zeigerelement Z1 den ersten Speicherplatz der ersten Komponente AM referenziert, ergibt die zweite relative Zeigerteiladresse PBMX den Wert 0.

Auf Basis der zweiten relativen Zeigerteiladresse PBMX, der zweiten relativen Komponentenadresse PBM, der zweiten relativen Speicheradresse RPGB1 des zweiten Datenunterelements GB1 und der absoluten Speicheradresse des ersten Speicherplatzes SPGB des zweiten Datenelements GB wird im ersten Adressenermittlungsschritt 209 eine absolute Speicheradresse innerhalb des Speicherbereichs der zweiten Komponenten BM ermittelt, die durch das zweite Zeigerelement Z2 referenziert wird. Die ermittelte durch das zweite Zeigerelement Z2 referenzierte Speicheradresse im Speicherbereich der zweiten Komponente BM entspricht innerhalb des Speicherbereichs des zweiten Datenelements GB der Speicheradresse im Speicherbereich des ersten Datenelements GA, die durch das erste Zeigerelement Z1 referenziert ist.

Die im ersten Adressenermittlungsschritt 209 ermittelte absolute Speicheradresse innerhalb des Speicherbereichs der zweiten Komponente BM wird im ersten Zeigerspeicherschritt 211 im zweiten Zeigerelement Z2 als zu referenzierende Speicheradresse des zweiten Zeigerobjekts ZO2 gespeichert.

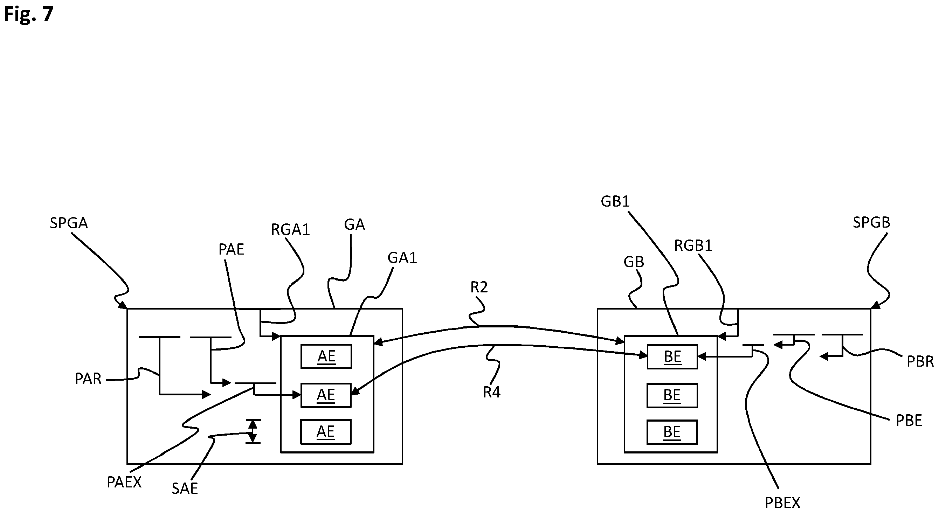

Im dritten Fall, in dem das erste Datenunterelement GA1 und das zweite Datenunterelement GB1 vom Datentyp eines Feldtyps sind und das erste Datenunterelement GA1 eine Mehrzahl von ersten Elementen AE umfasst und das zweite Datenunterelement GB1 eine Mehrzahl von zweiten Elementen BE umfasst, von denen mindestens ein erstes Element AE und ein zweites Element BE über eine vierte Relation R4 zueinander assoziiert sind, wird in einem ersten Elementadressenermittlungsschritt 225 eine erste relative Elementadresse PAE des ersten Elements AE, die durch das erste Zeitelement Z1 referenziert wird, bestimmt. Die erste relative Elementadresse PAE schreibt eine Speicheradresse im Speicherbereich des ersten Datenelements GA des referenzierten ersten Elements AE relativ zu ersten relativen Speicheradresse RGA1 des ersten Datenunterelements GA1. Zur Erläuterung der ersten relativen Elementadresse PAE wird auf Fig. 7 und den entsprechenden Beschreibungsteil verwiesen.

Zum Bestimmen der ersten relativen Elementadresse PAE wird in einem Elementgrößenermittlungsschritt 229 eine erste Elementgröße SAE der ersten Elemente AE des ersten Datenunterelements GA1 ermittelt. Die erste Elementgröße SAE beschreibt hierbei einen Speicherbereich, der durch ein erstes Element AE belegt ist. Auf Basis der ermittelten ersten Elementgröße SAE und der ersten relativen Zeigeradresse PAR wird das durch das erste Zeigerelement Z1 referenzierte erste Element AE identifiziert.

Ferner wird in einem siebten Zeigeradressenermittlungsschritt 235 auf Basis der relativen Zeigeradresse PAR und der ersten relativen Elementadresse PAE eine dritte relative Zeigerteiladresse PAEX ermittelt. Die dritte relative Zeigerteiladresse PAEX beschreibt eine vom ersten Zeigerelement Z1 referenzierte Speicheradresse innerhalb des Speicherbereichs des ersten Elements AE. Wird durch das erste Zeigerelement Z1 ein erster Speicherplatz des ersten Elements AE referenziert, ergibt die erste relative Zeigerteiladresse PAMX den Wert 0.

Ferner wird in einem zweiten Elementadressenermittlungsschritt 227 auf Basis der ersten relativen Elementadresse PAE eine zweite relative Elementadresse PBE des zweiten Elements BE ermittelt. Die zweite relative Elementadresse PBE beschreibt eine Speicheradresse des mit dem durch das erste Zeigerelement Z1 referenzierten ersten Elements AE über die vierte Relation R4 assoziierten zweiten Elements BE im Speicherbereich des zweiten Datenelements GB. In die Ermittlung der zweiten relativen Elementadresse PBE geht die im zweiten Zeigeradressenermittlungsschritt 215 ermittelte zweite relative Speicheradresse RGB1 des zweiten Datenunterelements GB1 und die im vierten Zeigeradressenermittlungsschritt 219 ermittelte zweite relative Zeigeradresse PBR ein.

Ferner wird in einem achten Zeigeradressenermittlungsschritt 237 auf Basis der dritten relativen Zeigerteiladresse PAEX, der zweiten relativen Zeigeradresse PBR und der zweiten relativen Elementadresse PBE eine vierte relative Zeigerteiladresse PBEX ermittelt. Die vierte relative Zeigerteiladresse PBEX beschreibt eine Speicheradresse innerhalb des Speicherbereichs des zweiten Datenelements GB, die innerhalb eines Speicherbereichs des zweiten Elements BE liegt. Die durch die vierte relative Zeigerteiladresse PBEX beschriebene Speicheradresse entspricht im Speicherbereich des zweiten Datenelements GB der durch das erste Zeigerelement Z1 referenzierten Speicheradresse im Speicherbereich des ersten Datenelements GA.

Ferner wird auf Basis der vierten relativen Zeigerteiladresse PBEX, der zweiten relativen Elementadresse PBE, der zweiten relativen Speicheradresse RGB1, des zweiten Datenunterelements GB1 und der absoluten Speicheradresse des ersten Speicherplatzes SPGB des zweiten Datenelements GB eine absolute Speicheradresse ermittelt, die im zweiten Speicherbereich SPB der durch das erste Zeigerelement Z1 referenzierten Speicheradresse im ersten Speicherbereich SPA entspricht.

In einem vierten Fall wird in einem zweiten Zeigeridentifikationsschritt 245 ein drittes Zeigerelement Z3 identifiziert, das weder vom ersten Datenelement GA noch vom zweiten Datenelement GB umfasst ist. Das dritte Zeigerelement Z3 ist somit weder ein Objekt des ersten Datenelements GA noch des zweiten Datenelements GB. Das dritte Zeigerelement Z3 ist somit kein Objekt des ersten Steuerprogramms A und kein Objekt des zweiten Steuerprogramms B. Das dritte Zeigerelement Z3 kann beispielsweise in einem anderen Speicherbereich des Speichers SP gespeichert sein und ein Objekt eines weiteren Programms sein.

Das dritte Zeigerelement Z3 referenziert ein drittes Zeigerobjekt ZO3. Das dritte Zeigerobjekt ZO3 ist ein Objekt des ersten Datenelements GA und ist im Speicherbereich des ersten Datenelements GA gespeichert. Das dritte Zeigerobjekt ZO3 kann beispielsweise ein erstes Datenunterelement GA1 oder eine erste Komponente AM bzw. ein erstes Element AE eines ersten Datenunterelements GA1 des ersten Datenelements GA sein. Ferner umfasst das zweite Datenelement GB ein Objekt, das mit dem dritten Zeigerobjekt ZO3 assoziiert ist. Beispielsweise kann dies ein zweites Datenunterelement GB1 oder eine zweite Komponente BM oder ein zweites Element BE eines zweiten Datenunterelements GB1 sein und über eine entsprechende zweite Relation R2, dritte Relation R3 oder vierte Relation R4 mit dem dritten Zeigerobjekt ZO3 assoziiert sein.

Nach Identifikation des dritten Zeigerelements Z3 wird in einem zweiten Adressenermittlungsschritt 247 eine Speicheradresse des mit dem dritten Zeigerobjekt ZO3 assoziierten Objekts des zweiten Datenelements GB ermittelt. Abhängig davon, ob es sich beim dritten Zeigerobjekt ZO3 um ein erstes Datenunterelement GA1, eine erste Komponente AM oder ein erstes Element AE handelt und somit das mit dem dritten Zeigerobjekt ZO3 assoziierte Objekt des zweiten Datenelements GB ein zweites Datenunterobjekt GB1, eine zweite Komponente BM oder ein zweites Element BE ist, wird die Speicheradresse des mit dem dritten Zeigerobjekt ZO3 assoziierten Objekts des zweiten Datenelements GB gemäß den oben beschriebenen Schritten zur Ermittlung einer Speicheradresse eines referenzierten zweiten Datenunterelements GB1, einer referenzierten zweiten Komponente BM oder eines referenzierten zweiten Elements BE ermittelt. Die im erste Adressenermittlungsschritt 209 ermittelte Information wird im zweiten Adressenermittlungsschritt 247 berücksichtigt.

Ferner wird in einem dritten Zeigerspeicherschritt 249 die ermittelte Speicheradresse des mit dem dritten Zeigerobjekt ZO3 assoziierten Objekts des zweiten Datenelements GB als Wert im dritten Zeigerelement Z3 gespeichert. Hierdurch ist gewährleistet, dass das dritte Zeigerelement Z3 nach erfolgreicher Datenmigration das mit dem dritten Zeigerobjekt ZO3 assoziierte Objekt des zweiten Datenelements GB referenziert.

In einem fünften Fall referenziert ein erstes Zeigerelement Z1, das ein Objekt des ersten Datenelements GA ist, ein erstes Zeigerobjekt ZO1, das weder ein Objekt des ersten Datenelements GA noch ein Objekt des zweiten Datenelements GB ist. Das erste Zeigerobjekt ZO1 kann somit in einem anderen Speicherbereich des Speichers SP gespeichert sein. Das erste Zeigerobjekt ZO1 ist somit kein Objekt des ersten Steuerprogramms A bzw. des zweiten Steuerprogramms B. Ferner umfasst das zweite Datenelement GB ein zweites Zeigerelement Z2, das über eine erste Relation R1 mit dem ersten Zeigerelement Z1 assoziiert ist.

In einem Objektüberprüfungsschritt 239 wird überprüft, ob das erste Zeigerobjekt ZO1 ein Objekt des ersten Datenelements GA ist. Für den Fall, dass im Objektüberprüfungsschritt 239 festgestellt wird, dass das erste Zeigerobjekt ZO1 ein Objekt des ersten Datenelements GA ist, wird das Verfahren gemäß den oben beschriebenen Schritten durchgeführt.

Wird im Objektüberprüfungsschritt 239 hingegen identifiziert, dass das erste Zeigerobjekt ZO1 kein Objekt des ersten Datenelements GA ist, wird in einem dritten Objektidentifikationsschritt 241 das zweite Zeigerobjekt ZO2 des zweiten Zeigerelements Z2 als das erste Zeigerobjekt ZO1 identifiziert. Das zweite Zeigerobjekt ZO2 wird somit mit dem ersten Zeigerobjekt ZO1 gleichgesetzt. Da das erste Zeigerobjekt ZO1 kein Element des ersten Datenelementes GA ist, muss bei einer Datenmigration des ersten Datenelements GA auf das zweite Datenelement GB das erste Zeigerobjekt ZO1 nicht migriert werden, und das erste Zeigerobjekt ZO1 bleibt von der Datenmigration unberührt und behält seinen ursprünglichen Wert. Im Zuge der Datenmigration des ersten Datenelements GA auf das zweite Datenelement GB muss hingegen sichergestellt werden, dass das mit dem ersten Zeigerelement Z1 über die erste Relation R1 assoziierte zweite Zeigerelement Z2 nach erfolgreicher Datenmigration das erste Zeigerobjekt ZO1 referenziert. Dies wird darüber erreicht, dass das erste Zeigerobjekt ZO1 mit dem zweiten Zeigerobjekt ZO2 gleichgesetzt wird.

In einem zweiten Zeigerspeicherschritt 243 wird der Wert des ersten Zeigerelements Z1, der die Speicheradresse des ersten Zeigerobjekts ZO1 umfasst, im zweiten Zeigerelement Z2 gespeichert. Zum Zeitpunkt der Durchführung des Verfahrens 200 ist die Speicheradresse des ersten Zeigerobjekts ZO1 bekannt und bleibt durch die Datenmigration unverändert, sodass eine aufwendige Bestimmung der Speicheradresse des zweiten Zeigerobjekts ZO2 ausbleibt und die Speicheradresse des ersten Zeigerobjekts ZO1 unverändert übernommen werden kann.

Neben dem Zeigermigrationsschritt 203, der mit der vorangegangenen Erläuterung beschrieben ist, umfasst das Verfahren 200 ferner einen Funktionsgenerierungsschritt 251. Im Funktionsgenerierungsschritt 251 wird eine erste Zeigermigrationsfunktion ZMIG1 generiert, die eingerichtet ist, gemäß den im Zeigermigrationsschritt 203 angeführten Verfahrensschritten das erste Zeigerelement Z1 auf das zweite Zeigerelement Z2 abzubilden. Ferner wird im Funktionsgenerierungsschritt 251 eine zweite Zeigermigrationsfunktion ZMIG2 generiert, die eingerichtet ist, den zweiten Adressenermittlungsschritt 247 und den dritten Zeigerspeicherschritt 249 zum Speichern der Speicheradresse des mit dem dritten Zeigerobjekt ZO3 assoziierten Objekts des zweiten Datenelements GB im dritten Zeigerelement Z3 durchzuführen.

Ferner umfasst der Funktionsgenerierungsschritt 251 einen Typidentifikationsschritt 253, in dem ein Zeigertyp des ersten Zeigerelements Z1 und ein Zeigertyp des zweiten Zeigerelements Z2 bzw. ein Zeigertyp des dritten Zeigerelements Z3 identifiziert werden. Auf Basis der identifizierten Zeigertypen des ersten Zeigerelements Z1, des zweiten Zeigerelements Z2 oder des dritten Zeigerelements Z3 werden die erste Zeigermigrationsfunktion ZMIG1 bzw. die zweite Zeigermigrationsfunktion ZMIG2 generiert. Die erste Zeigermigrationsfunktion ZMIG1 und die zweite Zeigermigrationsfunktion ZMIG2 sind nicht auf eine Migration eines bestimmten ersten Zeigerelements Z1, auf ein bestimmtes zweites Zeigerelement Z2 bzw. auf eine Datenmigration eines bestimmten dritten Zeigerelements Z3 beschränkt, sondern sind eingerichtet, beliebige Zeigerelemente der jeweiligen identifizierten Zeigertypen aufeinander abzubilden. Durch die generierten Zeigermigrationsfunktionen kann eine beliebige Anzahl von Zeigerelementen der identifizierten Zeigertypen aufeinander abgebildet werden. Für die Datenmigration mehrerer Zeigerelemente können die generierten Zeigerfunktionen beliebig oft nacheinander aufgerufen werden.

In einem ersten Überprüfungsschritt 255 wird ferner überprüft, ob im zweiten Funktionsgenerierungsschritt 251 die erste Zeigermigrationsfunktion ZMIG1 und die zweite Zeigermigrationsfunktion ZMIG2 generiert werden konnten. Konnte die erste Zeigermigrationsfunktion ZMIG1 nicht generiert werden, so kann in einem Initialisierungsschritt 257 das zweite Zeigerelement Z2 auf einen Initialwert gesetzt werden. Hierdurch kann erreicht werden, dass trotz fehlgeschlagener Datenmigration des ersten Zeigerelements Z1 das zweite Zeigerelement Z2 dennoch mit einem gültigen Zahlenwert versehen werden kann.

Alternativ kann bei fehlgeschlagener Generierung der ersten Zeigermigrationsfunktion in einem Terminierungsschritt 259 die Migration des ersten Zeigerelements Z1 auf das zweite Zeigerelement Z2 abgebrochen werden. Dies kann vorteilhaft sein, wenn eine Steuerung des Automatisierungssystems 100 auf Basis des zweiten Steuerprogramms B unter Berücksichtigung des zweiten Datenelements GB für ein zweites Zeigerelement Z2, das auf einen Initialwert gesetzt wurde, zu einer Fehlfunktion führen würde.

Neben dem Funktionsgenerierungsschritt 251 umfasst das Verfahren 200 ferner einen Generierungsschritt 263, in dem eine erste Migrationsfunktion MIG1 zum Abbilden des ersten Datenelements GA auf das zweite Datenelement GB generiert wird. Durch eine Ausführung der ersten Migrationsfunktion MIG1 kann der Wert des ersten Datenelements GA, der den globalen Zustand des ersten Steuerprogramms A und des durch das erste Steuerprogramm A gesteuerten Automatisierungssystems 100 beschreibt, auf das zweite Datenelement GB übertragen werden. Der Generierungsschritt 263 umfasst ferner einen Identifikationsschritt 265, in dem ein Datentyp des ersten Datenelements GA und ein Datentyp des zweiten Datenelements GB identifiziert wird. Die erste Migrationsfunktion MIG1 wird auf Basis der identifizierten Datentypen des ersten Datenelements GA und des zweiten Datenelements GB generiert. Die erste Migrationsfunktion MIG1 ist somit nicht auf das Abbilden eines ersten Datenelements GA auf ein bestimmtes zweites Datenelement GB beschränkt, sondern ist eingerichtet, beliebige Daten des Datentyps des ersten Datenelements GA auf beliebige Daten des Datentyps des zweiten Datenelements GB abzubilden.

Nach erfolgreicher Generierung der ersten Migrationsfunktion MIG1 mit dem Generierungsschritt 263 kann in einem Migrationsschritt 261 durch Ausführen der ersten Migrationsfunktion MIG1 das erste Datenelement GA auf das zweite Datenelement GB abgebildet werden und somit eine Datenmigration des im ersten Datenelement GA gespeicherten globalen Zustands des ersten Steuerprogramms A und des durch das erste Steuerprogramm A gesteuerten Automatisierungssystems 100 auf das zweite Datenelement GB abgebildet werden. Nach erfolgreicher Datenmigration des ersten Datenelements GA auf das zweite Datenelement GB kann das Automatisierungssystem 100 auf Basis des zweiten Steuerprogramms B unter Berücksichtigung des zweiten Datenelements GB angesteuert werden. Nach erfolgreicher Datenmigration kann das zweite Steuerprogramm B somit auf die übertragenen Zahlenwerte der Objekte des ersten Datenelements GA durch Zugriff auf die entsprechenden Objekte des zweiten Datenelements GB zugreifen.

Die Datenmigration des ersten Datenelements GA auf das zweite Datenelement GB umfasst die oben beschriebene Datenmigration der ersten Zeigerelemente Z1 des ersten Datenelements GA auf die zweiten Zeigerelemente Z2 des zweiten Datenelements GB bzw. die Datenmigration eines dritten Zeigerelements Z3 gemäß den Verfahrensschritten des Zeigermigrationsschritts 203.

Konnte im Funktionsgenerierungsschritt 251 eine erste Zeigermigrationsfunktion ZMIG1 nicht generiert werden, so kann ein entsprechendes zweites Zeigerelement Z2 im zweiten Datenelement GB nach erfolgreicher Datenmigration des ersten Datenelements GA auf das zweite Datenelement GB mit einem im Initialisierungsschritt 257 initialisierten Initialwert versehen sein.

Fig. 5 zeigt eine schematische Darstellung einer Bestimmung einer Speicheradresse eines Zeigerobjekts in einer Datenmigration eines Zeigerelements in einem Automatisierungssystem 100 gemäß einer Ausführungsform.

Die Fig. 5 bis 7 dienen dazu, die im Zeigermigrationsschritt 203 ermittelten Werte zwecks besseren Verständnisses zu illustrieren. In den Fig. 5 bis 7 sind schematisch Speicherbereiche des Speichers SP dargestellt, in denen Datenobjekte gespeichert sind. Die Größe der dargestellten Datenobjekte stellt einen durch das jeweilige Datenobjekt belegten Speicherbereich dar. Größer dargestellte Objekte belegen demzufolge einen größeren Speicherbereich. Einzelne Speicherplätze innerhalb des belegten Speicherbereichs sind nicht dargestellt. Ein erster Speicherplatz eines durch ein Objekt belegten Speicherbereichs befindet sich jeweils an einer oberen Kante des dargestellten Objekts. Die dargestellten Objekte belegen im Speicher SP jeweils einen zusammenhängenden lückenlosen Speicherbereich.

In Figur 5 sind der erste Speicherbereich SPA und der zweite Speicherbereich SPB des Speichers SP dargestellt. Im ersten Speicherbereich SPA ist das erste Datenelement GA dargestellt. In dem zweiten Speicherbereich SPB ist das zweite Datenelement GB dargestellt. Sowohl das erste Datenelement GA als auch das zweite Datenelement GB sind als zusammenhängende Datenstrukturen dargestellt und belegen jeweils einen zusammenhängenden Speicherbereich im ersten Speicherbereich SPA und den zweiten Speicherbereich SPB. Das erste Datenelement GA umfasst ein erstes Datenunterelement GA1, das im Speicherbereich des ersten Datenelements GA angeordnet ist. Das zweite Datenelement GB umfasst ein zweites Datenunterelement GB1, das im Speicherbereich des zweiten Datenelements GB angeordnet ist. Der Speicherbereich des ersten Datenelements GA beginnt an einem ersten Speicherplatz SPGA des ersten Datenelements GA. Der Speicherbereich des zweiten Datenelements GB beginnt an einem ersten Speicherplatz SPGB des zweiten Datenelements GB. Das erste Datenunterelement GA1 ist in einem zusammenhängenden Bereich innerhalb des Speicherbereichs des ersten Datenelements GA angeordnet und weist einen Versatz zum ersten Speicherplatz SPGA des ersten Datenelements GA auf. Im Fig. 5 ist ferner eine erste relative Speicheradresse RGA1 des ersten Datenunterelements GA1 dargestellt. Die erste relative Speicheradresse RGA1 des ersten Datenunterelements GA1 beschreibt einen Abstand im Speicherbereich zwischen dem ersten Speicherplatz SPGA des ersten Datenelements GA und dem ersten Speicherplatz des durch das erste Datenunterelement GA1 belegten Speicherbereichs, der durch den abgebildeten Pfeil dargestellt ist. Die erste relative Speicheradresse RGA1 des ersten Datenunterelements GA1 entspricht dem Versatz des ersten Datenunterelements GA1.

Das zweite Datenelement GB weist analog einen ersten Speicherplatz SPGB des zweiten Datenelements GB auf. Das zweite Datenunterelement GB1 ist in einem zusammenhängenden Speicherbereich innerhalb des Speicherbereichs des zweiten Datenelements GB gespeichert. Das erste Datenunterelement GB1 weist analog einen Versatz zum ersten Speicherplatz SPGB des zweiten Datenelements GB auf. Eine zweite relative Speicheradresse RGB1 des zweiten Datenunterelements GB1 beschreibt einen Abstand im Speicherbereich zwischen dem ersten Speicherplatz SPGB des zweiten Datenelements GB und einem ersten Speicherplatz des zweiten Datenunterelements GB1, der durch den gekennzeichneten Pfeil dargestellt ist. Die zweite relative Speicheradresse RGB1 des zweiten Datenunterelements GB1 entspricht dem Versatz des zweiten Datenunterelements GB1. Das erste Datenunterelement GA1 und das zweite Datenunterelement GB1 weisen jeweils einen unterschiedlichen Abstand zum ersten Speicherplatz SPGA des ersten Datenelements GA und zum ersten Speicherplatz SPGB des zweiten Datenelements GB auf.

Fig. 6 zeigt eine schematische Darstellung einer Bestimmung einer Speicheradresse eines Zeigerobjekts in einer Datenmigration eines Zeigerelements in einem Automatisierungssystem 100 gemäß einer weiteren Ausführungsform.

In Fig. 6 ist das erste Datenunterelement GA1 vom Typ eines Verbundtyps und weist drei erste Komponenten AM auf, die im Speicherbereich des ersten Datenunterelements GA1 angeordnet sind. Das zweite Datenunterelement GB1 ist ebenfalls von einem Verbundtyp und weist zwei zweite Komponenten BM auf, die im Speicherbereich des zweiten Datenunterelements GB1 gespeichert sind. Das erste Datenunterelement GA1 und das zweite Datenunterelement GB1 sind über die zweite Relation R2 zueinander assoziiert. Die ersten Komponenten AM des ersten Datenunterelements GA1 weisen jeweils eine unterschiedliche Größe auf und belegen im Speicherbereich des ersten Datenunterelements GA1 einen unterschiedlich großen Speicherbereich. Die beiden zweiten Komponenten BM des zweiten Datenunterelements GB1 weisen ebenfalls eine unterschiedliche Größe auf und belegen unterschiedlich große Speicherbereiche im Speicherbereich des zweiten Datenunterelements GB1. Eine erste Komponente AM des ersten Datenunterelements GA1 und eine zweite Komponente BM des zweiten Datenunterelements GB1 sind über eine dritte Relation R3 zueinander assoziiert.

In Fig. 6 ist ferner eine erste relative Zeigeradresse PAR dargestellt. Die erste relative Zeigeradresse PAR markiert einen Speicherplatz im Speicherbereich der durch das erste Zeigerelement Z1 referenzierten ersten Komponente AM des ersten Datenunterelements GA1 relativ zur ersten relativen Speicheradresse RGA1 des ersten Datenunterelements GA1. In Fig. 6 ist die durch das erste Zeigerelement Z1 referenzierte erste Komponente AM die mittlere der drei dargestellten ersten Komponenten AM.

Die erste relative Zeigeradresse PAR kennzeichnet den Abstand im Speicherbereich zwischen der ersten relativen Speicheradresse RGA1 des ersten Datenunterelements GA1 zum referenzierten Speicherplatz innerhalb des Speicherbereichs der referenzierten ersten Komponente AM.

Ferner ist eine erste relative Komponentenadresse PAM dargestellt, die einen Abstand im Speicherbereich zwischen der ersten relativen Speicheradresse RGA1 des ersten Datenunterelements GA1 und dem ersten Speicherplatz der referenzierten ersten Komponente AM beschreibt. Zusätzlich ist eine erste relative Zeigerteiladresse PAMX dargestellt, die einen Abstand im Speicherbereich zwischen dem ersten Speicherplatz der referenzierten ersten Komponente AM bis zur durch das erste Zeigerelement Z1 referenzierten Speicheradresse im Speicherbereich der referenzierten ersten Komponente AM beschreibt. Die erste relative Zeigeradresse PAR ergibt sich aus einer Summe der ersten relativen Komponentenadresse PAM und der ersten relativen Zeigerteiladresse PAMX.

Ferner ist in Fig. 6 eine zweite relative Zeigeradresse PBR dargestellt, die einen Abstand zwischen der zweiten relativen Speicheradresse RGB1 des zweiten Datenunterelements GB1 und dem referenzierten Speicherplatz im Speicherbereich der referenzierten zweiten Komponente BM beschreibt. Ferner ist eine zweite relative Komponentenadresse PBM dargestellt, die einen Abstand im Speicherbereich zwischen der zweiten relativen Speicheradresse RGB1 des zweiten Datenunterelements GB1 und einem ersten Speicherplatz der referenzierten zweiten Komponente BM beschreibt. Ferner ist eine zweite relative Zeigerteiladresse PBMX dargestellt, die einen Abstand zwischen dem ersten Speicherplatz der zweiten Komponente BM und der durch die zweite relative Zeigeradresse PBR referenzierten Speicheradresse im Speicherbereich der referenzierten zweiten Komponente BM beschreibt. Die zweite relative Zeigeradresse PBR ergibt sich aus einer Summe aus der zweiten relativen Komponentenadresse PBM und der zweiten relativen Zeigerteiladresse PBMX.

Der durch die erste relative Zeigeradresse PAR gekennzeichnete Speicherplatz im Speicherbereich der referenzierten ersten Komponente AM entspricht innerhalb des Speicherbereichs des ersten Datenelements GA dem durch die zweite relative Zeigeradresse PBR gekennzeichneten Speicherplatz im Speicherbereich der referenzierten zweiten Komponente BM im Speicherbereich des zweiten Datenelements GB.

Fig. 7 zeigt eine schematische Darstellung einer Bestimmung einer Speicheradresse eines Zeigerobjekts in einer Datenmigration eines Zeigerelements in einem Automatisierungssystem 100 gemäß einer weiteren Ausführungsform.

In Fig. 7 sind das erste Datenunterelement GA1 und das zweite Datenunterelement GB1 jeweils als ein Feldtyp ausgebildet. Das erste Datenunterelement GA1 weist drei erste Elemente AE auf, und das zweite Datenunterelement GB1 weist ebenfalls drei zweite Elemente BE auf. Das erste Datenunterelement GA1 und das zweite Datenunterelement GB1 sind über eine zweite Relation R2 zueinander assoziiert. Ein erstes Element AE des ersten Datenunterelements GA1 und ein zweites Element BE des zweiten Datenunterelements GB1 sind über eine vierte Relation R4 zueinander assoziiert.

Jedes der dargestellten ersten Elemente AE weist eine erste Elementgröße SAE auf, die eine Größe des durch das erste Element AE belegten Speicherbereichs beschreibt. In Fig. 7 weisen alle dargestellten ersten Elemente AE eine identische erste Elementgröße SAE auf.

In Fig. 7 kennzeichnet die erste relative Zeigeradresse PAR einen Speicherplatz innerhalb des Speicherbereichs des durch ein erstes Zeigerelement Z1 referenzierten ersten Elements AE. Die erste relative Zeigeradresse PAR ergibt sich aus der Summe einer ersten relativen Elementadresse PAE, die einen Abstand im Speicherbereich zwischen der ersten relativen Speicheradresse RGA1 des ersten Datenunterelements GA1 und einem ersten Speicherplatz des referenzierten ersten Elements AE beschreibt, und einer dritten relativen Zeigerteiladresse PAEX, die einen Abstand im Speicherbereich zwischen dem ersten Speicherplatz des referenzierten ersten Elements AE und dem durch die erste relative Zeigeradresse PAR referenzierten Speicherplatz im Speicherbereich des referenzierten ersten Elements AE beschreibt.

Analog ist eine zweite relative Zeigeradresse PBR, eine zweite relative Elementadresse PBE und eine vierte relative Zeigerteiladresse PBEX dargestellt. Die zweite relative Zeigeradresse PBR ergibt sich aus einer Summe aus der zweiten relativen Elementadresse PBR und der vierten relativen Zeigerteiladresse PBEX. Der durch die erste relative Zeigeradresse PAR referenzierte Speicherplatz im Speicherbereich des referenzierten ersten Elements AE entspricht im Speicherbereich des ersten Datenelements GA dem durch die zweite Zeigeradresse PBR referenzierten Speicherplatz im Speicherbereich des referenzierten zweiten Elements BE im Speicherbereich des zweiten Datenelements GB.

Zum Bestimmen des durch das erste Zeigerelement Z1 referenzierten ersten Elements AE kann die erste relative Zeigeradresse PAR und die erste Elementgröße SAE herangezogen werden, und das referenzierte erste Element AE ergibt sich aus der Relation PAR/SAE + 1. Über die vierte Relation R4 ergibt sich aus dem bestimmten ersten Element AE das assoziierte zweite Element BE. Über die Bestimmung der zweiten relativen Zeigeadresse PBR lässt sich die Speicheradresse innerhalb des Speicherbereichs des über die vierte Relation R4 assoziierten zweiten Elements BE bestimmen, die der durch die erste relative Zeigeradresse PAR referenzierten Speicheradresse im Speicherbereich des durch das erste Zeigerelement Z1 referenzierten ersten Elements AE entspricht.

Die zu den Figuren 5 bis 7 beschriebenen Ausführungsformen dienen ausschließlich illustrativen Zwecken. Abweichungen in Bezug auf Anzahl und Ausgestaltung der dargestellten Objekte sind mitumfasst.

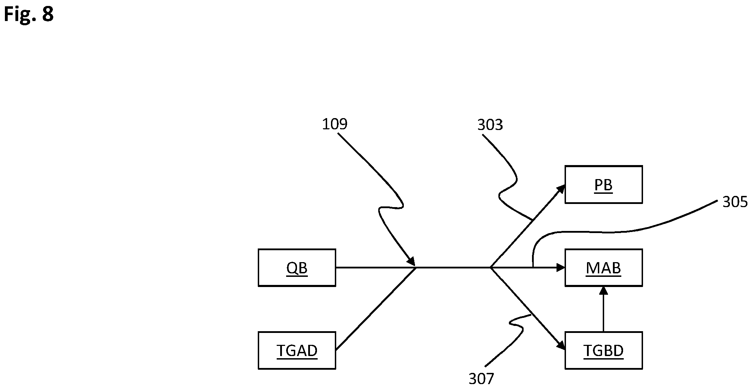

Fig. 8 zeigt eine schematische Darstellung eines Generierungsvorgangs eines zweiten Steuerprogramms B als eine aktualisierte Version eines ersten Steuerprogramms A eines Automatisierungssystems 100 gemäß einer Ausführungsform.

Gemäß der in Figur 8 dargestellten Ausführungsform berücksichtigt das Compilermodul 109 zum Generieren des zweiten Steuerprogramms B als aktualisierte Version des ersten Steuerprogramms A einen Quelltext QB des zweiten Steuerprogramms B. In einem Übersetzungsschritt 303 des Kompiliervorgangs übersetzt das Compilermodul 109 den Quelltext QB des zweiten Steuerprogramms B in einen ausführbaren Code PB des zweiten Steuerprogramms B, der von der Steuerung 101 des Automatisierungssystems 100 zum Steuern des Automatisierungssystems 100 auf Basis des zweiten Steuerprogramms B ausgeführt werden kann.

Im Kompiliervorgang berücksichtigt das Compilermodul 109 ferner eine Definition des ersten Datentyps TGAD. In der Definition des ersten Datentyps TGAD des ersten Datenelements GA sind der erste Datentyp des ersten Datenelements GA sowie alle Datentypen aller ersten Datenunterelemente GA1, aller ersten Komponenten AM, aller ersten Elemente AE aller ersten Datenunterelemente GA1 des ersten Datenelements GA definiert. Darüber hinaus sind in der Definition des ersten Datentyps TGAD alle Zeigertypen aller ersten Zeigerelement Z1 im ersten Datenelement GA definiert. Die Definition des ersten Datentyps TGAD umfasst somit alle Datentypen beziehungsweise Zeigertypen aller Objekte des ersten Datenelements GA.

Darüber hinaus erzeugt das Compilermodul 109 im Kompiliervorgang aus dem Quelltext QB des zweiten Steuerprogramms B in einem zweiten Erzeugungsschritt 307 eine Definition des zweiten Datentyps TGBD. Analog zur Definition des ersten Datentyps TGAD umfasst die Definition des zweiten Datentyps TGBD den Datentyp des zweiten Datenelements GB sowie alle Datentypen aller zweiten Datenunterelemente GB1, aller zweiten Komponenten MB, aller zweiten Elemente BE, sowie alle Zeigertypen aller zweiten Zeigerelemente Z2 des zweiten Datenelements GB. Analog zur Definition des ersten Datentyps TGAD umfasst die Definition des zweiten Datentyps TGBD alle Datentypen und Zeigertypen aller Objekte des zweiten Datenelements GB.

Ferner erzeugt das Compilermodul 109 im Kompiliervorgang in einem ersten Erzeugungsschritt 305 einen Migrationscode MAB. Der Migrationscode MAB umfasst alle ersten, zweiten, dritten und vierten Migrationsfunktionen, die zur Datenmigration des ersten Datenelements GA, der ersten Datenunterelement GA1, der ersten Komponenten AM und/oder der ersten Elemente AE auf das zweite Datenelement GB, die zweiten Datenunterelemente GB1, die zweiten Komponenten BM und/oder die zweiten Elemente AE dienen. Darüber hinaus umfasst der Migrationscode MAB alle ersten Zeigermigrationsfunktionen und zweiten Zeigermigrationsfunktionen, die zum Abbilden der ersten Zeigerelemente auf die zweiten Zeigerelemente beziehungsweise zur Migration der dritten Zeigerelemente benötigt werden. Zur Durchführung des ersten Erzeugungsschritts 305, womit der Funktionsgenerierungsschritt 251 und der Generierungsschritt 263 umfasst sind, berücksichtigt das Compilermodul 109 die Definition des ersten Datentyps TGAD und die im zweiten Erzeugungsschritt 307 erzeugte Definition des zweiten Datentyps TGBD.

Auf Basis der Definition des ersten Datentyps TGAD und des zweiten Datentyps TGBA werden durch das Compilermodul 109 im Generierungsschritt 263 die Migrationsfunktionen und im Funktionsgenerierungsschritt 251 die Zeigermigrationsfunktionen generiert.

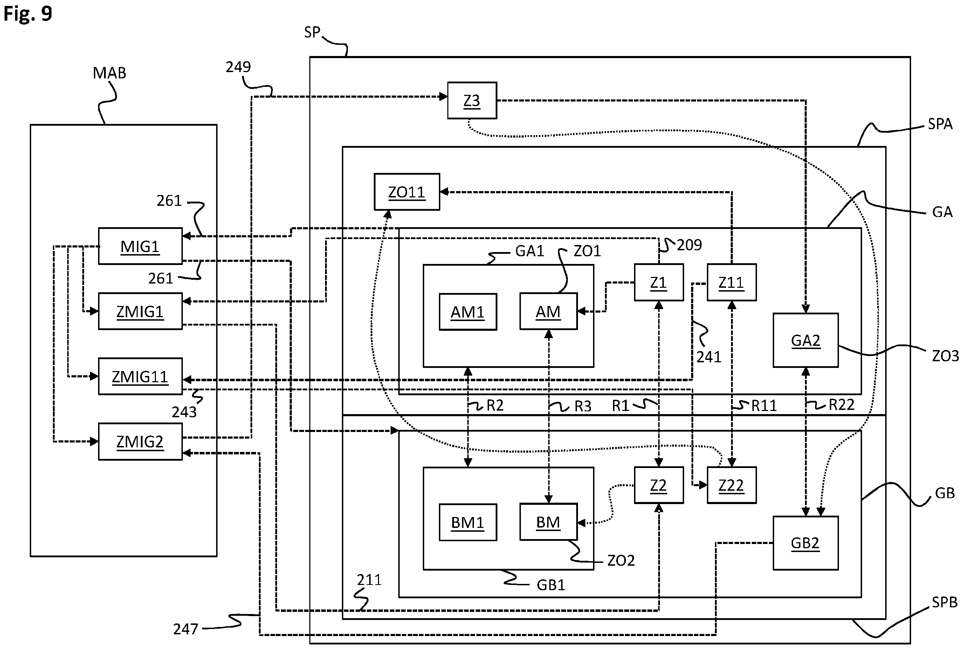

Fig. 9 zeigt eine schematische Darstellung eines Migrationsvorgangs von Zeigerelementen eines Steuerprogramms A eines Automatisierungssystems 100 gemäß einer weiteren Ausführungsform.

Fig. 9 illustriert eine Zuordnung der einzelnen Migrationsfunktionen und Zeigermigrationsfunktionen zu den jeweils zu migrierenden Objekten. Fig. 9 schematisiert ferner einen Migrationsvorgang des ersten Datenelements GA auf das zweite Datenelement GB inklusive einer Datenmigration von ersten Zeigerelementen Z1 des ersten Datenelements GA auf zweite Zeigerelemente Z2 des zweiten Datenelements GB.

Fig. 9 zeigt den ersten Speicherbereich SPA und den zweiten Speicherbereich SPB des Speichers SP. Im ersten Speicherbereich SPA ist das erste Datenelement GA gespeichert. Das erste Datenelement GA umfasst ein erstes Datenunterelement GA1 und ein weiteres erstes Datenunterelement GA2. Das erste Datenunterelement GA1 ist als ein Verbundtyp ausgebildet und umfasst eine erste Komponente AM und eine weitere erste Komponente AM1. Darüber hinaus fasst das erste Datenelement GA ein erstes Zeigerelemente Z1 und ein weiteres erstes Zeigerelement Z11.

Im zweiten Speicherbereich SPB ist das zweite Datenelement GB gespeichert. Das zweite Speicherelement GB umfasst ein zweites Datenunterelement GB1, das von einem Verbundtyp ist und eine zweite Komponenten BM und eine weitere zweite Komponente BM1 umfasst. Das zweite Datenelement GB umfasst ferner ein weiteres zweites Datenunterelement GB2. Ferner umfasst das zweite Datenelement GB ein zweites Zeigerelement Z2 und ein weiteres zweites Zeigerelement Z22.

Das erste Datenunterelement GA1 und das zweite Datenunterelement GB1 sind über eine zweite Relation R2 zueinander assoziiert. Die erste Komponente AM des ersten Datenunterelements GA1 und die zweite Komponente BM des zweiten Datenunterelements GB1 sind über eine dritte Relation R3 zueinander assoziiert. Das erste Zeigerelement Z1 ist mit dem zweiten Zeigerelement Z2 über eine erste Relation R1 assoziiert. Das weitere erste Zeigerelement Z11 ist über eine weitere erste Relation R11 mit dem weiteren zweiten Zeigerelement Z22 assoziiert. Das weitere erste Datenunterelement GA2 ist über eine weitere zweite Relation R22 mit dem weiteren zweiten Datenunterelement GB2 assoziiert.

Das erste Zeigerelement Z1 referenziert die erste Komponente AM des ersten Datenunterelements GA1 als ein erstes Zeigerobjekt ZO1. Im ersten Speicherbereich SPA ist ferner ein weiteres erstes Zeigerobjekt ZO11 angeordnet, das vom weiteren ersten Zeigerelement Z11 referenziert wird. Im Speicher SP außerhalb des ersten Speicherbereichs SPA und des zweiten Speicherbereichs SPB ist ferner ein drittes Zeigerelement Z3 angeordnet, das das weitere erste Datenunterelement GA2 des ersten Datenelements GA als ein drittes Zeigerobjekt ZO3 referenziert.

Ferner ist in Fig. 9 ein Migrationscode MAB dargestellt, der eine erste Migrationsfunktion MIG1, eine erste Zeigermigrationsfunktion ZMIG1, eine weitere erste Zeigermigrationsfunktion ZMIG11 und eine zweite Zeigermigrationsfunktion ZMIG2 umfasst.

Zur Datenmigration des ersten Datenelements GA wird die erste Migrationsfunktion MIG1 im Migrationsschritt 261 ausgeführt. Hierbei liest die erste Migrationsfunktion MIG1 den Wert des ersten Datenelements GA im ersten Speicherbereich SPA aus und speichert den ausgelesenen Wert im zweiten Speicherbereich SPB im zweiten Datenelement GB ab.

Im Zuge der Datenmigration des ersten Datenelements GA auf das zweite Datenelement GB werden das erste Zeigerelement Z1 auf das zweite Zeigerelement Z2, das weitere erste Zeigerelement Z11 auf das weitere zweite Zeigerelement Z22 abgebildet und das dritte Zeigerelement Z3 migriert.

Zum Abbilden des erstem Zeigerelements Z1, das die erste Komponente AM des ersten Datenunterelements GA1 referenziert, führt die erste Zeigermigrationsfunktion ZMIG1 den ersten Adressenermittlungsschritt 209 aus und ermittelt die Speicheradresse der zweiten Komponente BM, die über die dritte Relation R3 mit der durch das erste Zeigerelement Z1 referenzierten ersten Komponente AM des ersten Datenunterelements GA1 assoziiert ist. Nach Ermittlung der Speicheradresse der zweiten Komponente BM des zweiten Datenunterelements GB1 speichert die erste Zeigermigrationsfunktion ZMIG1 im ersten Zeigerspeicherschritt 211 die ermittelte Speicheradresse im zweiten Zeigerelement Z2 ab, das mit dem ersten Zeigerelement Z1 über die erste Relation R1 assoziiert ist. Hierdurch ist der Wert des ersten Zeigerelements Z1 auf das zweite Zeigerelement Z2 abgebildet, und das zweite Zeigerelement Z2 referenziert die zweite Komponente BM, die der durch das erste Zeigerelement Z1 referenzierten ersten Komponente AM entspricht.

Die Referenzierung eines ersten Zeigerobjekts ZO1 durch ein erstes Zeigerelement Z1 ist durch einen gestrichelten Pfeil gekennzeichnet. Die Referenzierung eines zweiten Zeigerobjekts ZO2 durch ein zweites Zeigerelement Z2, die nach erfolgreicher Migration des jeweiligen Zeigerelements generiert wurde, ist durch einen gepunkteten Pfeil gekennzeichnet.

Zur Datenmigration des Weiteren ersten Zeigerelements Z11 auf das weitere zweite Zeigerelement Z22 führt die weitere erste Zeigermigrationsfunktion ZMIG11 den dritten Objektidentifikationsschritt 241 aus und ermittelt das vom weiteren ersten Zeigerelement Z11 referenzierte weitere erste Zeigerobjekt ZO11. Das weitere erste Zeigerobjekt ZO11 ist kein Objekt des ersten Datenelements GA und außerhalb des Speicherbereichs des ersten Datenelements GA im ersten Speicherbereich SPA gespeichert. Zur Datenmigration des weiteren ersten Zeigerelements Z11 führt die weitere erste Zeigermigrationsfunktion ZMIG11 im dritten Objektidentifikationsschritt 241 eine Identifikation des vom weiteren ersten Zeigerelement Z11 referenzierten weiteren ersten Zeigerobjekts ZO11 als weiteres zweites Zeigerobjekt ZO22 des weiteren zweiten Zeigerelements Z22 aus. Darauffolgend speichert die weitere erste Zeigermigrationsfunktion ZMIG11 in einem zweiten Zeigerspeicherschritt 243 die ermittelte Speicheradresse des weiteren ersten Zeigerobjekts ZO11 als Speicheradresse des weiteren zweiten Speicherobjekts ZO22 im weiteren zweiten Zeigerelement Z22. Hierdurch ist erreicht, dass nach erfolgreicher Datenmigration das im ersten Speicherbereich SPA gespeicherte weitere erste Zeigerobjekt ZO11 durch das weitere zweite Zeigerelement ZO22 referenziert wird.

Zur Datenmigration des dritten Zeigerelements Z3, das außerhalb des ersten Speicherbereichs SPA und des zweiten Speicherbereichs SPB im Speicher SP gespeichert ist, führt die zweite Zeigermigrationsfunktion ZMIG2 den zweiten Adressenermittlungsschritt 247 durch und ermittelt die Speicheradresse des weiteren zweiten Datenunterelements GB2, das über die weitere zweite Relation R22 mit dem weiteren ersten Datenunterelement GA2 assoziiert ist, das durch das dritte Zeigerelement Z3 als drittes Zeigerobjekt ZO3 referenziert wird. Nach Ermittlung der Speicheradresse des weiteren zweiten Datenunterelements GB2 führt die zweite Zeigermigrationsfunktion ZMIG2 den dritten Zeigerspeicherschritt 249 aus und speichert die ermittelte Speicheradresse des weiteren zweiten Datenunterelements GB2 im dritten Zeigerelement Z3. Hierdurch referenziert nach erfolgreicher Datenmigration das dritte Zeigerelement Z3 das weitere zweite Datenunterelement GB2, das dem weiteren ersten Datenelement GA2 gemäß der weiteren zweiten Relation R22 entspricht.

Zur Durchführung der Datenmigration des ersten Datenelements GA auf das zweite Datenelement GB durch die erste Migrationsfunktion MIG1 kann die erste Migrationsfunktion MIG1 nacheinander die erste Zeigermigrationsfunktion ZMIG1, die weitere erste Zeigermigrationsfunktion ZMIG11 oder die zweite Zeigermigrationsfunktion ZMIG2 aufrufen, um die entsprechenden Zeigerelemente aufeinander abzubilden.

Alternativ zu dem in Fig. 9 gezeigten Beispiel können eine Mehrzahl von ersten Zeigermigrationsfunktionen ZMIG1 bzw. eine Mehrzahl von zweiten Zeigermigrationsfunktion ZMIG2 zur Datenmigration einer Mehrzahl von ersten Zeigerelementen, zweiten Zeigerelementen und dritten Zeigerelementen verwendet werden, die nacheinander zur Durchführung der Datenmigration aufrufbar sind. Darüber hinaus kann die erste Zeigermigrationsfunktion ZMIG1 bzw. die zweite Zeigermigrationsfunktion ZMIG2 eine Mehrzahl von Zeigermigrationsunterfunktionen umfassen, die ausgestaltet sind, die einzelnen Verfahrensschritte innerhalb des Zeigermigrationsschritts 203 auszuführen und beispielsweise die erste relative Zeigeradresse PAR, die zweite relative Zeigeradresse PBR, die erste relative Komponentenadresse PAM, die zweite relative Komponentenadresse PBM, die erste relative Zeigerteiladresse PAMX, die zweite relative Zeigerteiladresse PBMX, die erste relative Speicheradresse RGA1 oder die zweite relative Speicheradresse RGB1 zu bestimmen. Die einzelnen Zeigermigrationsunterfunktionen können von der ersten Zeigermigrationsfunktion ZMIG1 oder der zweiten Zeigermigrationsfunktion ZMIG2 zum Durchführen der jeweiligen Verfahrensschritte aufgerufen werden.

Zur vollständigen Datenmigration des ersten Datenelements GA auf das zweite Datenelement GB kann die erste Migrationsfunktion MIG1 ferner zweite Migrationsfunktionen MIG2, dritte Migrationsfunktionen MIG3 und vierte Migrationsfunktionen MIG4 aufrufen, um jeweils erste Datenunterelemente GA1 auf zweite Datenunterelement GB1, erste Komponenten AM auf zweite Komponenten BM und erste Elemente AE auf zweite Elemente BE abzubilden. Zwecks Übersichtlichkeit der Fig. 9 ist auf die Darstellung der weiteren Migrationsfunktionen verzichtet worden.

Das erfindungsgemäße Verfahren 200 kann auf ein erstes Datenelement GA und ein zweites Datenelement GB, die jeweils globale Zustände des ersten Steuerprogramms A und des zweiten Steuerprogramms B beschreiben und jeweils eine Mehrzahl von Objekten aufweisen, angewendet werden. Die Objekte des ersten Datenelements GA können von Verbundtypen, Feldtypen, Skalartypen oder Zeigertypen sein und jeweils gegebenenfalls eine komplexe Datenstruktur aufweisen. Objekte vom Verbundtyp können wiederum eine Mehrzahl von Komponenten aufweisen, die wiederum von einem Verbundtyp, einem Feldtyp, einem Skalartyp oder einem Zeigertyp sein können, und gegebenenfalls wiederum Komponenten oder Elemente aufweisen können. Eine Schachtelungstiefe ist durch das erfindungsgemäße Verfahren nicht beschränkt.

Analog können die Objekte des zweiten Datenelements GA von Verbundtypen, Feldtypen, Skalartypen oder Zeigertypen sein und jeweils gegebenenfalls eine komplexe Datenstruktur aufweisen. Objekte vom Verbundtyp können wiederum eine Mehrzahl von Komponenten aufweisen, die wiederum von einem Verbundtyp, einem Feldtyp, einem Skalartyp oder einem Zeigertyp sein können, und gegebenenfalls wiederum Komponenten oder Elemente aufweisen können. Eine Schachtelungstiefe ist durch das erfindungsgemäße Verfahren nicht beschränkt.

Das erfindungsgemäße Verfahren ist rekursiv anwendbar.

Zur Datenmigration eines ersten Zeigerelements Z1 des ersten Datenelements GA auf ein zweites Zeigerelement Z2 des zweiten Datenelements GB, wird das vom ersten Zeigerelement Z1 referenzierte erste Zeigerobjekt ZO1 identifiziert. Das erste Zeigerobjekt ZO1 kann ein beliebiges Objekt des ersten Datenelements GA1 sein. Insbesondere hat das erste Zeigerobjekt ZO1 eine Entsprechung in einem Objekt des zweiten Datenelements GB1 und ist über eine entsprechende Relation mit diesem Objekt assoziiert. Ziel des erfindungsgemäßen Verfahrens 200 ist es, die absolute Speicheradresse dieses Objekts des zweiten Datenelements GB1 zu ermitteln und in das zweite Zeigerelement Z2 zu schreiben, sodass eine Referenzierung des jeweiligen Objekts durch das zweite Zeigerelement Z2 ermöglicht ist.

Zum Zeitpunkt der Durchführung der Datenmigration ist die absolute Adresse des Objekts des zweiten Datenelements GB1 nicht bekannt, da das zweite Datenelement GB1 als zusammenhänge Einheit im zweiten Speicherbereich SPB gespeichert ist, ohne nähere Kenntnis über die absoluten Speicheradressen der Objekte des zweiten Datenelements GB1. Bekannt ist jedoch der erste Speicherplatz des zweiten Datenelements GB1, der die erste absolute Speicheradresse des durch das zweite Datenelement GB1 belegten Speicherbereich im zweiten Speicherbereich SPB ist.

Ferner ist eine interne Struktur des zweiten Datenelements GB1 bekannt, die beschreibt, wie die einzelnen Objekte innerhalb des zweiten Datenelements GB1 angeordnet sind.

Zur Bestimmung der absoluten Adresse des Objekts des zweiten Datenelements GB1, das mit dem ersten Zeigerobjekt ZO1 assoziiert ist, wird eine relative Adresse des ersten Zeigerobjekts ZO1 bestimmt. Die relative Adresse des ersten Zeigerobjekts erlaubt eine Verortung des ersten Zeigerobjekts ZO1 innerhalb des ersten Datenelements GA1. Auf Basis der relativen Adresse des ersten Zeigerobjekts ZO1 wird eine relative Adresse des mit dem ersten Zeigerobjekts ZO1 assoziierten Objekts des zweiten Datenelements GB1 bestimmt, wobei die relative Adresse des mit dem ersten Zeigerobjekts ZO1 assoziierten Objekts des zweiten Datenelements GB1 eine Verortung des Objekts im zweiten Datenelement GB1 erlaubt.

Auf Basis der relativen Adresse des mit dem ersten Zeigerobjekts ZO1 assoziierten Objekts des zweiten Datenelements GB1 wird darauffolgend unter Berücksichtigung des ersten Speicherplatzes des zweiten Datenelements GB1 eine absolute Adresse des Objekts des zweiten Datenelements GB1 bestimmt. Diese absolute Adresse dient dann als Adresse zur Referenzierung des Objekts durch das zweite Zeigerelement Z2 als zweites Zeigerobjekts ZO2.

Referenzierte Objekte können, wie oben dargelegt, beliebige Datentypen aufweisen.

Zur Datenmigration einer Mehrzahl von Zeigerelementen kann das erfindungsgemäße Verfahren mehrfach ausgeführt werden.

### Bezugszeichenliste

- 100: Automatisierungssystem
- 101: Steuerung
- 103: Masterteilnehmer
- 105: Slaveteilnehmer
- 107: Bussystem
- 109: Compilermodul

- A: erstes Steuerprogramm
- PA: erster ausführbarer Code
- MAB: Migrationscode
- SP: Speicher
- SPA: erster Speicherbereich
- GA: erstes Datenelement
- TGAD: Definition des ersten Datentyps
- GA1: erstes Datenunterelement
- GA2: weiteres erstes Datenunterelement
- AM: erste Komponente
- AM1: weitere erste Komponente
- AE: erstes Element
- BE: zweites Element
- B: zweites Steuerprogramm
- QB: Quelltext des zweiten Steuerprogramms
- PB: zweiter ausführbarer Code
- SPB: zweiter Speicherbereich
- GB: zweites Datenelement
- GB1: zweites Datenunterelement
- GB2: weiteres zweites Datenunterelement
- BM: zweite Komponente
- BM1: weitere zweite Komponente

- R1: erste Relation
- R11: weitere erste Relation
- R2: zweite Relation
- R22: weitere zweite Relation
- R3: dritte Relation
- R4: vierte Relation

- Z1: erstes Zeigerelement
- Z11: weiteres erstes Zeigerelement
- ZO1: erstes Zeigerobjekt
- ZO11: weiteres erstes Zeigerobjekt
- Z2: zweites Zeigerelement
- Z22: weiteres zweites Zeigerelement
- ZO2: zweites Zeigerobjekt
- Z3: drittes Zeigerelement
- ZO3: drittes Zeigerobjekt

- RGA1: erste relative Speicheradresse
- RGB1: zweite relative Speicheradresse
- PAR: erste relative Zeigeradresse
- PBR: zweite relative Zeigeradresse
- PAM: erste relative Komponentenadresse
- PBM: zweite relative Komponentenadresse
- PAMX: erste relative Zeigerteiladresse
- PBMX: zweite relative Zeigerteiladresse
- SAE: erste Elementgröße
- PAEX: dritte relative Zeigerteiladresse
- PBEX: vierte relative Zeigerteiladresse
- SPGA: erster Speicherplatz des ersten Datenelements
- SPGB: erster Speicherplatz des zweiten Datenelements

- ZMIG1: erste Zeigermigrationsfunktion
- ZMIG11: weitere erste Zeigermigrationsfunktion
- ZMIG2: zweite Zeigermigrationsfunktion

- MIG1: erste Migrationsfunktion

- 200: Verfahren
- 201: erster Zeigeridentifikationsschritt
- 202: Ersetzungsschritt
- 203: Zeigermigrationsschritt
- 205: erster Objektidentifikationsschritt
- 207: zweiter Objektidentifikationsschritt
- 209: erster Adressenermittlungsschritt
- 211: erster Zeigerspeicherschritt
- 213: erster Zeigeradressenermittlungsschritt
- 215: zweiter Zeigeradressenermittlungsschritt
- 217: dritter Zeigeradressenermittlungsschritt
- 219: vierter Zeigeradressenermittlungsschritt
- 221: erster Komponentenadressenermittlungsschritt
- 223: zweiter Komponentenadressenermittlungsschritt
- 225: erster Elementadressenermittlungsschritt
- 227: zweiter Elementadressenermittlungsschritt
- 229: Elementgrößenermittlungsschritt
- 231: fünfter Zeigeradressenermittlungsschritt
- 233: sechster Zeigeradressenermittlungsschritt
- 235: siebter Zeigeradressenermittlungsschritt
- 237: achter Zeigeradressenermittlungsschritt
- 239: Objektüberprüfungsschritt
- 241: dritter Objektidentifikationsschritt
- 243: zweiter Zeigerspeicherschritt
- 245: zweiter Zeigeridentifikationsschritt
- 247: zweiter Adressenermittlungsschritt
- 249: dritter Zeigerspeicherschritt
- 251: Funktionsgenerierungsschritt
- 253: Typidentifikationsschritt
- 255: erster Überprüfungsschritt
- 257: Initialisierungsschritt
- 259: Terminierungsschritt
- 261: Migrationsschritt
- 263: Generierungsschritt
- 265: Identifikationsschritt

- 303: Übersetzungsschritt
- 305: erster Erzeugungsschritt
- 307: zweiter Erzeugungsschritt

## Patentansprüche

1. Verfahren (200) zur Datenmigration eines Zeigerelements im Zuge einer Datenmigration eines Programmzustands eines Steuerprogramms eines Automatisierungssystems (100), wobei eine Steuerung (101) des Automatisierungssystems (100) ein erstes Steuerprogramm (A) und ein zweites Steuerprogramm (B) umfasst, wobei das erste Steuerprogramm (A) ein erstes Datenelement (GA) umfasst, das einen Programmzustand des ersten Steuerprogramms (A) beschreibt und wenigstens ein erstes Zeigerelement (Z1) von einem ersten Zeigertyp umfasst, das ein erstes Zeigerobjekt (ZO1) referenziert, wobei das zweite Steuerprogramm (B) ein zweites Datenelement (GB) umfasst, das einen Programmzustand des zweiten Steuerprogramms (B) beschreibt und wenigstens ein zweites Zeigerelement (Z2) von einem zweiten Zeigertyp umfasst, das eingerichtet ist, ein zweites Zeigerobjekt (ZO2) zu referenzieren, und wobei das erste Datenelement (GA) in einem ersten Speicherbereich (SPA) und das zweite Datenelement (GB) in einem zweiten Speicherbereich (SPB) der Steuerung (101) gespeichert sind, wobei das Verfahren (100) umfasst:
Identifizieren des ersten Zeigerelements (Z1) und des zweiten Zeigerelements (Z2) als über eine erste Relation (R1) zueinander assoziierte Zeigerelemente in einem ersten Zeigeridentifikationsschritt (201), wobei die erste Relation (R1) impliziert, dass das erste Zeigerelement (Z1) und das zweite Zeigerelement (Z2) im ersten Steuerprogramm (A) und im zweiten Steuerprogramm (B) jeweils identische Funktionen aufweisen,
Abbilden des ersten Zeigerelements (Z1) auf das zweite Zeigerelement (Z2) in einem Zeigermigrationsschritt (203), wobei der Zeigermigrationsschritt (203) umfasst:
Identifizieren des vom ersten Zeigerelement (Z1) referenzierten ersten Zeigerobjekts (ZO1) in einem ersten Objektidentifikationsschritt (205),
Identifizieren eines mit dem ersten Zeigerobjekt (ZO1) assoziierten Objekts als das zweite Zeigerobjekt (ZO2) in einem zweiten Objektidentifikationsschritt (207), Ermitteln einer Speicheradresse des zweiten Zeigerobjekts (ZO2) in einem ersten Adressenermittlungsschritt (209), und
Schreiben der ermittelten Speicheradresse des zweiten Zeigerobjekts (ZO2) als Wert des zweiten Zeigerelements (Z2) in das zweite Zeigerelement (Z2) in einem ersten Zeigerspeicherschritt (211).

2. Verfahren (200) nach Anspruch 1, wobei das erste Datenelement (GA) wenigstens ein erstes Datenunterelement (GA1) umfasst, wobei das zweite Datenelement (GB) wenigstens ein zweites Datenunterelement (GB1) umfasst, das mit dem ersten Datenunterelement (GA1) über eine zweite Relation (R2) assoziiert ist, wobei das erste Datenunterelement (GA1) dem ersten Zeigerobjekt (ZO1) entspricht und vom ersten Zeigerelement (Z1) referenziert wird, wobei das zweite Datenunterelement (GB1) dem zweiten Zeigerobjekt (ZO2) entspricht, und wobei der Zeigermigrationsschritt (203) umfasst:
Ermitteln einer ersten relativen Speicheradresse (RGA1) des ersten Datenunterelements (GA1) in einem ersten Zeigeradressenermittlungsschritt (213), wobei durch die erste relative Speicheradresse (RGA1) eine Speicheradresse des ersten Datenunterelements (GA1) innerhalb eines Speicherbereichs des ersten Datenelements (GA) relativ zu einem ersten Speicherplatz (SPGA) des ersten Datenelements (GA) beschrieben ist,
Ermitteln einer zweiten relativen Speicheradresse (RGB1) des zweiten Datenunterelements (GB1) in einem zweiten Zeigeradressenermittlungsschritt (215), wobei durch die zweite relative Speicheradresse (RGB1) eine Speicheradresse des zweiten Datenunterelements (GB1) innerhalb eines Speicherbereichs des zweiten Datenelements (GB) relativ zu einem ersten Speicherplatz (SPGB) des zweiten Datenelements (GB) beschrieben ist, und
Ermitteln einer absoluten Speicheradresse des zweiten Datenunterelements (GB1) auf Basis der zweiten relativen Speicheradresse (RGB1) des zweiten Datenunterelements (GB1) und des ersten Speicherplatzes (SPGB) des zweiten Datenelements (GB) in dem ersten Adressenermittlungsschritt (209).

3. Verfahren (200) nach Anspruch 2, wobei der Zeigermigrationsschritt (203) umfasst:
Ermitteln einer ersten relativen Zeigeradresse (PAR) des ersten Zeigerelements (Z1) in einem dritten Zeigeradressenermittlungsschritt (217), wobei durch die erste relative Zeigeradresse (PAR) des ersten Zeigerelements (Z1) ein vom ersten Zeigerelement (Z1) referenzierter Speicherplatz innerhalb des Speicherbereichs des ersten Datenelements (GA) relativ zu der ersten relativen Speicheradresse (RGA1) des ersten Datenunterelements (GA1) beschrieben ist,
Ermitteln auf Basis der ersten relativen Zeigeradresse (PAR) einer zweiten relativen Zeigeradresse (PBR) des zweiten Zeigerelements (Z2) in einem vierten Zeigeradressenermittlungsschritt (219), wobei durch die zweite relative Zeigeradresse (PBR) des zweiten Zeigerelements (Z2) ein Speicherplatz innerhalb des Speicherbereichs des zweiten Datenelements (GB) relativ zur zweiten relativen Speicheradresse (RGB1) des zweiten Datenunterelements (GB1) bestimmt ist, und wobei die zweite relative Zeigeradresse (PBR) in Relation zum zweiten Datenunterelement (GB1) der ersten relativen Zeigeradresse (PAR) in Relation zum ersten Datenunterelement (GA1) entspricht, und
Ermitteln einer absoluten Speicheradresse des zweiten Datenunterelements (GB1) auf Basis der zweiten relativen Zeigeradresse (PBR), der zweiten relativen Speicheradresse (RGB1) des zweiten Datenunterelements (GB1) und des ersten Speicherplatzes (SPGB) des zweiten Datenelements (GB) im zweiten Speicherbereich (SPB) im ersten Adressenermittlungsschritt (209).

4. Verfahren nach Anspruch 3, wobei der Zeigermigrationsschritt (203) umfasst:
falls das erste Datenunterelement (GA1) und das zweite Datenunterelement (GB1) jeweils von einem Verbundtyp sind, falls das erste Datenunterelement (GA1) wenigstens eine erste Komponente (AM) aufweist, falls das zweite Datenunterelement (GB1) wenigstens eine zweite Komponente (BM) aufweist, falls die erste Komponente (AM) und die zweite Komponente (BM) über eine dritte Relation (R3) assoziiert sind, und falls durch das erste Zeigerelement (Z1) die erste Komponente (AM) referenziert wird,
Ermitteln auf Basis der ersten relativen Zeigeradresse (PAR) einer ersten relativen Komponentenadresse (PAM) der ersten Komponente (AM) in einem ersten Komponentenadressenermittlungsschritt (221), wobei durch die erste relative Komponentenadresse (PAM) eine Speicheradresse im Speicherbereich des ersten Datenelements (GA) der ersten Komponente (AM) relativ zur ersten relativen Speicheradresse (RGA1) des ersten Datenunterelements (GA1) beschrieben ist, Ermitteln auf Basis der ersten relativen Komponentenadresse (PAM) einer zweiten relativen Komponentenadresse (PBM) der zweiten Komponente (BM) des zweiten Datenunterelements (GB1) in einem zweiten Komponentenadressenermittlungsschritt (223), wobei die zweite relative Komponentenadresse (PBM) eine Speicheradresse im Speicherbereich des zweiten Datenelements (GB) der zweiten Komponente (BM) relativ zur zweiten relativen Speicheradresse (RGB1) des zweiten Datenunterelements (GB1) beschreibt, und
Ermitteln einer absoluten Speicheradresse der zweiten Komponente (BM) des zweiten Datenunterelements (GB1) auf Basis der zweiten relativen Komponentenadresse (PBM), der zweiten relativen Speicheradresse (RGB1) des zweiten Datenunterelements (GB1) und des ersten Speicherplatzes (SPGB) des zweiten Datenelements (GB) im zweiten Speicherbereich (SPB) im ersten Adressenermittlungsschritt (209).

5. Verfahren nach Anspruch 3, wobei der Zeigermigrationsschritt (203) umfasst:
falls das erste Datenunterelement (GA1) und das zweite Datenunterelement (GB1) jeweils von einem Feldtyp ist, wobei die Feldtypen die gleiche Anzahl an Dimensionen haben, falls das erste Datenunterelement (GA1) eine Mehrzahl erster Elemente (AE) und das zweite Datenunterelement (GB1) eine Mehrzahl zweiter Elemente (BE) umfassen, falls wenigstens ein erstes Element (AE) und ein zweites Element (BE) über eine vierte Relation (R4) assoziiert sind, und falls durch das erste Zeigerelement (Z1) das erste Element (AE) referenziert ist,
Ermitteln einer ersten relativen Elementadresse (PAE) des durch das erste Zeigerelement (Z1) referenzierten ersten Elements (AE) in einem ersten Elementadressenermittlungsschritt (225), wobei durch die erste relative Elementadresse (PAE) eine Speicheradresse im Speicherbereich des ersten Datenelements (GA) des durch das erste Zeigerelement (Z1) referenzierten ersten Elements (AE) relativ zur ersten relativen Speicheradresse (RGA1) des ersten Datenunterelements (GA1) beschrieben ist,
Ermitteln auf Basis der ersten relativen Elementadresse (PAE) einer zweiten relativen Elementadresse (PBE) eines zweiten Elements (BE), das mit dem durch das erste Zeigerelement (Z1) referenzierten ersten Element (AE) über die vierte Relation (R4) assoziiert ist, in einem zweiten Elementadressenermittlungsschritt (227), wobei durch die zweite relative Elementadresse (PBE) eine Speicheradresse des zweiten Elements (BE) im zweiten Speicherbereich (SPB) relativ zur zweiten relativen Speicheradresse (RGB1) des zweiten Datenunterelements (GB1) beschrieben ist, und
Ermitteln einer absoluten Speicheradresse des zweiten Elements (BE) des zweiten Datenunterelements (GB1) auf Basis der zweiten relativen Elementadresse (PBE), der zweiten relativen Speicheradresse (RGB1) des zweiten Datenunterelements (GB1) und des ersten Speicherplatzes (SPGB) des zweiten Datenelements (GB) im zweiten Speicherbereich (SPB) im ersten Adressenermittlungsschritt (209).

6. Verfahren nach Anspruch 5, wobei der erste Elementadressenermittlungsschritt (225) umfasst:
Ermitteln einer ersten Elementgröße (SAE) der ersten Elemente (AE) des ersten Datenunterelements (GA1) in einem Elementgrößenermittlungsschritt (229), wobei die erste Elementgröße (SAE) eines ersten Elements (AE) einem vom ersten Element (AE) belegten Speicherplatz im Speicherbereich des ersten Datenelements (GA) entspricht,
Ermitteln des durch das erste Zeigerelement (Z1) referenzierten ersten Elements (AE) auf Basis der ersten relativen Zeigeradresse (PAR) und der ersten Elementgröße (SAE).

7. Verfahren nach Anspruch 4, wobei der Zeigermigrationsschritt (203) umfasst:
Ermitteln auf Basis der ersten relativen Zeigeradresse (PAR) und der ersten relativen Komponentenadresse (PAM) einer ersten relativen Zeigerteiladresse (PAMX) in einem fünften Zeigeradressenermittlungsschritt (231), wobei durch die erste relative Zeigerteiladresse (PAMX) der Speicherplatz im ersten Speicherbereich (SPA), der vom ersten Zeigerelement (Z1) referenziert wird, relativ zu der ersten relativen Komponentenadresse (PAM) der ersten Komponente (AM) des ersten Datenunterelements (GA1) beschrieben ist,
Ermitteln auf Basis der ersten relativen Zeigerteiladresse (PAMX), der zweiten relativen Zeigeradresse (PBR) und der zweiten relativen Komponentenadresse (PBM) einer zweiten relativen Zeigerteiladresse (PBMX) in einem sechsten Zeigeradressenermittlungsschritt (233), wobei durch die zweite relative Zeigerteiladresse (PBMX) ein Speicherplatz im Speicherbereich des zweiten Datenelements (GB) relativ zur zweiten relativen Komponentenadresse (PBM) bestimmt ist, und wobei die zweite relative Zeigerteiladresse (PBMX) in Relation zum zweiten Datenunterelement (GB1) der ersten relativen Zeigerteiladresse (PAMX) in Relation zum ersten Datenunterelement (GA1) entspricht, und
Ermitteln einer absoluten Speicheradresse der zweiten Komponente (BM) des zweiten Datenunterelements (GB1) auf Basis der zweiten relativen Zeigerteiladresse (PBMX), der zweiten relativen Komponentenadresse (PBM), der zweiten relativen Speicheradresse (RGB1) des zweiten Datenunterelements (GB1) und des ersten Speicherplatzes (SPGB) des zweiten Datenelements (GB) im Speicherbereich des zweiten Datenelements (GB) im ersten Adressenermittlungsschritt (209).

8. Verfahren nach Anspruch 5 oder 6, wobei der Zeigermigrationsschritt (203) umfasst:
Ermitteln auf Basis der ersten relativen Zeigeradresse (PAR) und der ersten relativen Elementadresse (PAE) einer dritten relativen Zeigerteiladresse (PAEX) in einem siebten Zeigeradressenermittlungsschritt (235), wobei durch die dritte relative Zeigerteiladresse (PAEX) der Speicherplatz, der vom ersten Zeigerelement (Z1) referenziert wird, relativ zu der ersten relativen Elementadresse (PAE) des ersten Elements (AE) des ersten Datenunterelements (GA1) beschrieben ist,
Ermitteln auf Basis der dritten relativen Zeigerteiladresse (PAEX) und der zweiten relativen Elementadresse (PBE) einer vierten relativen Zeigerteiladresse (PBEX) in einem achten Zeigeradressenermittlungsschritt (237), wobei durch die vierte relative Zeigerteiladresse (PBEX) ein Speicherplatz im Speicherbereich des zweiten Datenelements (GB) relativ zur zweiten relativen Elementadresse (PBE) bestimmt ist, und wobei die vierte relative Zeigerteiladresse (PBEX) in Relation zum zweiten Datenunterelement (GB1) der dritten relativen Zeigerteiladresse (PAEX) in Relation zum ersten Datenunterelement (GA1) entspricht, und
Ermitteln einer absoluten Speicheradresse des zweiten Elements (BE) des zweiten Datenunterelements (GB1) auf Basis der vierten relativen Zeigerteiladresse (PBEX), der zweiten relativen Elementadresse (PBE), , der zweiten relativen Zeigeradresse (PBR), der zweiten relativen Speicheradresse (RGB1) des zweiten Datenunterelements (GB1) und des ersten Speicherplatzes (SPGB) des zweiten Datenelements (GB) im zweiten Speicherbereich (SPB) im ersten Adressenermittlungsschritt (209).

9. Verfahren (200) nach einem der voranstehenden Ansprüche, ferner umfassend:
Überprüfen, ob das erste Zeigerobjekt (ZO1) vom ersten Datenelement (GA) umfasst ist in einem Objektüberprüfungsschritt (239),
falls das erste Zeigerobjekt (ZO1) nicht vom ersten Datenelement (GA) umfasst ist, Identifizieren des zweiten Zeigerobjekts (Z02) als das erste Zeigerobjekt (ZO1) in einem dritten Objektidentifikationsschritt (241), und
Schreiben des Werts des ersten Zeigerelements (Z1) in das zweite Zeigerelement (Z2) in einem zweiten Zeigerspeicherschritt (243).

10. Verfahren (200) nach einem der voranstehenden Ansprüche, wobei der Zeigermigrationsschritt (203) umfasst:
Identifizieren eines dritten Zeigerelements (Z3) in einem zweiten Zeigeridentifikationsschritt (245), wobei das dritte Zeigerelement (Z3) weder vom ersten Datenelement (GA) noch vom zweiten Datenelement (GB) umfasst ist, und wobei das dritte Zeigerelement (Z3) ein drittes Zeigerobjekt (ZO3), das vom ersten Datenelement (GA) umfasst ist, referenziert, wobei das dritte Zeigerobjekt (ZO3) ein erstes Datenunterelement (GA1), eine erste Komponente (AM) oder ein erstes Element (AE) ist, und wobei das dritte Zeigerobjekt (ZO3) mit einem zweiten Datenunterelement (GB1), einer zweiten Komponente (BM) oder einem zweiten Element (BE) über eine zweite Relation (R2), eine dritte Relation (R3) oder eine vierte Relation (R4) assoziiert ist,
Ermitteln einer absoluten Speicheradresse des mit dem dritten Zeigerobjekt (ZO3) assoziierten zweiten Datenunterelements (GB1), der mit dem dritten Zeigerobjekt (ZO3) assoziierten zweiten Komponente (BM) oder des mit dem dritten Zeigerobjekt (ZO3) assoziierten zweiten Elements (BE) im zweiten Speicherbereich (SPB) in einem zweiten Adressenermittlungsschritt (247), und
Schreiben der absoluten Speicheradresse des mit dem dritten Zeigerobjekt (ZO3) assoziierten zweiten Datenunterelements (GB1), der mit dem dritten Zeigerobjekt (ZO3) assoziierten zweiten Komponente (BM) oder dem mit dem dritten Zeigerobjekt (ZO3) assoziierten zweiten Elements (BE) als Wert des dritten Zeigerelements (Z3) in einem dritten Zeigerspeicherschritt (249).

11. Verfahren (200) nach einem der voranstehenden Ansprüche, ferner umfassend: Generieren einer ersten Zeigermigrationsfunktion (ZMIG1) zum Abbilden des ersten Zeigerelements (Z1) auf das zweite Zeigerelement (Z2) in einem Funktionsgenerierungsschritt (251), wobei die erste Zeigermigrationsfunktion (ZMIG1) eingerichtet ist, ein Zeigerelement vom ersten Zeigertyp auf ein Zeigerelement des zweiten Zeigertyps abzubilden und den Zeigermigrationsschritt (203) auszuführen.

12. Verfahren nach Anspruch 11, wobei der Funktionsgenerierungsschritt (251) umfasst:
Identifizieren des ersten Zeigertyps des ersten Zeigerelements (Z1) und des zweiten Zeigertyps des zweiten Zeigerelements (Z2) in einem Typidentifikationsschritt (253).

13. Verfahren (200) nach Anspruch 11 oder 12, ferner umfassend:
Überprüfen, ob im Funktionsgenerierungsschritt (251) die erste Zeigermigrationsfunktion (ZMIG1) generiert werden konnte, in einem ersten Überprüfungsschritt (255), und
falls im Funktionsgenerierungsschritt (251) die erste Zeigermigrationsfunktion (ZMIG1) nicht generiert werden konnte, Setzen des zweiten Zeigerelements (Z2) auf einen Initialwert in einem Initialisierungsschritt (257), und/oder
falls im Funktionsgenerierungsschritt (251) die erste Zeigermigrationsfunktion (ZMIG1) nicht generiert werden konnte, Abbrechen der Migration in einem Terminierungsschritt (259).

14. Verfahren nach einem der voranstehenden Ansprüche, wobei die Steuerung (101) ferner ein Compilermodul (109) zum Übersetzen eines Steuerprogramms umfasst, und wobei der Funktionsgenerierungsschritt (251) durch das Compilermodul (109) ausgeführt wird.

15. Verfahren nach einem der voranstehenden Ansprüche, ferner umfassend:
Abbilden des ersten Datenelements (GA) auf das zweite Datenelement (GB) und/oder Abbilden des ersten Datenunterelements (GA1) auf das zweite Datenunterelement (GB1) und/oder Abbilden der ersten Komponenten (AM) auf die zweiten Komponenten (BM) und/oder Abbilden der ersten Elemente (AE) auf die zweiten Elemente (BE) in einem Migrationsschritt (261); und
Ausführen des zweiten Steuerprogramms (B) und Steuern des Automatisierungssystems (100) auf Basis des zweiten Steuerprogramms (B) unter Berücksichtigung des zweiten Datenelements (GB).

## Claims

1. Method (200) for data migration for a pointer element in the course of a data migration for a program state of a control program of an automation system (100), wherein a controller (101) of the automation system (100) comprises a first control program (A) and a second control program (B), wherein the first control program (A) comprises a first data element (GA) that describes a program state of the first control program (A) and comprises at least one first pointer element (Z1) of a first pointer type that references a first pointer object (ZO1), wherein the second control program (B) comprises a second data element (GB) that describes a program state of the second control program (B) and comprises at least one second pointer element (Z2) of a second pointer type that is configured to reference a second pointer object (ZO2), and wherein the first data element (GA) is stored in a first memory area (SPA) and the second data element (GB) is stored in a second memory area (SPB) of the controller (101), the method (100) comprising:
identifying the first pointer element (Z1) and the second pointer element (Z2) as pointer elements that are associated with one another by way of a first relationship (R1) in a first pointer identification step (201), wherein the first relationship (R1) implies that the first pointer element (Z1) and the second pointer element (Z2) each comprise identical functions in the first control program (A) and in the second control program (B),
mapping the first pointer element (Z1) to the second pointer element (Z2) in a pointer migration step (203), the pointer migration step (203) comprising:
identifying the first pointer object (ZO1) referenced by the first pointer element (Z1) in a first object identification step (205),
identifying an object associated with the first pointer object (ZO1) as the second pointer object (ZO2) in a second object identification step (207),
determining a memory address of the second pointer object (ZO2) in a first address determination step (209), and
writing the determined memory address of the second pointer object (ZO2) to the second pointer element (Z2) as the value of the second pointer element (Z2) in a first pointer storage step (211).

2. Method (200) according to Claim 1, wherein the first data element (GA) comprises at least one first data subelement (GA1), wherein the second data element (GB) comprises at least one second data subelement (GB1) that is associated with the first data subelement (GA1) by way of a second relationship (R2), wherein the first data subelement (GA1) corresponds to the first pointer object (ZO1) and is referenced by the first pointer element (Z1), wherein the second data subelement (GB1) corresponds to the second pointer object (ZO2), and wherein the pointer migration step (203) comprises:
determining a first relative memory address (RGA1) of the first data subelement (GA1) in a first pointer address determination step (213), wherein the first relative memory address (RGA1) describes a memory address of the first data subelement (GA1) within a memory area of the first data element (GA) relative to a first memory location (SPGA) of the first data element (GA),
determining a second relative memory address (RGB1) of the second data subelement (GB1) in a second pointer address determination step (215), wherein the second relative memory address (RGB1) describes a memory address of the second data subelement (GB1) within a memory area of the second data element (GB) relative to a first memory location (SPGB) of the second data element (GB), and
determining an absolute memory address of the second data subelement (GB1) on the basis of the second relative memory address (RGB1) of the second data subelement (GB1) and the first memory location (SPGB) of the second data element (GB) in the first address determination step (209).

3. Method (200) according to Claim 2, wherein the pointer migration step (203) comprises:
determining a first relative pointer address (PAR) of the first pointer element (Z1) in a third pointer address determination step (217), wherein the first relative pointer address (PAR) of the first pointer element (Z1) describes a memory location referenced by the first pointer element (Z1) within the memory area of the first data element (GA) relative to the first relative memory address (RGA1) of the first data subelement (GA1),
taking the first relative pointer address (PAR) as a basis for determining a second relative pointer address (PBR) of the second pointer element (Z2) in a fourth pointer address determination step (219), wherein the second relative pointer address (PBR) of the second pointer element (Z2) specifies a memory location within the memory area of the second data element (GB) relative to the second relative memory address (RGB1) of the second data subelement (GB1), and wherein the second relative pointer address (PBR) in relation to the second data subelement (GB1) corresponds to the first relative pointer address (PAR) in relation to the first data subelement (GA1), and
determining an absolute memory address of the second data subelement (GB1) on the basis of the second relative pointer address (PBR), the second relative memory address (RGB1) of the second data subelement (GB1) and the first memory location (SPGB) of the second data element (GB) in the second memory area (SPB) in the first address determination step (209).

4. Method according to Claim 3, wherein the pointer migration step (203) comprises:
if the first data subelement (GA1) and the second data subelement (GB1) are each of a composite type, if the first data subelement (GA1) comprises at least one first component (AM), if the second data subelement (GB1) comprises at least one second component (BM), if the first component (AM) and the second component (BM) are associated by way of a third relationship (R3), and if the first pointer element (Z1) references the first component (AM),
taking the first relative pointer address (PAR) as a basis for determining a first relative component address (PAM) of the first component (AM) in a first component address determination step (221), wherein the first relative component address (PAM) describes a memory address in the memory area of the first data element (GA) of the first component (AM) relative to the first relative memory address (RGA1) of the first data subelement (GA1),
taking the first relative component address (PAM) as a basis for determining a second relative component address (PBM) of the second component (BM) of the second data subelement (GB1) in a second component address determination step (223), wherein the second relative component address (PBM) describes a memory address in the memory area of the second data element (GB) of the second component (BM) relative to the second relative memory address (RGB1) of the second data subelement (GB1), and
determining an absolute memory address of the second component (BM) of the second data subelement (GB1) on the basis of the second relative component address (PBM), the second relative memory address (RGB1) of the second data subelement (GB1) and the first memory location (SPGB) of the second data element (GB) in the second memory area (SPB) in the first address determination step (209).

5. Method according to Claim 3, wherein the pointer migration step (203) comprises:
if the first data subelement (GA1) and the second data subelement (GB1) are each of a field type, the field types having the same number of dimensions, if the first data subelement (GA1) comprises a plurality of first elements (AE) and the second data subelement (GB1) comprises a plurality of second elements (BE), if at least one first element (AE) and a second element (BE) are associated by way of a fourth relationship (R4), and if the first pointer element (Z1) references the first element (AE),
determining a first relative element address (PAE) of the first element (AE) referenced by the first pointer element (Z1) in a first element address determination step (225), wherein the first relative element address (PAE) describes a memory address in the memory area of the first data element (GA) of the first element (AE) referenced by the first pointer element (Z1) relative to the first relative memory address (RGA1) of the first data subelement (GA1),
taking the first relative element address (PAE) as a basis for determining a second relative element address (PBE) of a second element (BE), which is associated with the first element (AE) referenced by the first pointer element (Z1) by way of the fourth relationship (R4), in a second element address determination step (227), wherein the second relative element address (PBE) describes a memory address of the second element (BE) in the second memory area (SPB) relative to the second relative memory address (RGB1) of the second data subelement (GB1), and
determining an absolute memory address of the second element (BE) of the second data subelement (GB1) on the basis of the second relative element address (PBE), the second relative memory address (RGB1) of the second data subelement (GB1) and the first memory location (SPGB) of the second data element (GB) in the second memory area (SPB) in the first address determination step (209).

6. Method according to Claim 5, wherein the first element address determination step (225) comprises:
determining a first element size (SAE) of the first elements (AE) of the first data subelement (GA1) in an element size determination step (229), wherein the first element size (SAE) of a first element (AE) corresponds to a memory location occupied by the first element (AE) in the memory area of the first data element (GA),
determining the first element (AE) referenced by the first pointer element (Z1) on the basis of the first relative pointer address (PAR) and the first element size (SAE).

7. Method according to Claim 4, wherein the pointer migration step (203) comprises:
taking the first relative pointer address (PAR) and the first relative component address (PAM) as a basis for determining a first relative pointer partial address (PAMX) in a fifth pointer address determination step (231), wherein the first relative pointer partial address (PAMX) describes the memory location in the first memory area (SPA) that is referenced by the first pointer element (Z1) relative to the first relative component address (PAM) of the first component (AM) of the first data subelement (GA1),
taking the first relative pointer partial address (PAMX), the second relative pointer address (PBR) and the second relative component address (PBM) as a basis for determining a second relative pointer partial address (PBMX) in a sixth pointer address determination step (233), wherein the second relative pointer partial address (PBMX) specifies a memory location in the memory area of the second data element (GB) relative to the second relative component address (PBM), and wherein the second relative pointer partial address (PBMX) in relation to the second data subelement (GB1) corresponds to the first relative pointer partial address (PAMX) in relation to the first data subelement (GA1), and
determining an absolute memory address of the second component (BM) of the second data subelement (GB1) on the basis of the second relative pointer partial address (PBMX), the second relative component address (PBM), the second relative memory address (RGB1) of the second data subelement (GB1) and the first memory location (SPGB) of the second data element (GB) in the memory area of the second data element (GB) in the first address determination step (209).

8. Method according to Claim 5 or 6, wherein the pointer migration step (203) comprises:
taking the first relative pointer address (PAR) and the first relative element address (PAE) as a basis for determining a third relative pointer partial address (PAEX) in a seventh pointer address determination step (235), wherein the third relative pointer partial address (PAEX) describes the memory location referenced by the first pointer element (Z1) relative to the first relative element address (PAE) of the first element (AE) of the first data subelement (GA1),
taking the third relative pointer partial address (PAEX) and the second relative element address (PBE) as a basis for determining a fourth relative pointer partial address (PBEX) in an eighth pointer address determination step (237), wherein the fourth relative pointer partial address (PBEX) specifies a memory location in the memory area of the second data element (GB) relative to the second relative element address (PBE), and wherein the fourth relative pointer partial address (PBEX) in relation to the second data subelement (GB1) corresponds to the third relative pointer partial address (PAEX) in relation to the first data subelement (GA1), and
determining an absolute memory address of the second element (BE) of the second data subelement (GB1) on the basis of the fourth relative pointer partial address (PBEX), the second relative element address (PBE), the second relative pointer address (PBR), the second relative memory address (RGB1) of the second data subelement (GB1) and the first memory location (SPGB) of the second data element (GB) in the second memory area (SPB) in the first address determination step (209) .

9. Method (200) according to one of the preceding claims, further comprising:
checking whether the first pointer object (ZO1) is comprised by the first data element (GA) in an object checking step (239),
if the first pointer object (ZO1) is not comprised by the first data element (GA), identifying the second pointer object (ZO2) as the first pointer object (ZO1) in a third object identification step (241), and
writing the value of the first pointer element (Z1) to the second pointer element (Z2) in a second pointer storage step (243).

10. Method (200) according to one of the preceding claims, wherein the pointer migration step (203) comprises:
identifying a third pointer element (Z3) in a second pointer identification step (245), wherein the third pointer element (Z3) is comprised neither by the first data element (GA) nor by the second data element (GB), and wherein the third pointer element (Z3) references a third pointer object (ZO3) comprised by the first data element (GA), wherein the third pointer object (ZO3) is a first data subelement (GA1), a first component (AM) or a first element (AE), and wherein the third pointer object (ZO3) is associated with a second data subelement (GB1), a second component (BM) or a second element (BE) by way of a second relationship (R2), a third relationship (R3) or a fourth relationship (R4),
determining an absolute memory address of the second data subelement (GB1) associated with the third pointer object (ZO3), the second component (BM) associated with the third pointer object (ZO3) or the second element (BE) associated with the third pointer object (ZO3) in the second memory area (SPB) in a second address determination step (247), and
writing the absolute memory address of the second data subelement (GB1) associated with the third pointer object (ZO3), the second component (BM) associated with the third pointer object (ZO3) or the second element (BE) associated with the third pointer object (ZO3) as the value of the third pointer element (Z3) in a third pointer storage step (249).

11. Method (200) according to one of the preceding claims, further comprising:
generating a first pointer migration function (ZMIG1) for mapping the first pointer element (Z1) to the second pointer element (Z2) in a function generation step (251), wherein the first pointer migration function (ZMIG1) is configured to map a pointer element of the first pointer type to a pointer element of the second pointer type and to carry out the pointer migration step (203).

12. Method according to Claim 11, wherein the function generation step (251) comprises:
identifying the first pointer type of the first pointer element (Z1) and the second pointer type of the second pointer element (Z2) in a type identification step (253) .

13. Method (200) according to Claim 11 or 12, further comprising:
checking whether the first pointer migration function (ZMIG1) was able to be generated in the function generation step (251), in a first checking step (255), and,
if the first pointer migration function (ZMIG1) was not able to be generated in the function generation step (251), setting the second pointer element (Z2) to an initial value in an initialization step (257), and/or,
if the first pointer migration function (ZMIG1) was not able to be generated in the function generation step (251), aborting the migration in a termination step (259) .

14. Method according to one of the preceding claims, wherein the controller (101) further comprises a compiler module (109) for translating a control program, and wherein the function generation step (251) is carried out by the compiler module (109).

15. Method according to one of the preceding claims, further comprising:
mapping the first data element (GA) to the second data element (GB) and/or mapping the first data subelement (GA1) to the second data subelement (GB1) and/or mapping the first components (AM) to the second components (BM) and/or mapping the first elements (AE) to the second elements (BE) in a migration step (261); and
executing the second control program (B) and controlling the automation system (100) on the basis of the second control program (B) in light of the second data element (GB).

## Revendications

1. Procédé (200) de migration de données d'un élément de pointeur au cours d'une migration de données d'un état de programme d'un programme de commande d'un système d'automatisation (100), dans lequel un dispositif de commande (101) du système d'automatisation (100) comprend un premier programme de commande (A) et un deuxième programme de commande (B), dans lequel le premier programme de commande (A) comprend un premier élément de données (GA) qui décrit un état de programme du premier programme de commande (A) et comprend au moins un premier élément de pointeur (Z1) d'un premier type de pointeur qui référence un premier objet pointeur (ZO1), dans lequel le deuxième programme de commande (B) comprend un deuxième élément de données (GB) qui décrit un état de programme du deuxième programme de commande (B) et au moins un deuxième élément de pointeur (Z2) d'un deuxième type de pointeur qui est conçu pour référencer un deuxième objet pointeur (ZO2), et dans lequel le premier élément de données (GA) est stocké dans une première zone de mémoire (SPA) et le deuxième élément de données (GB) est stocké dans une deuxième zone de mémoire (SPB) du dispositif de commande (101),
le procédé (100) comprenant les étapes consistant à :
identifier le premier élément de pointeur (Z1) et le deuxième élément de pointeur (Z2) comme des éléments de pointeur associés l'un à l'autre par l'intermédiaire d'une première relation (R1) dans une première étape d'identification de pointeur (201), la première relation (R1) impliquant que le premier élément de pointeur (Z1) et le deuxième élément de pointeur (Z2) dans le premier programme de commande (A) et dans le deuxième programme de commande (B) présentent des fonctions respectivement identiques,
mapper le premier élément de pointeur (Z1) sur le deuxième élément de pointeur (Z2) dans une étape de migration de pointeur (203), l'étape de migration de pointeur (203) comprenant :
identifier le premier objet pointeur (ZO1) référencé par le premier élément de pointeur (Z1) dans une première étape d'identification d'objet (205),
identifier un objet associé au premier objet pointeur (ZO1) comme le deuxième objet pointeur (ZO2) dans une deuxième étape d'identification d'objet (207),
établir une adresse de mémoire du deuxième objet pointeur (ZO2) dans une première étape d'établissement d'adresse (209), et
écrire l'adresse de mémoire établie du deuxième objet pointeur (ZO2) comme une valeur du deuxième élément de pointeur (Z2) dans le deuxième élément de pointeur (Z2) dans une première étape de stockage de pointeur (211) .

2. Procédé (200) selon la revendication 1, dans lequel le premier élément de données (GA) comprend au moins un premier sous-élément de données (GA1), dans lequel le deuxième élément de données (GB) comprend au moins un deuxième sous-élément de données (GB1) qui est associé au premier sous-élément de données (GA1) par l'intermédiaire d'une deuxième relation (R2), dans lequel le premier sous-élément de données (GA1) correspond au premier objet pointeur (ZO1) et est référencé par le premier élément de pointeur (Z1), dans lequel le deuxième sous-élément de données (GB1) correspond au deuxième objet pointeur (ZO2), et dans lequel l'étape de migration de pointeur (203) comprend :
établir une première adresse de mémoire relative (RGA1) du premier sous-élément de données (GA1) dans une première étape d'établissement d'adresse de pointeur (213), dans lequel la première adresse de mémoire relative (RGA1) décrit une adresse de mémoire du premier sous-élément de données (GA1) à l'intérieur d'une zone de mémoire du premier élément de données (GA) par rapport à un premier emplacement de mémoire (SPGA) du premier élément de données (GA),
établir une deuxième adresse de mémoire relative (RGB1) du deuxième sous-élément de données (GB1) dans une deuxième étape d'établissement d'adresse de pointeur (215), dans lequel la deuxième adresse de mémoire relative (RGB1) décrit une adresse de mémoire du deuxième sous-élément de données (GB1) à l'intérieur d'une zone de mémoire du deuxième élément de données (GB) par rapport à un premier emplacement de mémoire (SPGB) du deuxième élément de données (GB), et
établir une adresse de mémoire absolue du deuxième sous-élément de données (GB1) sur la base de la deuxième adresse de mémoire relative (RGB1) du deuxième sous-élément de données (GB1) et du premier emplacement de mémoire (SPGB) du deuxième élément de données (GB) dans la première étape d'établissement d'adresse (209).

3. Procédé (200) selon la revendication 2, dans lequel l'étape de migration de pointeur (203) comprend :
établir une première adresse de pointeur relative (PAR) du premier élément de pointeur (Z1) dans une troisième étape d'établissement d'adresse de pointeur (217), dans lequel la première adresse de pointeur relative (PAR) du premier élément de pointeur (Z1) décrit un emplacement de mémoire référencé par le premier élément de pointeur (Z1) à l'intérieur de la zone de mémoire du premier élément de données (GA) par rapport à la première adresse de mémoire relative (RGA1) du premier sous-élément de données (GA1),
établir sur la base de la première adresse de pointeur relative (PAR) une deuxième adresse de pointeur relative (PBR) du deuxième élément de pointeur (Z2) dans une quatrième étape d'établissement d'adresse de pointeur (219), dans lequel la deuxième adresse de pointeur relative (PBR) du deuxième élément de pointeur (Z2) détermine un emplacement de mémoire à l'intérieur de la zone de mémoire du deuxième élément de données (GB) par rapport à la deuxième adresse de mémoire relative (RGB1) du deuxième sous-élément de données (GB1), et dans lequel la deuxième adresse de pointeur relative (PBR) par rapport au deuxième sous-élément de données (GB1) correspond à la première adresse de pointeur relative (PAR) par rapport au premier sous-élément de données (GA1), et
établir une adresse de mémoire absolue du deuxième sous-élément de données (GB1) sur la base de la deuxième adresse de pointeur relative (PBR), de la deuxième adresse de mémoire relative (RGB1) du deuxième sous-élément de données (GB1) et du premier emplacement de mémoire (SPGB) du deuxième élément de données (GB) dans la deuxième zone de mémoire (SPB) dans la première étape d'établissement d'adresse (209).

4. Procédé selon la revendication 3, dans lequel l'étape de migration de pointeur (203) comprend :
si le premier sous-élément de données (GA1) et le deuxième sous-élément de données (GB1) présentent respectivement un même type de liaison, si le premier sous-élément de données (GA1) présente au moins une première composante (AM), si le deuxième sous-élément de données (GB1) présente au moins une deuxième composante (BM), si la première composante (AM) et la deuxième composante (BM) sont associées par l'intermédiaire d'une troisième relation (R3), et si le premier élément de pointeur (Z1) référence la première composante (AM),
établir, sur la base de la première adresse de pointeur relative (PAR), une première adresse de composante relative (PAM) de la première composante (AM) dans une première étape d'établissement d'adresse de composante (221), dans lequel la première adresse de composante relative (PAM) décrit une adresse de mémoire dans la zone de mémoire du premier élément de données (GA) de la première composante (AM) par rapport à la première adresse de mémoire relative (RGA1) du premier sous-élément de données (GA1),
établir, sur la base de la première adresse de composante relative (PAM), une deuxième adresse de composante relative (PBM) de la deuxième composante (BM) du deuxième sous-élément de données (GB1) dans une deuxième étape d'établissement d'adresse de composante (223), dans lequel la deuxième adresse de composante relative (PBM) décrit une adresse de mémoire dans la zone de mémoire du deuxième élément de données (GB) de la deuxième composante (BM) par rapport à la deuxième adresse de mémoire relative (RGB1) du deuxième sous-élément de données (GB1), et
établir une adresse de mémoire absolue de la deuxième composante (BM) du deuxième sous-élément de données (GB1) sur la base de la deuxième adresse de composante relative (PBM), de la deuxième adresse de mémoire relative (RGB1) du deuxième sous-élément de données (GB1) et du premier emplacement de mémoire (SPGB) du deuxième élément de données (GB) dans la deuxième zone de mémoire (SPB) dans la première étape d'établissement d'adresse (209).

5. Procédé selon la revendication 3, dans lequel l'étape de migration de pointeur (203) comprend :
si le premier sous-élément de données (GA1) et le deuxième sous-élément de données (GB1) présentent respectivement un même type de champ, les types de champ présentant le même nombre de dimensions, si le premier sous-élément de données (GA1) comprend une pluralité de premiers éléments (AE) et le deuxième sous-élément de données (GB1) comprend une pluralité de deuxièmes éléments (BE), si au moins un premier élément (AE) et un deuxième élément (BE) sont associés par l'intermédiaire d'une quatrième relation (R4), et si le premier élément de pointeur (Z1) référence le premier élément (AE),
établir une première adresse d'élément relative (PAE) du premier élément (AE) référencé par le premier élément de pointeur (Z1) dans une première étape d'établissement d'adresse d'élément (225), dans lequel la première adresse d'élément relative (PAE) décrit une adresse de mémoire dans la zone de mémoire du premier élément de données (GA) du premier élément (AE) référencé par le premier élément de pointeur (Z1) par rapport à la première adresse de mémoire relative (RGA1) du premier sous-élément de données (GA1),
établir sur la base de la première adresse d'élément relative (PAE) une deuxième adresse d'élément relative (PBE) d'un deuxième élément (BE) qui est associé au premier élément (AE) référencé par le premier élément de pointeur (Z1) par l'intermédiaire de la quatrième relation (R4), dans une deuxième étape d'établissement d'adresse d'élément (227), dans lequel la deuxième adresse d'élément relative (PBE) décrit une adresse de mémoire du deuxième élément (BE) dans la deuxième zone de mémoire (SPB) par rapport à la deuxième adresse de mémoire relative (RGB1) du deuxième sous-élément de données (GB1), et
établir une adresse de mémoire absolue du deuxième élément (BE) du deuxième sous-élément de données (GB1) sur la base de la deuxième adresse d'élément relative (PBE), de la deuxième adresse de mémoire relative (RGB1) du deuxième sous-élément de données (GB1) et du premier emplacement de mémoire (SPGB) du deuxième élément de données (GB) dans la deuxième zone de mémoire (SPB) dans la première étape d'établissement d'adresse (209).

6. Procédé selon la revendication 5, dans lequel la première étape d'établissement d'adresse d'élément (225) comprend :
établir une première grandeur d'élément (SAE) des premiers éléments (AE) du premier sous-élément de données (GA1) dans une étape d'établissement de grandeur d'élément (229), dans lequel la première grandeur d'élément (SAE) d'un premier élément (AE) correspond à un emplacement de mémoire occupé par le premier élément (AE) dans la zone de mémoire du premier élément de données (GA),
établir le premier élément (AE) référencé par le premier élément de pointeur (Z1) sur la base de la première adresse de pointeur relative (PAR) et de la première grandeur d'élément (SAE).

7. Procédé selon la revendication 4, dans lequel l'étape de migration de pointeur (203) comprend :
établir, sur la base de la première adresse de pointeur relative (PAR) et de la première adresse de composante relative (PAM), une première adresse de pointeur partielle relative (PAMX) dans une cinquième étape d'établissement d'adresse de pointeur (231), dans lequel la première adresse de pointeur partielle relative (PAMX) décrit l'emplacement de mémoire dans la première zone de mémoire (SPA) qui est référencé par le premier élément de pointeur (Z1) par rapport à la première adresse de composante relative (PAM) de la première composante (AM) du premier sous-élément de données (GA1),
établir, sur la base de la première adresse de pointeur partielle relative (PAMX), de la deuxième adresse de pointeur relative (PBR) et de la deuxième adresse de composante relative (PBM), une deuxième adresse de pointeur partielle relative (PBMX) dans une sixième étape d'établissement d'adresse de pointeur (233), dans lequel la deuxième adresse de pointeur partielle relative (PBMX) détermine un emplacement de mémoire dans la zone de mémoire du deuxième élément de données (GB) par rapport à la deuxième adresse de composante relative (PBM), et dans lequel la deuxième adresse de pointeur partielle relative (PBMX) par rapport au deuxième sous-élément de données (GB1) correspond à la première adresse de pointeur partielle relative (PAMX) par rapport au premier sous-élément de données (GA1), et
établir une adresse de mémoire absolue de la deuxième composante (BM) du deuxième sous-élément de données (GB1) sur la base de la deuxième adresse de pointeur partielle relative (PBMX), de la deuxième adresse de composante relative (PBM), de la deuxième adresse de mémoire relative (RGB1) du deuxième sous-élément de données (GB1) et du premier emplacement de mémoire (SPGB) du deuxième élément de données (GB) dans la zone de mémoire du deuxième élément de données (GB) dans la première étape d'établissement d'adresse (209).

8. Procédé selon la revendication 5 ou 6, dans lequel l'étape de migration de pointeur (203) comprend :
établir, sur la base de la première adresse de pointeur relative (PAR) et de la première adresse d'élément relative (PAE), une troisième adresse de pointeur partielle relative (PAEX) dans une septième étape d'établissement d'adresse de pointeur (235), dans lequel la troisième adresse de pointeur partielle relative (PAEX) décrit l'emplacement de mémoire qui est référencé par le premier élément de pointeur (Z1) par rapport à la première adresse d'élément relative (PAE) du premier élément (AE) du premier sous-élément de données (GA1),
établir, sur la base de la troisième adresse de pointeur partielle relative (PAEX) et de la deuxième adresse d'élément relative (PBE), une quatrième adresse de pointeur partielle relative (PBEX) dans une huitième étape d'établissement d'adresse de pointeur (237), dans lequel la quatrième adresse de pointeur partielle relative (PBEX) détermine un emplacement de mémoire dans la zone de mémoire du deuxième élément de données (GB) par rapport à la deuxième adresse d'élément relative (PBE), et dans lequel la quatrième adresse de pointeur partielle relative (PBEX) par rapport au deuxième sous-élément de données (GB1) correspond à la troisième adresse de pointeur partielle relative (PAEX) par rapport au premier sous-élément de données (GA1), et
établir une adresse de mémoire absolue du deuxième élément (BE) du deuxième sous-élément de données (GB1) sur la base de la quatrième adresse de pointeur partielle relative (PBEX), de la deuxième adresse d'élément relative (PBE), de la deuxième adresse de pointeur relative (PBR), de la deuxième adresse de mémoire relative (RGB1) du deuxième sous-élément de données (GB1) et du premier emplacement de mémoire (SPGB) du deuxième élément de données (GB) dans la deuxième zone de mémoire (SPB) dans la première étape d'établissement d'adresse (209) .

9. Procédé (200) selon l'une quelconque des revendications précédentes, comprenant en outre :
vérifier si le premier objet pointeur (ZO1) est compris dans le premier élément de données (GA) dans une étape de vérification d'objet (239),
si le premier objet pointeur (ZO1) n'est pas compris dans le premier élément de données (GA), identifier le deuxième objet pointeur (ZO2) comme le premier objet pointeur (ZO1) dans une troisième étape d'identification d'objet (241), et
écrire la valeur du premier élément de pointeur (Z1) dans le deuxième élément de pointeur (Z2) dans une deuxième étape de stockage de pointeur (243).

10. Procédé (200) selon l'une quelconque des revendications précédentes, dans lequel l'étape de migration de pointeur (203) comprend :
identifier un troisième élément de pointeur (Z3) dans une deuxième étape d'identification de pointeur (245), dans lequel le troisième élément de pointeur (Z3) n'est compris ni dans le premier élément de données (GA) ni dans le deuxième élément de données (GB), et dans lequel le troisième élément de pointeur (Z3) référence un troisième objet pointeur (ZO3) qui est compris dans le premier élément de données (GA), dans lequel le troisième objet pointeur (ZO3) est un premier sous-élément de données (GA1), une première composante (AM) ou un premier élément (AE), et dans lequel le troisième objet pointeur (ZO3) est associé à un deuxième sous-élément de données (GB1), à une deuxième composante (BM) ou à un deuxième élément (BE) par l'intermédiaire d'une deuxième relation (R2), d'une troisième relation (R3) ou d'une quatrième relation (R4),
établir une adresse de mémoire absolue du deuxième sous-élément de données (GB1) associé au troisième objet pointeur (ZO3), de la deuxième composante (BM) associée au troisième objet pointeur (ZO3) ou du deuxième élément (BE) associé au troisième objet pointeur (ZO3) dans la deuxième zone de mémoire (SPB) dans une deuxième étape d'établissement d'adresse (247), et
écrire l'adresse de mémoire absolue du deuxième sous-élément de données (GB1) associé au troisième objet pointeur (ZO3), de la deuxième composante (BM) associée au troisième objet pointeur (ZO3) ou du deuxième élément (BE) associé au troisième objet pointeur (ZO3) comme la valeur du troisième élément de pointeur (Z3) dans une troisième étape de stockage de pointeur (249).

11. Procédé (200) selon l'une quelconque des revendications précédentes, comprenant en outre :
générer une première fonction de migration de pointeur (ZMIG1) pour mapper le premier élément de pointeur (Z1) sur le deuxième élément de pointeur (Z2) dans une étape de génération de fonction (251), dans lequel la première fonction de migration de pointeur (ZMIG1) est conçue pour mapper un élément de pointeur du premier type de pointeur sur un élément de pointeur du deuxième type de pointeur et pour exécuter l'étape de migration de pointeur (203).

12. Procédé selon la revendication 11, dans lequel l'étape de génération de fonction (251) comprend :
identifier le premier type de pointeur du premier élément de pointeur (Z1) et le deuxième type de pointeur du deuxième élément de pointeur (Z2) dans une étape d'identification de type (253).

13. Procédé (200) selon la revendication 11 ou 12, comprenant en outre :
vérifier si à l'étape de génération de fonction (251), la première fonction de migration de pointeur (ZMIG1) a pu être générée, dans une première étape de vérification (255), et
si à l'étape de génération de fonction (251), la première fonction de migration de pointeur (ZMIG1) n'a pas pu être générée, mettre le deuxième élément de pointeur (Z2) à une valeur initiale dans une étape d'initialisation (257), et/ou
si à l'étape de génération de fonction (251), la première fonction de migration de pointeur (ZMIG1) n'a pas pu être générée, abandonner la migration dans une étape finale (259).

14. Procédé selon l'une quelconque des revendications précédentes, dans lequel le dispositif de commande (101) comprend en outre un module de compilateur (109) pour traduire un programme de commande, et dans lequel l'étape de génération de fonction (251) est effectuée par le module de compilateur (109).

15. Procédé selon l'une quelconque des revendications précédentes, comprenant en outre :
mapper le premier élément de données (GA) sur le deuxième élément de données (GB), et/ou mapper le premier sous-élément de données (GA1) sur le deuxième sous-élément de données (GB1), et/ou mapper la première composante (AM) sur la deuxième composante (BM), et/ou mapper les premiers éléments (AE) sur les deuxièmes éléments (BE) dans une étape de migration (261) ; et
exécuter le deuxième programme de commande (B) et commander le système d'automatisation (100) sur la base du deuxième programme de commande (B) en tenant compte du deuxième élément de données (GB).
